# EUROPEAN PATENT SPECIFICATION

(11) **EP 3 502 169 B1**
(45) Date of publication and mention of the grant of the patent: **25.08.2021**
(21) Application number: 17841339.9
(22) Date of filing: 24.07.2017
(51) Int. Cl.: C08J 5/00, C08J 5/18, D01F 4/02, D01F 8/02

(54) **COMPOSITE MOLDING COMPOSITION INCLUDING FIBROIN-LIKE PROTEIN, AND METHOD FOR PRODUCING COMPOSITE MOLDING COMPOSITION**
ZUSAMMENGESETZTE FORMMASSE MIT FIBROINÄHNLICHEM PROTEIN UND VERFAHREN ZUR HERSTELLUNG DER ZUSAMMENGESETZTEN FORMMASSE
COMPOSITION DE MOULAGE COMPOSITE COMPRENANT UNE PROTÉINE DE TYPE FIBROÏNE, ET PROCÉDÉ DE PRODUCTION DE LA COMPOSITION DE MOULAGE COMPOSITE

(30) Priority: 19.08.2016 WO PCT/JP2016/074289
(43) Date of publication of application: 26.06.2019
(73) Proprietor: RIKEN, Wako-shi, Saitama 351-0198 (JP); Spiber Inc., Yamagata 997-0052 (JP)
(72) Inventor: NUMATA, Keiji, Wako-shi Saitama 351-0198 (JP); TSUCHIYA, Kousuke, Wako-shi Saitama 351-0198 (JP); SUGAHARA, Junichi, Tsuruoka-shi Yamagata 997-0052 (JP); ISHII, Takaoki, Tsuruoka-shi Yamagata 997-0052 (JP); CHI, Hongfang, Tsuruoka-shi Yamagata 997-0052 (JP)
(74) Representative: Drexl, Janna
(86) International application number: PCT/JP2017/026734
(87) International publication number: WO 2018/034111

(56) References cited:
- WO-A1-2011/113592
- WO-A1-2012/165477
- WO-A1-2014/103799
- WO-A1-2017/047504
- JP-A- 2010 095 596
- JP-B1- S4 820 613
- JP-B1- S4 829 557
- JP-B2- H0 694 518
- DOBLHOFER ELENA ET AL: "To spin or not to spin: spider silk fibers and more", APPLIED MICROBIOLOGY AND BIOTECHNOLOGY, SPRINGER BERLIN HEIDELBERG, BERLIN/HEIDELBERG, vol. 99, no. 22, 11 September 2015 (2015-09-11), pages 9361-9380, XP036118679, ISSN: 0175-7598, DOI: 10.1007/S00253-015-6948-8 [retrieved on 2015-09-11]
- KOUSUKE TSUCHIYA ET AL: "Tensile Reinforcement of Silk Films by the Addition of Telechelic-Type Polyalanine", BIOMACROMOLECULES, vol. 18, no. 3, 24 January 2017 (2017-01-24), pages 1002-1009, XP055469880, US ISSN: 1525-7797, DOI: 10.1021/acs.biomac.6b01891
- KOUSUKE TSUCHIYA ET AL: "Spider dragline silk composite films doped with linear and telechelic polyalanine: Effect of polyalanine on the structure and mechanical properties", SCIENTIFIC REPORTS, vol. 8, no. 1, 26 February 2018 (2018-02-26), XP55673818, DOI: 10.1038/s41598-018-21970-1
- RAMMENSEE et al.: "Assembly mechanism of recombinant spider silk proteins", Proceedings of the National Academy of Sciences, vol. 105, no. 18, 6 May 2008 (2008-05-06), pages 6590-6595, XP055065076, DOI: doi:10.1073/pnas.0709246105
- TSUCHIYA et al.: "Tensile Reinforcement of Silk Films by the Addition of Telechelic-Type Polyalanine", Biomacromolecules, vol. 18, 24 January 2017 (2017-01-24), pages 1002-1009, XP055469880, DOI: doi:10.1021/acs.biomac.6b01891

## Description

### Technical Field

The present invention relates to a composite molding composition including a fibroin-like protein and a method for producing the same.

### Background Art

Natural spider silk composed of fibroin is excellent in properties against physical changes, such as tensile strength, toughness and extensibility, and it is a polypeptide fiber having, for example, toughness about 5 times that of iron of the same weight. Moreover, it has excellent heat resistance, as well as high biocompatibility and biodegradability because it is formed from polypeptide. However, unlike silkworms whose natural silks are industrially utilized, spiders are difficult to rear in a massive manner. For this reason, attempts have been made to produce artificial synthetic fibers imitating spider silk and then apply them to materials such as yarns or sheets having the above-mentioned properties against physical changes, biocompatibility and biodegradability (Patent documents 1 to 5). For the above properties, however, production of artificial fibers comparable to natural spider silks has not been successful so far.

In the structure of natural spider silk, polyalanine forming a β-sheet structure and a polar region rich in glycine are repeated to form a core portion, at both sides of which are arranged an amino terminal domain and a carboxyl terminal domain that are non-repetitive and highly conserved, thereby providing a random coil structure, a β sheet structure and a helix structure, and it is considered that the excellent characteristics of natural spider silk is attributed to the mixture of these structures, and thus the structural characteristics thereof have been studied (Non-Patent Documents 1 to 3). Also, when spinning in spider's body, unlike ordinary proteins, spider protein shows high solubility when stored at high concentration, and yet, it changes into an extremely strong fiber as needed (Non-Patent Document 2). However, the structural characteristics and production mechanism of spider silk have not necessarily been clarified yet.

The inventors of the present invention have clarified the process of producing dragline silk in the dragline silk gland of Nephila clavata, thus making it clear that the formation of a granular structure by the β sheet structure of a spider silk fibroin protein is important for allowing the spider silk to exhibit its physical properties (Patent Document 6).

### Prior Art Documents

### Patent Documents

Patent Document 1: International Publication WO2007/078239
Patent Document 2: International Publication WO2010/123450
Patent Document 3: International Publication WO2011/112046
Patent Document 4: International Publication WO2012/165476
Patent Document 5: International Publication WO2013/065650
Patent Document 6: International Publication WO2017/030197

### Non-Patent Documents

Non-Patent Document 1: by Numata K et al., Soft Matter Jun. 30, 2015, 11, 6335-6342
Non-Patent Document 2: by Hagn F et al., Nature. 2010; 465 (7295): 239-242
Non-patent document 3: by Teule F et al., Nature Protocols 2009; 4: 341-355

### Summary of the Invention

### Problems to be solved by the Invention

Based on the production mechanism of the dragline silk of natural spider in the spider body as well as the factors that bring out the excellent properties, such mechanism is applied to the production of artificial fibers, thereby providing a composite molding composition containing a fibroin-like protein having properties such as high strength and toughness; a method for producing the composition; and a composite molding composition such as composite fiber, composite film and composite resin produced by the production method; and a method for improving the physical properties of the composite molding composition.

### Means for Solving the Problems

The inventors of the present invention have found out that a composite molding composition produced by mixing a natural fibroin protein or an artificially produced fibroin-like protein with a polypeptide or polyamino acid having a β-sheet structure, and then molding the mixture, exhibits physical properties such as excellent tensile strength, strain and toughness as compared with a molded composition not including such polypeptide or polyamino acid having a β-sheet structure, and thus achieved the present invention.

Specifically, the present invention provides a composition including a fibroin-derived protein and a polypeptide and /or polyamino acid having a β-sheet structure.

Further, the composition may be a composite molding composition which is obtained by molding the fibroin-derived protein blended with the polypeptide and/or polyamino acid having the β-sheet structure.

The composite molding composition may be the one retaining the β-sheet structure derived from the polypeptide and/or polyamino acid.

The composite molding composition may be the one selected from a composite fiber, a composite film, a composite gel or a composite molded body.
Also, the present invention provides a composite molding composition formed of a fibroin-derived protein blended with a polypeptide and/or polyamino acid having a β-sheet structure,
wherein the composite molding composition is selected from a composite fiber, a composite film and a composite gel, and is produced by a method including:
(i) preparing a dope solution in which the fibroin-derived protein and the polypeptide and/or polyamino acid having the β-sheet structure are dissolved; and
(ii) molding the composite molding composition from the dope solution.

Moreover, the present invention provides a pre-drawn composite molding composition being selected from a composite fiber or a composite film, and produced by a method including the above-mentioned processes (i) and (ii) and
(iii) drawing the composite molding composition obtained in the process (ii) in a solvent and then drying the composite molding composition.

Furthermore, the present invention provides a composite molding composition being a composite molded body and produced by a method including:
(i) preparing a mixture by mixing a fibroin-derived protein and a polypeptide and/or polyamino acid having a β-sheet structure; and
(ii) heating the mixture while applying a pressure thereto.

In the composite molding composition according to the present invention, the fibroin-derived protein may be selected from:
(i) a natural fibroin-derived protein; and/or
(ii) a modified fibroin-derived protein.

In the composite molding composition according to the present invention, the natural fibroin-derived protein may be at least one selected from the group consisting of a silk fibroin-derived silk protein (silk fibroin protein), a spider thread fibroin-derived spider thread protein (spider thread fibroin protein) and a hornet silk fibroin-derived hornet silk protein.

In the composite molding composition according to present invention, the modified fibroin-derived protein may be a modified fibroin-derived protein having a domain sequence represented by the following formula (I):

[(A)ₙ motif -REP]ₘ (I),

wherein as compared to a naturally derived fibroin, at least one or a plurality of the glycine residues in REP are substituted with a different amino acid residue(s), and the domain sequence has an amino acid sequence with a reduced content of glycine residues,
[In the formula (I),
(A)ₙ motif represents an amino acid sequence consisting of 2 to 20 amino acid residues; and the number of alanine residues relative to a total number of the amino acid residues in the (A)ₙ motif is 40% or more;
REP represents an amino acid sequence consisting of 2 to 200 amino acid residues;
m represents an integer of 2 to 300;
the plurality of (A)ₙ motifs may be the same amino acid sequences or different amino acid sequences; and
the plurality of REPs may be the same amino acid sequences or different amino acid sequences.].

In the modified fibroin-derived protein of the composite molding composition according to the present invention, the domain sequence, as compared to a naturally derived fibroin, may have an amino acid sequence equivalent to an amino acid sequence in which in at least one motif sequence selected from GGX and GPGXX (where X represents an amino acid residue other than glycine) in REP, one glycine residue in said at least one motif sequence or a plurality of the motif sequences is substituted with a different amino acid residue(s); and a ratio of the motif sequences in which the glycine residue is substituted with a different amino acid residue(s) is 10% or more with respect to all the motif sequences.

In the modified fibroin-derived protein, a maximum value of x/y (%) is 20% or more in which x represents a sum total of the numbers of amino acid residues in two adjacent [(A)ₙ motif-REP] units, provided that, the number of amino acid residues in REPs of two adjacent [(A)ₙ motif-REP] units is sequentially compared from the N-terminal side to the C-terminal side, and that when the number of amino acid residues in an REP having a smaller number of amino acid residues is defined as 1, a ratio of the number of amino acid residues in the other REP thereto becomes 2 to 3.5; and y represents a total number of amino acid residues in the domain sequence.

In the composite molding composition, the modified fibroin-derived protein represented by the formula (I) may be a modified fibroin-derived protein having an amino acid sequence represented by SEQ ID NO: 1 to 19.

In the composite molding composition according the present invention, the fibroin-derived protein may be a fibroin-derived protein having a homology of 80% or more, preferably 85% or more, more preferably 90% or more, even more preferably 95% or more, with respect to the amino acid sequence of the fibroin-derived protein.

In the composite molding composition according to the present invention, the polyamino acid having the β-sheet structure may be a polyalanine.

In the composite molding composition according to the present invention, the polyalanine may be selected from a linear polyalanine (L-polyAla) or a telechelic polyalanine (T-polyAla).

Also, the present invention provides a method for producing a composite molding composition that is formed of a fibroin-derived protein blended with a polypeptide and/or polyamino acid having a β-sheet structure, and is selected from a composite fiber, a composite film and a composite gel, including:
(i) preparing a dope solution in which the fibroin-derived protein and the polypeptide and/or polyamino acid having the β-sheet structure are dissolved; and
(ii) producing the composite molding composition by performing spinning from the dope solution or further performing drawing.

Further, the present invention provides a method for producing a composite molded body formed of a fibroin-derived protein blended with a polypeptide and/or polyamino acid having a β-sheet structure, including:
(i) preparing a mixture by mixing a powder fibroin-derived protein with a powder polypeptide and/or powder polyamino acid having the β-sheet structure; and
(ii) heating the mixture while applying a pressure thereto.

Moreover, the present invention provides a method for producing a pre-drawn-composite molding composition, including:
(i) drawing, in a solvent, the composite molding composition produced by the above-mentioned method; and
(ii) drying the composite molding composition thus drawn.

In the method according to the present invention, the fibroin-derived protein may be selected from:
(i) a natural fibroin-derived protein; and/or
(ii) a modified fibroin-derived protein.

In the method according to the present invention, the natural fibroin-derived protein may be at least one selected from the group consisting of a silk fibroin-derived silk protein (silk fibroin protein), a spider thread fibroin-derived spider thread protein (spider thread fibroin protein) and a hornet silk fibroin-derived hornet silk protein.

In the production method according to the present invention, the modified fibroin-derived protein may be a modified fibroin-derived protein having a domain sequence represented by the following formula (I):
[Chemical formula 2]

[(A)ₙ motif -REP]ₘ (I),

wherein as compared to a naturally derived fibroin, at least one or a plurality of the glycine residues in REP are substituted with a different amino acid residue(s), and the domain sequence has an amino acid sequence with a reduced content of glycine residues,
[In the formula (I),
(A)ₙ motif represents an amino acid sequence consisting of 2 to 20 amino acid residues; and the number of alanine residues relative to a total number of the amino acid residues in the (A)ₙ motif is 40% or more;
REP represents an amino acid sequence consisting of 2 to 200 amino acid residues;
m represents an integer of 2 to 300;
the plurality of (A)ₙ motifs may be the same amino acid sequences or different amino acid sequences; and
the plurality of REPs may be the same amino acid sequences or different amino acid sequences.].

In the modified fibroin-derived protein of the production method according to the present invention, the domain sequence, as compared to a naturally derived fibroin, may have an amino acid sequence equivalent to an amino acid sequence in which in at least one motif sequence selected from GGX and GPGXX (where X represents an amino acid residue other than glycine) in REP, one glycine residue in at least one or a plurality of the motif sequences is substituted with a different amino acid residue(s); and a ratio of the motif sequences with the glycine residue substituted with a different amino acid residue(s) is 10% or more, 20% or more, more preferably 30% or more, most preferably 40% or more with respect to all the motif sequences.

In the modified fibroin-derived protein of the production method according to the present invention, a maximum value of x/y (%) may be 20% or more in which x represents a sum total of the numbers of amino acid residues in two adjacent [(A)ₙ motif-REP] units, provided that, the number of amino acid residues in REPs of two adjacent [(A)ₙ motif-REP] units is sequentially compared from the N-terminal side to the C-terminal side, and that when the number of amino acid residues in an REP having a smaller number of amino acid residues is defined as 1, a ratio of the number of amino acid residues in the other REP thereto becomes 2 to 3.5; and y represents a total number of amino acid residues in the domain sequence.

In the production method according to the present invention, the modified fibroin-derived protein represented by the formula (I) may be a modified fibroin-derived protein having an amino acid sequence represented by SEQ ID NO: 1 to 19.

The fibroin-derived protein may be a fibroin-derived protein having a homology of 80% or more, preferably 85% or more, more preferably 90% or more, even more preferably 95% or more, with respect to the amino acid sequence of the fibroin-derived protein.

In the production method according to the present invention, the polyamino acid having the β-sheet structure may be a polyalanine.

In the production method according to the present invention, the polyalanine may be selected from a linear polyalanine or a telechelic polyalanine.

Further, the present invention provides a method for improving physical properties of a composite molding composition by blending a fibroin-derived protein with a polypeptide and/or polyamino acid having a β-sheet structure.

Still further, the present invention provides a method for improving physical properties of the composite molding composition, the method further including: drawing the composite molding composition in a solvent and then drying the composite molding composition.

In the method for improving physical properties of the composite molding composition, the improvements in physical properties are an increase in tensile strength, an increase in strain and/or an increase in toughness.

### Effects of the Invention

It is possible to provide a composite molding composition such as a composite fiber, a composite film, and a composite gel including a fibroin-like polypeptide fiber having physical properties such as high toughness, strain (fracture elongation) and tensile strength (stress), and a method for producing the same.

### Brief Description of the Drawings

FIG. 1 is a schematic diagram showing a domain sequence of a modified fibroin.
FIG. 2 is a diagram showing a distribution of values of x/y (%) of naturally derived fibroin.
FIG. 3 is a diagram showing a distribution of values of z/w (%) of naturally derived fibroin.
FIG. 4 is a schematic diagram showing an outline of a spinning method from a dope for spinning a composite fiber according to a composite molding composition of the present invention.
FIG. 5 represents graphs showing the results of measurement of changes of tensile strength, tensile strain, and toughness of a pre-drawn composite film produced by preliminarily stretching or drawing a composite film at a 100% drawing ratio, the composite film being prepared by blending natural silk fibroin protein with L-polyAla or T-polyAla at varying ratios.
FIG.6 represents graphs showing the results of measurement of changes of tensile strength, tensile strain, and toughness of a pre-drawn composite film produced by preliminarily stretching or drawing a composite film in a methanol at varying drawing ratios, the composite film being prepared by blending a modified spider silk fibroin protein ADF 3 Kai-noNR with T-polyAla at a ratio of 5 wt%.
FIG.7 represents graphs showing the results of measurement of a wide-angle X ray scattering (WAXS) of a composite film produced by preliminarily stretching or drawing a composite film at a 100% drawing ratio, the composite film being prepared by blending a modified spider silk fibroin protein ADF 3 Kai-noNR with T-polyAla or T-polyAla at varying ratios.

### Description of Embodiments

### 1. Composite molding composition

### 1-1. Non-drawing composite molding composition

One embodiment of the present invention is a composition containing: a fibroin-derived protein; and a polypeptide and/or a polyamino acid each having a β-sheet structure. Particularly, the composition is a composite molding composition which is a non-drawing composite molding composition as a composition molded by blending the polypeptide and/or the polyamino acid each having the β-sheet structure with a fibroin-derived protein.

A later-described pre-drawn composite molding composition can be produced using this non-drawing composite molding composition.

As an example of the above composite molding composition, the composition may be that maintaining the β-sheet structure derived from the above polypeptide and/or polyamino acid, and selected from a composite fiber, a composite film, a composite gel or a composite molded body.

### (1) Fibroin-derived protein

Fibroin constitutes silk produced by, for example, insects and spiders, and is known as a collective term of a fibrous protein occupying 70% of such silk. In this specification, "fibroin" includes natural silks produced by insects and spiders; and artificial silks artificially produced by mimicking or targeting the compositions and properties of these natural silks. In this specification, "fibroin" includes spidroin proteins such as the following spidroin I and II; as well as, for example, fibroins derived from silk threads produced by silkworms, other than these fibroins that are derived from spider threads. In addition to natural fibroins, fibroin may also be obtained by a genetic recombination method where, for example, a nucleic acid sequence coding for a desired amino acid sequence is produced, and then incorporated into an expression vector to produce a recombination expression vector by a known method, followed by introducing it into an appropriate host(s) such as bacteria, yeasts, mammal cells, plants and insect cells to produce a transfectant(s), and then performing isolated purification on them before use (e.g. international publication WO 2012/165476). Further, since some of the fibroins are commercially available, they may be acquired and subjected to use.

There are no particular restrictions on the fibroin-derived protein of the present invention. It may be a natural fibroin; or a so-called natural fibroin-derived protein that is produced using a microorganism or the like, or produced by synthesis, with the aid of a genetic recombination technology.

Further, such fibroin-derived protein may be at least one selected from the group consisting of a silk fibroin-derived silk protein (silk fibroin protein), a spider thread fibroin-derived spider thread protein (spider thread fibroin protein) and a hornet silk fibroin-derived hornet silk protein. Among these proteins, a spider thread fibroin-derived spider thread protein is preferably used.

In this specification, "fibroin-derived protein" includes proteins constituting naturally derived fibroins such as those produced by insects and spiders that are described above; and other than these natural proteins, for example, proteins whose structures and properties are analogous to those of proteins that are artificially produced by a genetic recombination method.

Proteins with structures analogous to those of fibroins include a protein(s) whose amino acid sequence resembles that of a natural fibroin by not less than 80%, preferably not less than 85%, more preferably not less than 90% and most preferably not less than 95%; protein segments having partial sequences of these proteins; or fusion proteins of these proteins or protein segments and other proteins or peptides. Further, in this specification, "fibroin-derived protein" may be referred to as "fibroin-derived polypeptide" based on its structural property.

Further, a protein having properties analogous to those of a fibroin is a one such that at least one of the protein's tensile strength, toughness and stretchability as the properties of a natural fibroin is at least not less than 80%, preferably not less than 85%, more preferably not less than 95%, most preferably not less than 100% as excellent as that of a natural fibroin. Further, in this specification, when, for example, describing such structural and physical properties of a fibroin, there may be used terms such as "fibroin-like polypeptide" or "fibroin-like protein."

The following modified fibroin may be used as a fibroin. The modified fibroin is a protein containing a domain sequence represented by a formula (I): [(A)ₙ motif-REP]ₘ. As for the modified fibroin, amino acid sequences (N-terminal sequence and C-terminal sequence) may be further added to any one or both of the N-terminal side and the C-terminal side of the domain sequence. The N-terminal sequence and C-terminal sequence are typically, though not limited to, regions having no repetition of amino acid motifs unique to fibroin, and consisting of about 100 residues of amino acids. The protein containing the domain sequence represented by the formula (I): [(A)ₙ motif-REP]ₘ is described in detail in PCT/JP2017/016917 and PCT/JP2017/016925.

In this specification, "modified fibroin" refers to an artificially produced fibroin (artificial fibroin). A modified fibroin may be a fibroin whose domain sequence differs from the amino acid sequence of a naturally derived fibroin, or a fibroin whose domain sequence is identical to the amino acid sequence of a naturally derived fibroin. The "naturally derived fibroin" in this specification is also a protein containing the domain sequence represented by [(A)ₙ motif-REP]ₘ.

As long as the particular amino acid sequence identified in the present invention is contained, the "modified fibroin" may be that directly employing the amino acid sequence of a naturally derived fibroin; that with its amino acid sequence being modified based on the amino acid sequence of a naturally derived fibroin (e.g. that with its amino acid sequence being modified by modifying the gene sequence of a naturally derived fibroin cloned); or that artificially designed and synthesized without employing a naturally derived fibroin (e.g. that having a desired amino acid sequence as a result of chemically synthesizing a nucleic acid coding for a designed amino acid sequence).

In this specification, "domain sequence" refers to an amino acid sequence generating a crystalline region unique to fibroin (typically, a region corresponding to the (A)ₙ motif of the amino acid sequence) and a non-crystalline region (typically, a region corresponding to REP of the amino acid sequence), and being represented by the formula (I): [(A)ₙ motif-REP]ₘ. Here, the (A)ₙ motif represents an amino acid sequence mainly composed of alanine residues, in which n may be an integer of 2 to 20, preferably 4 to 20, more preferably 8 to 20, even more preferably 10 to 20, still even more preferably 4 to 16, further preferably 8 to 16, and especially preferably 10 to 16. Further, a ratio of the number of the alanine residues to the number of all the amino acid residues in the (A)ₙ motif is not lower than 40%, preferably not lower than 60%, more preferably not lower than 70%, even more preferably not lower than 80%, still even more preferably not lower than 90%, or even 100% (i.e. when only composed of alanine residues). REP represents an amino acid sequence composed of 2 to 200 amino acid residues. m represents an integer of 2 to 300. The multiple (A)ₙ motifs may be identical amino acid sequences or different amino acid sequences. The multiple REPs may be identical amino acid sequences or different amino acid sequences. Specific examples of a protein derived from a spigot guiding thread include proteins containing, for example, amino acid sequences set forth in SEQ ID NO: 1 to 3 as partial sequences of natural sequences; and amino acid sequences set forth in SEQ ID NO: 4 to 19 as modified natural sequences.

An amino acid sequence (Met-PRT313) set forth in SEQ ID NO: 6 is a sequence prepared by modifying the amino acid residues in the amino acid sequence of Nephila Clavipes (GenBank Accession No: P46804. 1, GI: 1174415) as a naturally derived fibroin in a way such that, for example, the number of the successive alanine residues in the [(A)ₙ motif] region where alanine residues exist in as successive manner is reduced to 5 by deletion. An amino acid sequence (PRT313) set forth in SEQ ID NO: 12 is an amino acid sequence with an amino acid sequence (tag sequence and hinge sequence) set forth in SEQ ID NO: 21 being added to the N-terminal of the amino acid sequence (Met-PRT313) set forth in SEQ ID NO: 6.

An amino acid sequence (Met-PRT399) set forth in SEQ ID NO: 7 is an amino acid sequence prepared by deleting (A)ₙ motif ((A)s) from the amino acid sequence set forth in SEQ ID NO: 6 in a way such that (A)ₙ motif ((A)s) is deleted every other two of them from the N-terminal side toward the C-terminal side, and then by inserting one [(A)ₙ motif-REP] into a region immediately before the C-terminal sequence. An amino acid sequence (PRT399) set forth in SEQ ID NO: 13 is an amino acid sequence with the amino acid sequence (tag sequence and hinge sequence) set forth in SEQ ID NO: 21 being added to the N-terminal of such amino acid sequence set forth in SEQ ID NO: 7.

An amino acid sequence (Met-PRT380) set forth in SEQ ID NO: 8 is an amino acid sequence prepared by substituting all the GGX in the REP of the amino acid sequence set forth in SEQ ID NO: 6 with GQX. An amino acid sequence (PRT380) set forth in SEQ ID NO: 14 is an amino acid sequence with the amino acid sequence (tag sequence and hinge sequence) set forth in SEQ ID NO: 21 being added to the N-terminal of such amino acid sequence set forth in SEQ ID NO: 8.

An amino acid sequence (Met-PRT410) set forth in SEQ ID NO: 9 is an amino acid sequence prepared by substituting all the GGX in the REP of the amino acid sequence set forth in SEQ ID NO: 7 with GQX. An amino acid sequence (PRT410) set forth in SEQ ID NO: 15 is an amino acid sequence with the amino acid sequence (tag sequence and hinge sequence) set forth in SEQ ID NO: 21 being added to the N-terminal of such amino acid sequence set forth in SEQ ID NO: 9.

An amino acid sequence (Met-PRT468) set forth in SEQ ID NO: 10 is an amino acid sequence prepared by inserting two A residues into a poly-A region of the amino acid sequence set forth in SEQ ID NO: 6, deleting two repeating sequences on the C-terminal side, and substituting Q with S or P at 13 locations, in a way such that the sequence will substantially have the same molecular weight as the amino acid sequence set forth in SEQ ID NO: 9. An amino acid sequence (PRT468) set forth in SEQ ID NO: 16 is an amino acid sequence with the amino acid sequence (tag sequence and hinge sequence) set forth in SEQ ID NO: 21 being added to the N-terminal of such amino acid sequence set forth in SEQ ID NO: 10.

An amino acid sequence (Met-PRT799) set forth in SEQ ID NO: 11 is an amino acid sequence prepared by adding the amino acid sequence (tag sequence and hinge sequence) set forth in SEQ ID NO: 21 to several amino acid residues on the C-terminal side of a sequence established by repeating 4 times a region of 20 domain sequences in the amino acid sequence set forth in SEQ ID NO: 9. An amino acid sequence (PRT799) set forth in SEQ ID NO: 17 is an amino acid sequence prepared by adding the amino acid sequence (tag sequence and hinge sequence) set forth in SEQ ID NO: 21 to the N-terminal of the amino acid sequence set forth in SEQ ID NO: 11.

The aforementioned amino acid sequences are summarized as follows.
SEQ ID NO: 1 Amino acid sequence of Araneus diadematus
SEQ ID NO: 2 Amino acid sequence of Araneus diadematus
SEQ ID NO: 3 Amino acid sequence of Araneus diadematus
SEQ ID NO: 4 Amino acid sequence of recombinant spider silk protein ADF3KaiLargeNRSH1
SEQ ID NO: 5 Sequence prepared by deleting a His-tag amino acid sequence from the sequence set forth in SEQ ID NO: 4
SEQ ID NO: 6 Met-PRT313: Amino acid sequence of Met-CRY1_L_A5
SEQ ID NO: 7 Met-PRT399: Amino acid sequence of Met-CRY1_L_A5_giza
SEQ ID NO: 8 Met-PRT380: Amino acid sequence of Met-CRY1_L_A5_QQQ
SEQ ID NO: 9 Met-PRT410: Amino acid sequence of Met-CRY1_L_A5_giza_QQQ
SEQ ID NO: 10 Met-PRT468: Amino acid sequence of Met-CRY1_L_A7_giza_QQQ
SEQ ID NO: 11 Met-PRT799: Amino acid sequence of Met-CRY1_200_A5_giza_QQQ_WHis6
SEQ ID NO: 12 Amino acid sequence of PRT313
SEQ ID NO: 13 Amino acid sequence of PRT399
SEQ ID NO: 14 Amino acid sequence of PRT380
SEQ ID NO: 15 Amino acid sequence of PRT410
SEQ ID NO: 16 Amino acid sequence of PRT468
SEQ ID NO: 17 Amino acid sequence of PRT799
SEQ ID NO: 18 Amino acid sequence of ADF3Kai_noNR
SEQ ID NO: 19 Amino acid sequence prepared by deleting His tag from the amino acid sequence set forth in SEQ ID NO: 18
SEQ ID NO: 20 His-tag and start codon amino acid sequence
SEQ ID NO: 21 His-tag amino acid sequence

The modified fibroin may, for example, be obtained by modifying an amino acid sequence equivalent to an amino acid sequence prepared by, for example, substituting, deleting, inserting and/or adding one or more amino acid residues with regard to a gene sequence of a cloned naturally derived fibroin. Amino acid residue substitutions, deletions, insertions and/or additions may be carried out by methods well known to those skilled in the art, such as site-directed mutagenesis. Specifically, it may be carried out according to the methods described in the literatures such as Nucleic Acid Res. 10,6487 (1982), Methods in Enzymology, 100,448 (1983).

The naturally derived fibroin is a protein having a domain sequence represented by Formula (I): [(A)ₙ motif-REP]ₘ, specifically, for example, a fibroin produced by insects or spiders.

Examples of the fibroin produced by insects include silk proteins produced by silkworms such as Bombyx mori, Bombyx mandarina, Antheraea yamamai, Anteraea pernyi, Eriogyna pyretorum, Pilosamia Cynthia ricini, Samia cynthia, Caligura japonica, Antheraea mylitta, and Antheraea assama; and Hornet silk proteins discharged by larvae of Vespa simillima xanthoptera.

A more specific example of the fibroin produced by insects include a silkworm fibroin L chain (GenBank Accession No. M76430 (nucleotide sequence), AAA27840.1 (amino acid sequence)).

Examples of the fibroin produced by spiders include spider silk proteins (spider thread protein) produced by spiders belonging to the genus Araneus such as Araneus ventricosus, Araneus diadematus, Araneus pinguis, Araneus pentagrammicus and Araneus nojima, spiders belonging to the genus Neoscona such as Neoscona scylla, Neoscona nautica, Neoscona adianta and Neoscona scylloides, spiders belonging to the genus Pronus such as Pronous minutes, spiders belonging to the genus Cyrtarachne such as Cyrtarachne bufo and Cyrtarachne inaequalis, spiders belonging to the genus Gasteracantha such as Gasteracantha kuhli and Gasteracantha mammosa, spiders belonging to the genus Ordgarius such as Ordgarius hobsoni and Ordgarius sexspinosus, spiders belonging to the genus Argiope such as Argiope amoena, Argiope minuta and Argiope bruennich, spiders belonging to the genus Arachnura such as Arachnura logio, spiders belonging to the genus Acusilas such as Acusilas coccineus, spiders belonging to the genus Cytophora such as Cyrtophora moluccensis, Cyrtophora exanthematica and Cyrtophora unicolor, spiders belonging to the genus Poltys such as Poltys illepidus, spiders belonging to the genus Cyclosa such as Cyclosa octotuberculata, Cyclosa sedeculata, Cyclosa vallata and Cyclosa atrata, and spiders belonging to the genus Chorizopes such as Chorizopes nipponicus; and spider silk proteins produced by spiders belonging to the genus Tetragnatha such as Tetragnatha praedonia, Tetragnatha maxillosa, Tetragnatha extensa and Tetragnatha squamata, spiders belonging to the genus Leucauge such as Leucauge magnifica, Leucauge blanda and Leucauge subblanda, spiders belonging to the genus Nephila such as Nephila clavata and Nephila pilipes, spiders belonging to the genus Menosira such as Menosira ornata, spiders belonging to the genus Dyschiriognatha such as Dyschiriognatha tenera, spiders belonging to the genus Latrodectus such as Latrodectus mactans, Latrodectus hasseltii, Latrodectus geometricus and Latrodectus tredecimguttatus, and spiders belonging to the family Tetragnathidae such as spiders belonging to the genus Euprosthenops. Examples of spider silk proteins include dragline proteins such as MaSp (MaSp1 and MaSp2) and ADF (ADF3 and ADF4), and MiSp (MiSpl and MiSp2).

More specific examples of the fibroin produced by spiders include fibroin-3 (adf-3) [derived from Araneus diadematus] (GenBank Accession Number AAC47010 (amino acid sequence), U47855 (nucleotide sequence)), fibroin-4 (adf-4) [derived from Araneus diadematus] (GenBank Accession Number AAC47011 (amino acid sequence), U47856 (nucleotide sequence)), dragline silk protein spidroin 1 [derived from Nephila clavipes] (GenBank Accession Number AAC04504 (amino acid sequence), U37520 (nucleotide sequence)), major angullate spidroin 1 [derived from Latrodectus hesperus] (GenBank Accession Number ABR68856 (amino acid sequence)), EF595246 (nucleotide sequence)), dragline silk protein spidroin 2 [derived from Nephila clavata] (GenBank Accession Number AAL32472 (amino acid sequence), AF441245 (nucleotide sequence)), major anpullate spidroin 1 [derived from Euprosthenops australis] (GenBank Accession Number CAJ00428 (amino acid sequence), AJ973155 (nucleotide sequence)) and major ampullate spidroin 2 [Euprosthenops australis] (GenBank Accession Number CAM32249.1 (amino acid sequence), AM490169 (nucleotide sequence)), minor ampullate silk protein 1 [Nephila clavipes] (GenBank Accession Number AAC14589.1 (amino acid sequence)), minor ampullate silk protein 2 [Nephila clavipes] (GenBank Accession Number AAC14591.1 (amino acid sequence)), and minor ampullate spidroin-like protein [Nephilengys cruentata] (GenBank Accession Number ABR37278.1 (amino acid sequence).

Fibroins in which sequence information is registered in NCBI GenBank may be further listed as a more specific example of the naturally derived fibroin. For example, these can be identified by extracting sequences in which spidroin, ampullate, fibroin, "silk and polypeptide", or "silk and protein" is described as a keyword in DEFINITION among sequences containing INV as DIVISION among sequence information registered in NCBI GenBank, sequences in which a specific character string of products is described from CDS, or sequences in which a specific character string is described from SOURCE to TISSUE TYPE.

The modified fibroin may be a modified silk fibroin (obtained by altering the amino acid sequence of the silk protein produced by silkworm), and a modified spider thread fibroin (obtained by altering the amino acid sequence of the spider silk protein produced by spiders). Among these fibroins, the modified spider thread fibroin is preferably used.

Specific examples of the modified fibroin include: a modified fibroin derived from the spigot guiding thread protein produced by the major ampullate of a spider [modified fibroin according to the first embodiment]; a modified fibroin with a reduced content of glycine residues [modified fibroin according to the second embodiment]; a modified fibroin with a reduced content of (A)ₙ motifs [modified fibroin according to the third embodiment]; and a modified fibroin with a reduced content of glycine residues and with a reduced content of (A)ₙ motifs [modified fibroin according to the fourth embodiment].

The modified fibroin according to the first embodiment may be a protein containing a domain sequence represented by a formula (I): [(A)ₙ motif-REP]ₘ. As for the modified fibroin according to the first embodiment, in the formula (I), n is preferably an integer of 3 to 20, more preferably an integer of 4 to 20, more preferably an integer of 8 to 20, more preferably an integer of 10 to 20, even more preferably an integer of 4 to 16, particularly preferably an integer of 8 to 16, and most preferably an integer of 10 to 16. As for the modified fibroin according to the first embodiment, in the formula (I), the number of amino acid residues constituting the REP is preferably 10 to 200, more preferably 10 to 150, more preferably 20 to 100, and even more preferably 20 to 75 residues. As for the modified fibroin according to the first embodiment, a ratio of the total number of the glycine residues, serine residues and alanine residues contained in the amino acid sequence set forth in the formula (I): [(A)ₙ motif-REP]ₘ to the total number of amino acid residues is preferably 40% or more, more preferably 60% or more, and even more preferably 70% or more.

The modified fibroin according to the first embodiment may be a polypeptide containing the unit of the amino acid sequence set forth in the formula (I): [(A)ₙ motif-REP]ₘ, where the C-terminal sequence is an amino acid sequence set forth in any one of the SEQ ID NO: 1 to 3, or an amino acid sequence having a homology of 80% or more, preferably 85% or more, more preferably 90% or more, and most preferably 95% or more, with respect to the amino acid sequence set forth in any one of the SEQ ID NO: 1 to 3.

The amino acid sequence set forth in SEQ ID NO: 1 is identical to an amino acid sequence consisting of the 50 amino acid residues at the C-terminal of the amino acid sequence of ADF 3 (GI: 1263287, NCBI); the amino acid sequence set forth in SEQ ID NO: 2 is identical to an amino acid sequence prepared by removing 20 residues from the C-terminal of the amino acid sequence set forth in SEQ ID NO: 1; the amino acid sequence set forth in SEQ ID NO: 3 is identical to an amino acid sequence prepared by removing 29 residues from the C-terminal of the amino acid sequence set forth in SEQ ID NO: 1.

A more specific example of the modified fibroin according to the first embodiment may be a modified fibroin containing (1-i) the amino acid sequence set forth in SEQ ID NO: 4 or SEQ ID NO: 5 (amino acid sequence prepared by removing His-tag from the amino acid sequence of SEQ ID NO: 4); or (1-ii) an amino acid sequence having sequence identity of 80% or more, preferably 85% or more, more preferably 90% or more, and most preferably 95% or more, with respect to the amino acid sequence set forth in SEQ ID NO: 4. Such sequence identity may be 100%.

The amino acid sequence set forth in SEQ ID NO: 4 is prepared as follows. That is, an amino acid sequence of ADF 3 prepared by adding to the N-terminal an amino acid sequence (SEQ ID NO: 20) consisting of a start codon, a His10-tag and a HRV3C protease (Human rhinovirus 3C protease) recognition site is mutated in a way such that the 1st to the 13th repeat regions are approximately doubled, and that translation is made to end at the 1154th amino acid residue. The amino acid sequence of the C-terminal of the amino acid sequence set forth in SEQ ID NO: 4 is identical to the amino acid sequence set forth in SEQ ID NO: 8.

The modified fibroin of (1-i) may be that consisting of the amino acid sequence set forth in SEQ ID NO: 4.

As for the modified fibroin according to the second embodiment, the ratio of the motif sequences with the glycine residues being substituted by another amino acid residue(s) to all the motif sequences may be 10% or more.

The modified fibroin according to the second embodiment may be that containing the domain sequence represented by the formula (I): [(A)ₙ motif-REP]ₘ, and having an amino acid sequence with a ratio of z/w (%) being not lower than 30% or not lower than 50.9%, where z represents a total number of amino acid residues of an amino acid sequence consisting of XGX (provided that X represents an amino acid residue other than glycine) contained in all the REPs in a sequence prepared by removing from the domain sequence a sequence starting from the (A)ₙ motif closest to the C-terminal side to the C-terminal of the domain sequence; and w represents a total number of amino acid residues in the sequence prepared by removing from the domain sequence the sequence starting from the (A)ₙ motif closest to the C-terminal side to the C-terminal of the domain sequence. A ratio of the number of the alanine residues to the total number of the amino acid residues in the (A)ₙ motif may be 83% or more, preferably 86% or more, more preferably 90% or more, more preferably 95% or more, and even more preferably 100% (i.e. consisting only of alanine residues).

In the modified fibroin according to the second embodiment, it is preferable to increase the content ratio of the amino acid sequence consisting of XGX by substituting one glycine residue of the GGX motif with another amino acid residue. In the modified fibroin according to the second embodiment, the content ratio of the amino acid sequence consisting of GGX in the domain sequence is preferably 30% or less, more preferably 20% or less, still more preferably 10% or less, even still more preferably 6% or less, more particularly preferably 4% or less, and most preferably 2% or less. The content ratio of the amino acid sequence consisting of GGX in the domain sequence can be calculated by the same method as the calculation method of the content ratio (z/w) of the amino acid sequence consisting of XGX described below.

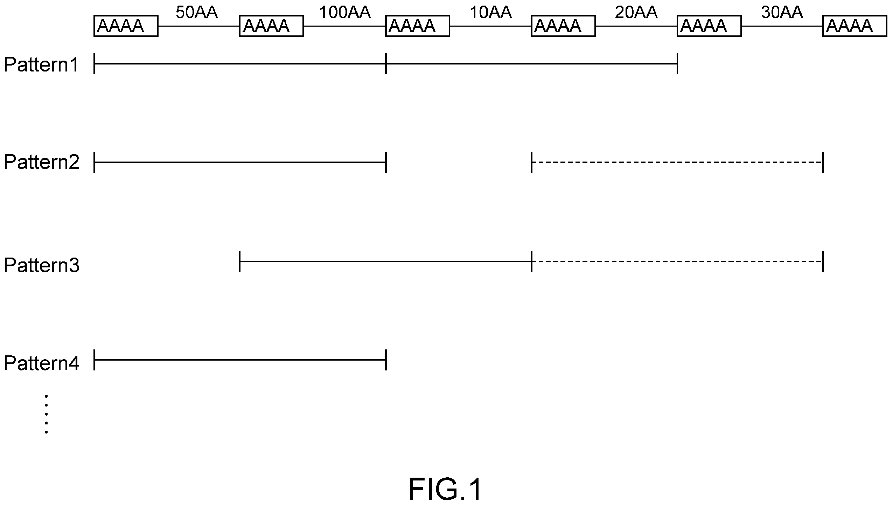

The calculation method of z/w will be described in more detail. First, an amino acid sequence consisting of XGX is extracted from all the REPs in the sequence excluding, from the domain sequence, a sequence ranging from the (A)ₙ motif located at the most C-terminal side to the C-terminal of the domain sequence. The total number of amino acid residues constituting XGX is z. For example, in the case where 50 amino acid sequences consisting of XGX are extracted (there is no overlap), z is 50 × 3 = 150. Also, for example, in the case where a common X is contained in two XGXs (central X) such as an amino acid sequence consisting of XGXGX, it is calculated by subtracting the overlapping portion (in the case of XGXGX, it is 5 amino acid residues). w is the total number of amino acid residues contained in the sequence excluding, from the domain sequence, a sequence ranging from the (A)ₙ motif located at the most C-terminal side to the C-terminal of the domain sequence. For example, in the case of the domain sequence shown in FIG. 1, w is 4 + 50 + 4 + 100 + 4 + 10 + 4 + 20 + 4 + 30 = 230 (excluding the (A)ₙ motif located at the most C-terminal side). Next, z/w (%) can be calculated by dividing z by w.

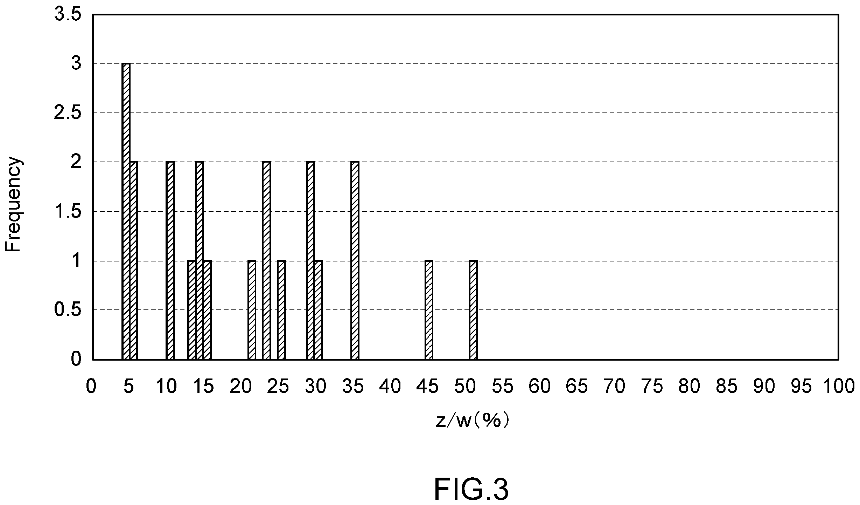

Here, z/w in naturally derived fibroin will be described. First, as described above, 663 types of fibroins (415 types of fibroins derived from spiders among them) were extracted by identifying fibroins with amino acid sequence information registered in NCBI GenBank by a method exemplified. z/w (%) was calculated by the above-mentioned calculation method from the amino acid sequences of naturally derived fibroins consisting of a domain sequence represented by Formula I: [(A)ₙ motif-REP]ₘ, among all the extracted fibroins where the content ratio of the amino acid sequence consisting of GGX in the fibroin is 6% or less. FIG 3 shows the results. In FIG 3, the horizontal axis represents z/w (%) and the vertical axis represents frequency. As is clear from FIG 3, z/w in naturally derived fibroin is less than 50.9% (highest, 50.86%).

In the modified fibroin according to the second embodiment, z/w is preferably 50.9% or more, more preferably 56.1% or more, still more preferably 58.7% or more, even still more preferably 70% or more, and still further preferably 80% or more. The upper limit of z/w is not particularly limited, but it may be 95% or less, for example.

The modified fibroin according to the second embodiment can be obtained, for example, by substituting and modifying at least a part of a nucleotide sequence encoding a glycine residue from the gene sequence of cloned naturally derived fibroin so as to encode another amino acid residue. At this time, one glycine residue in the GGX motif and GPGXX motif may be selected as the glycine residue to be modified, and substitution may be carried out such that z/w is equal to or more than 50.9%. Alternatively, the modified fibroin can also be obtained, for example, by designing an amino acid sequence satisfying each of the above embodiments from the amino acid sequence of naturally derived fibroin and chemically synthesizing a nucleic acid encoding the designed amino acid sequence. In any case, in addition to the modification, corresponding to the substitution of one glycine residue in the REP with another amino acid residues, to the amino acid sequence of naturally derived fibroin, further modification of the amino acid sequence corresponding to substitution, deletion, insertion and/or addition of one or a plurality of amino acid residues may be carried out.

The above-described alternative amino acid residue is not particularly limited as long as it is an amino acid residue other than a glycine residue, but it is preferably a hydrophobic amino acid residue such as a valine (V) residue, a leucine (L) residue, an isoleucine (I) residue, a methionine (M) residue, a proline (P) residue, a phenylalanine (F) residue, or a tryptophan (W) residue, or a hydrophilic amino acid residue such as a glutamine (Q) residue, an asparagine (N) residue, a serine (S) residue, a lysine (K) residue, or a glutamic acid (E) residue, among which more preferred are a valine (V) residue, a leucine (L) residue, an isoleucine (I) residue or a glutamine (Q) residue, and still more preferred is a glutamine (Q) residue.

A more specific example of the modified fibroin according to the second embodiment may be a modified fibroin including (2-i) an amino acid sequence set forth in SEQ ID NO: 8, SEQ ID NO: 9, SEQ ID NO: 10 or SEQ ID NO: 11, or (2-ii) an amino acid sequence having 80% or more, preferably 85% or more, more preferably 90% or more, even more preferably 95% or more sequence identity with the amino acid sequence set forth in SEQ ID NO: 8, SEQ ID NO: 9, SEQ ID NO: 10 or SEQ ID NO: 11.

The modified fibroin of (2-i) will be described. The amino acid sequence set forth in SEQ ID NO: 8 is the amino acid sequence in which all GGX in REP of the amino acid sequence set forth in SEQ ID NO: 6, corresponding to naturally derived fibroin, is substituted with GQX. The amino acid sequence set forth in SEQ ID NO: 9 is the amino acid sequence in which (A)ₙ motif is deleted every other two of them from the amino acid sequence set forth in SEQ ID NO: 8 from the N-terminal side toward the C-terminal side, and further one [(A)ₙ motif-REP] is inserted before the C-terminal sequence. The amino acid sequence set forth in SEQ ID NO: 10 is the amino acid sequence in which two alanine residues are inserted at the C-terminal side of each (A)ₙ motif of the amino acid sequence set forth in SEQ ID NO: 9, and a part of glutamine (Q) residues is further substituted with a serine (S) residue, and then a part of amino acids on the N-terminal side is deleted so as to have almost the same molecular weight as the molecular weight of SEQ ID NO: 9. The amino acid sequence represented by SEQ ID NO.11 is an amino acid sequence prepared by adding His tag to the C-terminal of a sequence established by repeating 4 times a region of 20 domain sequences in the amino acid sequence set forth in SEQ ID NO.10 (Note that several amino acid residues at the C-terminal side of the region are substituted).

The value of z/w (%) of the amino acid sequence set forth in SEQ ID NO: 6 (corresponding to naturally derived fibroin) is 46.8%. The values of z/w in the amino acid sequences set forth in SEQ ID NO: 8, 9, 10 and 11 are 58.7%, 70.1%, 66.1% and 70.0%, respectively. The value of x/y at Giza ratio 1:1.8 to 1:11.3 of the amino acid sequence set forth in SEQ ID NO 6, 8, 9, 10 and 11 are 15.0%, 15.0%, 93.4%, 92.7% and 89.3%, respectively.

The modified fibroin of (2-i) may consist of the amino acid sequence set forth in SEQ ID NO: 8, SEQ ID NO: 9, SEQ ID NO: 10, or SEQ ID NO: 11.

The modified fibroin of (2-ii) includes an amino acid sequence having a sequence identity of 80% or more, preferably 85% or more, more preferably 90% or more, and still more preferably 95% or more, with respect to the amino acid sequence set forth in SEQ ID NO: 8, SEQ ID NO: 9, SEQ ID NO: 10 or SEQ ID NO: 11. The modified fibroin of (2-ii) is also a protein having a domain sequence represented by Formula I: [(A)ₙ motif-REP]ₘ. The sequence identity is 80% or more, preferably 85% or more, more preferably 90% or more and still more preferably 95% or more.

It is preferred that the modified fibroin of (2-ii) has a sequence identity of 80% or more, preferably 85% or more, more preferably 90% or more, and still more preferably 95% or more, with respect to the amino acid sequence set forth in SEQ ID NO:8, SEQ ID NO: 9, SEQ ID NO: 10 or SEQ ID NO: 11, and z/w is preferably 50.9% or more where the total number of amino acid residues in the amino acid sequence consisting of XGX (where X represents an amino acid residue other than glycine) contained in the REP is defined as z, and the total number of amino acid residues in the REP in the domain sequence is w.

The above-mentioned modified fibroin may include a tag sequence at either or both of the N-terminal and C-terminal. This makes it possible to isolate, immobilize, detect and visualize the modified fibroin.

The tag sequence may be, for example, an affinity tag utilizing a specific affinity (binding property, affinity) with another molecule. The specific example of the affinity tag includes a histidine tag (His tag). His tag is a short peptide in which about 4 to 10 histidine residues are arranged. His tag has a property of specifically binding to a metal ion such as nickel, so it can be used for isolation of a modified fibroin by chelating metal chromatography. A specific example of the tag sequence includes, for example, an amino acid sequence set forth in SEQ ID NO: 21 (amino acid sequence including His tag).

In addition, a tag sequence such as glutathione-S-transferase (GST) that specifically binds to glutathione or maltose binding protein (MBP) that specifically binds to maltose can also be used.

Further, an "epitope tag" utilizing the antigen-antibody reaction can also be used. A peptide (epitope), exhibiting antigenicity as a tag sequence, may be added to bind an antibody against the epitope. Examples of the epitope tag include an HA (peptide sequence of hemagglutinin of influenza virus) tag, a myc tag, and a FLAG tag. The modified fibroin can easily be purified with high specificity by utilizing the epitope tag.

It is also possible to use a tag sequence which can be cleaved with a specific protease. By treating a protein adsorbed through the tag sequence with protease, it is also possible to recover the modified fibroin cleaved from the tag sequence.

A more specific example of the modified fibroin including a tag sequence may be a modified fibroin including (2-iii) an amino acid sequence set forth in SEQ ID NO: 14, SEQ ID NO: 15, SEQ ID NO: 16 or SEQ ID NO: 17, or (2-iv) an amino acid sequence having a sequence identity of 80% or more, preferably 85% or more, more preferably 90% or more, and still more preferably 95% or more, with respect to the amino acid sequence set forth in SEQ ID NO: 14, SEQ ID NO: 15, SEQ ID NO: 16 or SEQ ID NO: 17.

The amino acid sequences set forth in SEQ ID NOs: 12, 13, 14, 15, 16 and 17 are amino acid sequences in which an amino acid sequence set forth in SEQ ID NO: 21 (including a His tag) is added to at the N-terminals of the amino acid sequences set forth in SEQ ID NOs: 6, 7, 8, 9, 10 and 11, respectively.

The modified fibroin of (2-iii) may consist of an amino acid sequence set forth in SEQ ID NO: 14, SEQ ID NO: 15, SEQ ID NO: 16 or SEQ ID NO: 17.

The modified fibroin of (2-iv) includes an amino acid sequence having a sequence identity of 80% or more, preferably 85% or more, more preferably 90% or more and, most more preferably 95% or more, with respect to the amino acid sequence set forth in SEQ ID NO: 14, SEQ ID NO: 15, SEQ ID NO: 16 or SEQ ID NO: 17. The modified fibroin of (2-iv) is also a protein having a domain sequence represented by Formula (I): [(A)ₙ motif-REP]ₘ. The sequence identity is 80% or more, preferably 85% or more, more preferably 90% or more and still more preferably 95% or more.

It is preferred that the modified fibroin of (2-iv) has a sequence identity of 80% or more, preferably 85% or more, more preferably 90% or more, and still more preferably 95% or more, with respect to the amino acid sequence set forth in SEQ ID NO: 14, SEQ ID NO: 15, SEQ ID NO: 16 or SEQ ID NO: 17, and z/w (%) is preferably 50.9% or more where the total number of amino acid residues in the amino acid sequence consisting of XGX (where X represents an amino acid residue other than glycine) contained in the REPs is defined as z, and the total number of amino acid residues in the REPs in the domain sequence is w.

The above-mentioned modified fibroin may include a secretory signal for releasing the protein produced in the recombinant protein production system to the outside of the host. The sequence of the secretory signal can be appropriately set depending on the type of the host.

The modified fibroin according to the third embodiment has an amino acid sequence whose domain sequence has a content in which the (A)ₙ motif is reduced as compared to naturally derived fibroins. The domain sequence of the modified fibroin can have an amino acid sequence equivalent to an amino acid sequence in which, at least, one or a plurality of the (A)ₙ motifs is deleted, as compared to the naturally derived fibroin.

The modified fibroin according to the third embodiment may be, for example, a modified fibroin having an amino acid sequence equivalent to an amino acid sequence in which 10 to 40% of the (A)ₙ motif is deleted from the naturally derived fibroin.

In the modified fibroin according to the third embodiment, the domain sequence preferably may have an amino acid sequence equivalent to an amino acid sequence in which, at least, one (A)ₙ motif per one to three (A)ₙ motifs is deleted from the N-terminal side to the C-terminal side, as compared to the naturally derived fibroin.

In the modified fibroin according to the third embodiment, the domain sequence preferably may have an amino acid sequence equivalent to an amino acid sequence in which at least two consecutive (A)ₙ motif deletions and one (A)ₙ motif deletion are repeated in this order from the N-terminal side to the C-terminal side, as compared to the naturally derived fibroin.

In the modified fibroin according to the third embodiment, the domain sequence preferably may have an amino acid sequence equivalent to an amino acid sequence in which at least (A)ₙ motif is deleted every other two of them from the N-terminal side to the C-terminal side.

The modified fibroin according to the third embodiment may include a domain sequence represented by Formula I: [(A)ₙ motif-REP]ₘ, and have an amino acid sequence in which x/y is 20% or more or have an amino acid sequence in which x/y is 50% or more, in which x represents a value obtained by sequentially comparing the number of amino acid residues in REPs of two adjacent [(A)ₙ motif-REP] units from the N-terminal side to the C-terminal side, and then adding together the numbers of amino acid residues in all pairs of adjacent [(A)ₙ motif-REP] units which are identified as those where when the number of amino acid residues in an REP having a smaller number of amino acid residues is defined as 1, a ratio of the number of amino acid residues in the other REP thereto is 2 to 3.5,; and y represents a total number of amino acid residues in the domain sequence. The (A)ₙ motif may be such that the number of alanine residues, relative to the total number of amino acid residues in the (A)ₙ motif, is 83% or more, preferably 86% or more, more preferably 90% or more, still more preferably 95% or more, and even still more preferably 100% (which means that the (A)ₙ motif consists only of alanine residues).

A method of calculating x/y will be described in more detail with reference to FIG 1. FIG 1 shows a domain sequence excluding N-terminal sequence and C-terminal sequence from the modified fibroin. This domain sequence has, from the N-terminal side (left side), a sequence of: (A)ₙ motif--first REP (50 amino acid residues)--(A)ₙ motif--second REP (100 amino acid residues)--(A)ₙ motif--third REP (10 amino acid residues)--(A)ₙ motif--fourth REP (20 amino acid residues)--(A)ₙ motif--fifth REP (30 amino acid residues)--(A)ₙ motif.

The two adjacent [(A)ₙ motif-REP] units are sequentially selected from the N-terminal side to the C-terminal side so as not to overlap. At this time, there may exist an unselected [(A)ₙ motif-REP]. FIG. 1 shows pattern 1 (a comparison between first REP and second REP, and a comparison between third REP and fourth REP), pattern 2 (a comparison between the first REP and the second REP, and a comparison between the fourth REP and the fifth REP), pattern 3 (a comparison between the second REP and the third REP, and a comparison between the fourth REP and the fifth REP), and pattern 4 (a comparison between the first REP and the second REP). Alternative selection methods other than this method may be taken.

Next, for each of the patterns, the number of amino acid residues of each REP in the selected pair of adjacent [(A)ₙ motif-REP] units is compared. The comparison is carried out by obtaining a ratio of the number of amino acid residues of one REP to the other REP having a smaller number of amino acid residues where the number of amino acid residues in the other REP of smaller number is scaled to 1. For example, in the case of comparing the first REP (50 amino acid residues) and the second REP (100 amino acid residues), the ratio of the number of amino acid residues of the second REP to the first REP having a smaller number of amino acid residues is 100/50 = 2 where the number of amino acid residues in the first REP, having a smaller number of amino acid residues, is scaled to 1. Similarly, in the case of comparing the fourth REP (20 amino acid residues) and the fifth REP (30 amino acid residues), the ratio of the number of amino acid residues of the fifth REP to the fourth REP having a smaller number of amino acid residues is 30/20 = 1.5 where the number of amino acid residues in the fourth REP having a smaller number of amino acid residues is scaled to 1.

In FIG 1, all pairs of [(A)ₙ motif-REP] units in which the ratio of the number of amino acid residues of one REP to that of the other REP is 1.8 to 11.3 where the other REP having smaller number of amino acid residues is scaled to 1 are indicated by solid lines. Such a ratio is referred to herein as a Giza ratio. All pairs of [(A)ₙ motif-REP] units in which the ratio of the number of amino acid residues of one REP to that of the other REP is less than 1.8 or more than 11.3 where the other REP having smaller number of amino acid residues is scaled to 1 is indicated by a broken line.

In each pattern, the number of all amino acid residues of the pair of adjacent [(A)ₙ motif-REP] units indicated by solid lines (including not only the number of amino acid residues of REP but also the number of amino acid residues of (A)ₙ motif) is all summed up. Then, the total summation values for the patterns are compared to each other, and the total summation value of the pattern taking the maximum (the maximum value of the total value) is defined as x. In the example shown in FIG. 1, the total value of the pattern 1 takes the maximum.

x/y (%) can then be calculated by dividing x by the total amino acid residue number y in the domain sequence.

In the modified fibroin according to the third embodiment, x/y is preferably 50% or more, more preferably 60% or more, still more preferably 65% or more, even still more preferably 70% or more, even further preferably 75% or more, and particularly preferably 80% or more. The upper limit of x/y is not particularly limited, and may be, for example, 100% or less. In the case where the Giza ratio is 1:1.9 to 11.3, x/y is preferably 89.6% or more; in the case where the Giza ratio is 1:1.8 to 3.4, x/y is preferably 77.1% or more; in the case where the Giza ratio is 1:1.9 to 8.4, x/y is preferably 75.9% or more; and in the case where the Giza ratio is 1:1.9 to 4.1, x/y is preferably 64.2% or more.

In the case where the modified fibroin according to the third embodiment is a modified fibroin in which at least seven of the plurality of the (A)ₙ motifs in the domain sequence consist only of alanine residues, x/y is preferably 46.4% or more, more preferably 50% or more, still more preferably 55% or more, even still more preferably 60% or more, still further preferably 70% or more, and particularly preferably 80% or more. The upper limit of x/y is not particularly limited, and it may be 100% or less.

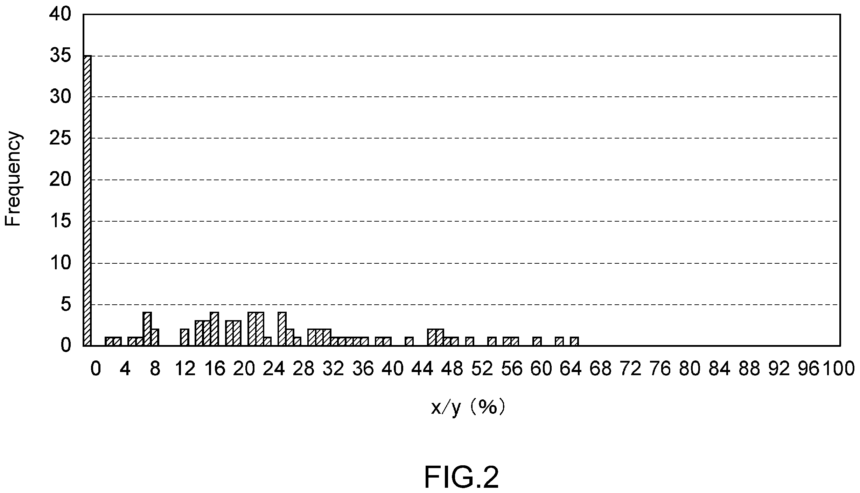

Here, x/y in the naturally derived fibroin will be described. First, as described above, 663 types of fibroins (415 types of fibroins derived from spiders among them) were extracted by identifying fibroins with amino acid sequence information registered in NCBI GenBank by the method exemplified. x/y was calculated by the above-mentioned calculation method from the amino acid sequences of the naturally derived fibroins consisting of a domain sequence represented by Formula I: [(A)ₙ motif-REP]ₘ, among all the extracted fibroins. FIG 2 shows the results in the case where the Giza ratio is 1:1.9 to 1:4.1.

In FIG. 2, the horizontal axis represents x/y (%) and the vertical axis represents frequency. As is clear from FIG 2, x/y in the naturally derived fibroin is less than 64.2% (highest, 64.14%).

The modified fibroin according to the third embodiment may be obtained, for example, from a gene sequence of a cloned naturally derived fibroin, by deleting one or a plurality of the sequences encoding the (A)ₙ motif such that the percentage of x/y is 64.2% or more. Further, the modified fibroin according to the present embodiment may also be obtained, for example, by designing an amino acid sequence corresponding to the deletion of one or a plurality of (A)ₙ motifs from the amino acid sequence of the naturally derived fibroin such that x/y is 64.2% or more, and chemically synthesizing a nucleic acid encoding the designed amino acid sequence. In any case, in addition to the modification corresponding to the deletion of the (A)ₙ motif from the amino acid sequence of the naturally derived fibroin, further modification of the amino acid sequence corresponding to the substitution, deletion, insertion and/or addition of one or a plurality of amino acid residues may be carried out.

A more specific example of the modified fibroin according to the third embodiment may be a modified fibroin including (3-i) an amino acid sequence set forth in SEQ ID NO: 7, SEQ ID NO: 9, SEQ ID NO: 10 or SEQ ID NO: 11, or (3-ii) an amino acid sequence having a sequence identity of 80% or more, preferably 85 % or more, more preferably 90 % or more, most preferably 95 % or more, with respect to the amino acid sequence set forth in SEQ ID NO:7, SEQ ID NO: 9, SEQ ID NO: 10 or SEQ ID NO: 11.

The modified fibroin of (3-i) will be described. The amino acid sequence set forth in SEQ ID NO: 7 is the amino acid sequence in which (A)ₙ motif is deleted every other two of them from the amino acid sequence set forth in SEQ ID NO: 6, corresponding to the naturally derived fibroin, from the N-terminal side to the C-terminal side, and further one [(A)ₙ motif-REP] is inserted before the C-terminal sequence. The amino acid sequence set forth in SEQ ID NO: 9 is the amino acid sequence in which all GGX in REP of the amino acid sequence set forth in SEQ ID NO: 7 is substituted with GQX. The amino acid sequence set forth in SEQ ID NO: 10 is the amino acid sequence in which two alanine residues are inserted at the C-terminal side of each (A)ₙ motif of the amino acid sequence set forth in SEQ ID NO: 9, and further a part of glutamine (Q) residues is substituted with a serine (S) residue, and a part of amino acids on the N-terminal side is deleted so as to be almost the same molecular weight as that of SEQ ID NO: 9. The amino acid sequence represented by SEQ ID NO: 11 is an amino acid sequence prepared by adding His tag to the C-terminal of a sequence established by repeating 4 times a region of 20 domain sequences in the amino acid sequence set forth in SEQ ID NO: 10 (note that several amino acid residues at the C-terminal side of the region are substituted).

The value of x/y % at Giza ratio 1:1.8 to 11.3 of the amino acid sequence set forth in SEQ ID NO: 6 (corresponding to the naturally derived fibroin) is 15.0%. The values of x/y % in the amino acid sequence set forth in SEQ ID NO: 7 and the amino acid sequence set forth in SEQ ID NO: 9 are all 93.4%. The value of x/y in the amino acid sequence set forth in SEQ ID NO: 10 is 92.7%. The value of x/y in the amino acid sequence set forth in SEQ ID NO: 11 is 89.3%.The values of x/y in the amino acid sequences set forth in SEQ ID NOs: 6, 7, 9, 10 and 11 to 12 are 46.8%, 56.2%, 70.1%, 66.1% and 70.0%, respectively.

The modified fibroin of (3-i) may consist of the amino acid sequence set forth in SEQ ID NO: 7, SEQ ID NO: 9, SEQ ID NO: 10 or SEQ ID NO: 11.

The modified fibroin of (3-ii) includes an amino acid sequence having a sequence of identity of 80% or more, preferably 85 % or more, more preferably 90 % or more, and still more preferably 95 % or more, with respect to the amino acid sequence set forth in SEQ ID NO:7, SEQ ID NO:9, SEQ ID NO: 10 or SEQ ID NO: 11. The modified fibroin of (3-ii) is also a protein having a domain sequence represented by Formula I: [(A)ₙ motif-REP]ₘ. The sequence identity is 80% or more, preferably 85 % or more, more preferably 90 % or more and most preferably 95 % or more.

It is preferred that the modified fibroin of (3-ii) has a sequence identity of 80% or more, preferably 85 % or more, more preferably 90 % or more, and most preferably 95 % or more, with respect to the amino acid sequence set forth in SEQ ID NO: 7, SEQ ID NO: 9, SEQ ID NO: 10 or SEQ ID NO: 11, and that the percentage of x/y is 64.2% or more in which x represents a value obtained by sequentially comparing the number of amino acid residues in REPs of two adjacent [(A)ₙ motif-REP] units from the N-terminal side to the C-terminal side, and then adding together the numbers of amino acid residues in all pairs of adjacent [(A)ₙ motif-REP] units which are identified as those where when the number of amino acid residues in an REP having a smaller number of amino acid residues is defined as 1, a ratio of the number of amino acid residues in the other REP thereto is 1.8 to 11.3 (Giza ratio is 1:1.8 to 1:11.3); and y represents a total number of amino acid residues in the domain sequence.

The above-mentioned modified fibroin may include the tag sequence as described at either or both of the N-terminal and C-terminal.

A more specific example of the modified fibroin including a tag sequence may be a modified fibroin including (3-iii) an amino acid sequence set forth in SEQ ID NO: 13, SEQ ID NO: 15, SEQ ID NO: 16 or SEQ ID NO: 17, or (3-iv) an amino acid sequence having a sequence identity of 80% or more, preferably 85% or more, more preferably 90% or more, and most preferably 95% or more, with respect to the amino acid sequence set forth in SEQ ID NO: 13, SEQ ID NO: 15, SEQ ID NO: 16 or SEQ ID NO: 17.

The amino acid sequences set forth in SEQ ID NOs: 12, 13, 14, 15, 16 and 17 are amino acid sequences in which an amino acid sequence set forth in SEQ ID NO: 21 (including His tag) is added at the N-terminals of the amino acid sequences set forth in SEQ ID NOs: 6, 7, 8, 9, 10 and 11, respectively.

The modified fibroin of (3-iii) may consist of the amino acid sequence set forth in SEQ ID NO: 13, SEQ ID NO: 15, SEQ ID NO: 16 or SEQ ID NO: 17.

The modified fibroin of (3-iv) includes an amino acid sequence having a sequence of identity of 80% or more, preferably 85 % or more, more preferably 90 % or more, and most preferably 95 % or more, with respect to the amino acid sequence set forth in SEQ ID NO: 13, SEQ ID NO: 15, SEQ ID NO: 16 or SEQ ID NO: 17. The modified fibroin of (3-iv) is also a protein having a domain sequence represented by Formula I: [(A)ₙ motif-REP]ₘ. The sequence identity is preferably 95 % or more.

It is preferred that the modified fibroin of (3-iv) has a sequence identity of 80% or more, preferably 85 % or more, more preferably 90 % or more, and most preferably 95 % or more, with respect to the amino acid sequence set forth in SEQ ID NO: 13, SEQ ID NO: 15, SEQ ID NO: 16 or SEQ ID NO: 17, and that x/y is 64.2% or more in which x represents the maximum value obtained by sequentially comparing the number of amino acid residues in REPs of two adjacent [(A)ₙ motif-REP] units from the N-terminal side to the C-terminal side, and then adding together the numbers of amino acid residues in all pairs of adjacent [(A)ₙ motif-REP] units which are identified as those where when the number of amino acid residues in an REP having a smaller number of amino acid residues is defined as 1, a ratio of the number of amino acid residues in the other REP thereto is 1.8 to 11.3 (Giza ratio is 1 : 1.8 to 1 : 11.3), and the total number of amino acid residues of the domain sequence is defined as y.

The above-mentioned modified fibroin may include a secretory signal for releasing the protein produced in the recombinant protein production system to the outside of a host. The sequence of the secretory signal can be appropriately set depending on the type of the host.

In the modified fibroin of the fourth embodiment, the domain sequence has an amino acid sequence in which the content of glycine residues is reduced in addition to having a reduced content of the (A)ₙ motif as compared to the naturally derived fibroin. The domain sequence of the modified fibroin can have an amino acid sequence equivalent to an amino acid sequence in which one or a plurality of glycine residues in REP is substituted with another amino acid residue, as well as at least one or a plurality of (A)ₙ motifs is deleted, as compared to the naturally derived fibroin. That is, the modified fibroin has features of the modified fibroin according to both the second and third embodiments. The specific embodiments thereof are as described in the second and third embodiments.

A more specific example of the modified fibroin according to the fourth embodiment may be a modified fibroin including (4-i) an amino acid sequence set forth in SEQ ID NO: 9, SEQ ID NO: 10 or SEQ ID NO: 11, or (4-ii) an amino acid sequence having a sequence identity of 80% or more, preferably 85 % or more, more preferably 90 % or more, and most preferably 95 % or more, with respect to the amino acid sequence set forth in SEQ ID NO: 9, SEQ ID NO: 10 or SEQ ID NO: 11. The specific embodiments of the modified fibroin including the amino acid sequence set forth in SEQ ID NO: 9, SEQ ID NO: 10 or SEQ ID NO: 11 are as described above.

### <Method for producing protein>

The protein according to the present embodiment can, for example, be produced by employing a host transformed with an expression vector having a nucleic acid sequence encoding the protein and one or more regulatory sequences operably linked to such nucleic acid sequence, and then expressing the nucleic acid.

A method for producing the nucleic acid encoding the protein is not particularly limited. For example, the nucleic acid can be produced by a method of employing a gene encoding a natural fibroin to perform amplification and cloning via a polymerase chain reaction (PCR), and then carry out modification via genetic engineering techniques; or a method of chemically synthesizing the same. The chemical synthesis method of the nucleic acid is also not particularly limited. For example, based on the amino acid sequence information of a protein obtained from a web database etc. such as NCBI, a gene can be chemically synthesized by a method of linking, via PCR or the like, an oligonucleotide automatically synthesized with, for example, AKTA oligopilot plus 10/100 (GE Healthcare Japan Co., Ltd.). At that time, in order to facilitate the purification and/or confirmation of the protein, there may also be synthesized a nucleic acid encoding a protein consisting of an amino acid sequence prepared by adding to the N-terminal of the above amino acid sequence an amino acid sequence consisting of a start codon and a His10-tag.

The regulatory sequence is a sequence (for example, a promoter, an enhancer, a ribosome binding sequence, or a transcription termination sequence) that controls the expression of a modified fibroin in a host, and can be appropriately selected depending on the type of the host. As a promoter, there may be used an inducible promoter functioning in a host cell, and capable of expressing and inducing a modified fibroin. The inducible promoter is a promoter capable of controlling transcription due to the presence of an inducer (expression inducing agent), the non-presence of a repressor molecule, or physical factors such as an increase or decrease in temperature, osmotic pressure or pH value.

The type of the expression vector such as a plasmid vector, a viral vector, a cosmi d vector, a fosmid vector, or an artificial chromosome vector may be appropriately selected depending on the type of the host. As such expression vector, an expression vector whic h can autonomously replicate in a host cell or can be incorporated into a chromosome of a host and which contains a promoter at a position capable of transcribing the nucleic acid encoding the protein is suitably used.

Both the prokaryotes and the eukaryotes such as yeast, filamentous fungi, insect cells, animal cells, and plant cells may be suitably used as hosts.

Preferred examples of the prokaryote include microorganisms belonging to the genus Escherichia, Brevibacillus, Serratia, Bacillus, Microbacterium, Brevibacterium, Corynebacterium and Pseudomonas. Examples of the microorganisms belonging to the genus Escherichia include Escherichia coli. Examples of the microorganisms belonging to the genus Brevibacillus include Brevibacillus agri. Examples of the microorganisms belonging to the genus Serratia include Serratia liquefaciens. Examples of the microorganisms belonging to the genus Bacillus include Bacillus subtilis. Examples of the microorganisms belonging to the genus Microbacterium include Microbacterium ammoniaphilum. Examples of the microorganisms belonging to the genus Brevibacterium include Brevibacterium divaricatum. Examples of the microorganisms belonging to the genus Corynebacterium include Corynebacterium ammoniagenes. Examples of the microorganisms belonging to the genus Pseudomonas include Pseudomonas putida.

If the host is a prokaryote, the vector for introducing a nucleic acid encoding the p rotein may include, for example, pBTrp2(Boehringer Ingelheim GmbH), pGEX(Pharmacia), p UC18, pBluescriptII, pSupex, pET22b, pCold, pUB110, pNCO2 (Japasese Unexamined Paten t Application Publication NO. 2002-238569)

Examples of the eukaryotic hosts include yeast, filamentous fungi (mold and the like), and insect cells. Examples of the yeast include yeasts belonging to the genus Saccharomyces, Pichia, Schizosaccharomyces, and the like. Examples of the filamentous fungi include fungi belonging to the genus Aspergillus, Trichoderma and Penicillium.

If the host is a eucaryote, the vector for introducing a nucleic acid encoding the m odified protein may include, for example, YEP13 (ATCC37115) and YEp24 (ATCC37051). As a method for introducing an expression vector into the foregoing host cell, any method can be used as long as it introduces DNA into the host cell. Examples thereof include a method using calcium ions [Proc. Natl. Acad. Sci. USA, 69, 2110 (1972)], electroporation technique, spheroplast technique, protoplast, a technique using lithium acetate, and competent method or the like.

As for the expression method of the nucleic acid by means of the host transformed with the expression vector, secretory production, fusion protein expression, or the like, in a ddition to the direct expression, can be carried out according to the method described in M olecular Cloning, 2nd edition.

The protein can be produced, for example, by culturing a host transformed with the expression vector in a culture medium, producing and accumulating the protein in the culture medium, and then collecting the protein from the culture medium. The method for culturing the host in the culture medium can be carried out according to the method commonly used for culturing a host.

In the case where the host is a prokaryote such as Escherichia coli or a eukaryote such as yeast, any of a natural medium and a synthetic medium may be used as a culture medium of the host as long as it contains a carbon source, a nitrogen source, inorganic salts and the like which can be assimilated by the host and it is capable of efficiently culturing the host.

As the carbon source, any carbon source that can be assimilated by the transformed microorganism may be used. Examples of the carbon source that can be used include carbohydrates such as glucose, fructose, sucrose, and molasses containing them, carbohydrates such as starch and starch hydrolyzates, organic acids such as acetic acid and propionic acid, and alcohols such as ethanol and propanol. Examples of the nitrogen source that can be used include ammonium salts of inorganic or organic acids such as ammonia, ammonium chloride, ammonium sulfate, ammonium acetate and ammonium phosphate, other nitrogen-containing compounds, as well as peptone, meat extract, yeast extract, corn steep liquor, casein hydrolyzate, soybean cake and soybean cake hydrolyzate, various fermented microbial cells and digested products thereof. Examples of the inorganic salt that can be used include potassium dihydrogen phosphate, dipotassium phosphate, magnesium phosphate, magnesium sulfate, sodium chloride, ferrous sulfate, manganese sulfate, copper sulfate, and calcium carbonate.

Culture of a prokaryote such as Escherichia coli or a eukaryote such as yeast can be carried out under aerobic conditions such as shaking culture or deep aeration stirring cul ture. The culture temperature is, for example, 15 °C to 40 °C. The culture time is usuall y 16 hours to 7 days. It is preferable to maintain the pH of the culture medium at 3.0 to 9.0 during the culture. The pH of the culture medium can be adjusted using an inorganic acid, an organic acid, an alkali solution, urea, calcium carbonate, ammonia, or the like.

In addition, antibiotics such as ampicillin and tetracycline may be added to the culture medium as necessary during the culture. In the case of culturing a microorganism transformed with an expression vector using an inducible promoter as a promoter, an inducer may be added to the medium as necessary. For example, in the case of culturing a microorganism transformed with an expression vector using a lac promoter, isopropyl-p-D-thiogalactopyranoside or the like is used, and in the case of culturing a microorganism transformed with an expression vector using a trp promoter, indole acrylic acid or the like may be added to the medium.

The modified protein can be isolated and purified by a method commonly used. For example, in the case where the protein is expressed in a dissolved state in cells, the host cells are recovered by centrifugation after completion of the culture, suspended in an aqueous buffer solution, and then disrupted using an ultrasonicator, a French press, a Manton-Gaulin homogenizer, a Dyno-Mill, or the like to obtain a cell-free extract. From the supernatant obtained by centrifuging the cell-free extract, a purified preparation can be obtained by a method commonly used for protein isolation and purification, that is, a solvent extraction method, a salting-out method using ammonium sulfate or the like, a desalting method, a precipitation method using an organic solvent, an anion exchange chromatography method using a resin such as diethylaminoethyl (DEAE)-Sepharose or DIAION HPA-75 (manufactured by Mitsubishi Kasei Kogyo Kabushiki Kaisha), an cation exchange chromatography method using a resin such as S-Sepharose FF (Pharmacia Corporation), a hydrophobic chromatography method using a resin such as butyl sepharose or phenyl sepharose, a gel filtration method using a molecular sieve, an affinity chromatography method, a chromatofocusing method, an electrophoresis method such as isoelectric focusing or the like, alone or in combination thereof.

In the case where the protein is expressed by the formation of an insoluble matter in the cell, similarly, the host cells are recovered, disrupted and centrifuged to recover the i nsoluble matter of the protein as a precipitated fraction. The recovered insoluble matter of the protein can be solubilized with a protein denaturing agent. After this operation, a puri fied preparation of protein can be obtained by the same isolation and purification method a s described above. In the case where a protein is secreted extracellularly, the protein can be recovered from the culture supernatant. That is, a culture supernatant is obtained by tre ating the culture by a technique such as centrifugation, and a purified preparation can be o btained from the culture supernatant by using the same isolation and purification method as described above.

### (2) Polypeptide and polyamino acid having β-sheet structure

In the composite molding composition of the present invention, the above embodiment is to add a polypeptide or a polyamino acid each having a β-sheet structure. In this case, polyalanine may be listed as an example of the polyamino acid.

The polyalanine can be selected from a linear polyalanine (L-polyAla) or a telechelic polyalanine (T-polyAla). The linear polyalanine can be produced by an enzyme chemical polymerization method, and produced and used based on a known literature (Baker P J et al., Biomacromolecules 2012, 13, 947-951). Moreover, as described in the following working examples, the telechelic polyalanine can be produced by an enzyme chemical polymerization method, which is also described in Tsuchiya K et al, Macromol. Biosci. 2016, 1001-1008.

### (3) Production of composite molding composition containing fibroin; and polypeptide and/or polyamino acid having β-sheet structure

In this specification, "polypeptide having a β-sheet structure" herein refers to any polypeptide having a β-sheet structure in its two-dimensional structure. Such polypeptide may include both natural and artificially produced polypeptide, where an artificially produced polypeptide is preferred, and a polypeptide having the following sequence of polyamino acid is more preferred.

In this specification, a "polyamino acid" herein refers to an amino acid polymer of a high molecular weight that is obtained via one step of a polymerization reaction while using an amino acid or a derivative thereof as a monomer.

Further, a polyamino acid having a β-sheet structure herein refers to any polyamino acid that is artificially produced and is a polymer of L- or D- amino acid having a β-sheet structure in its two-dimensional structure. Preferable examples of such polyamino acid include homopolyamino acids and derivatives thereof that are selected from polyalanine, polyphenylalanine, polycysteine, polyvaline, polyleucine, polyisoleucine, polytyrosine, polytryptophan, polyglutamine, polymethionine and their derivatives. Other than these homopolyamino acids and their derivatives, there may also be employed polyamino acids consisting of copolymers of multiple kinds, preferably 2 to 5 kinds, more preferably 2 to 4 kinds, and even more preferably 2 or 3 kinds of amino acids that are selected from amino acids such as alanine, phenylalanine, cysteine, valine, leucine, isoleucine, tyrosine, tryptophan, glutamine, methionine and their derivatives. These polyamino acids can, for example, be produced by a known method such as chemical enzymatic polymerization (Numata K. et al., Polymer Journal, 2015; 47: 537-545 and Baker J.P. et al., Biomacromolecules 2012, 13, 947- 951 etc.). The polymerization degree of the polyamino acid is in a range of 2 to 100, preferably in a range of 5 to 50, more preferably from 10 to 30, and most preferably in a range of 10 to 20.

In this specification, the structures of polyamino acids, polypeptides and proteins are represented by the three-letter or one-letter notation for amino acids that is conventionally known to those skilled in the art. In this specification, amino acids are in the L-form unless otherwise indicated.

The nano-granular structure - one of the structures composing a spider thread-derived silk, especially a small granular structure composing nano fibrils - refers herein to a structure having a granular form of a high aspect ratio, containing a large amount of glycine and alanine unique to silk, and being mainly composed of a peptide or polypeptide having a β-sheet structure. In the case of the spider silk thread of Nephila edulis, it has been reported that this thread has 17%±4% of the β-sheet structure (Ling S et al, Biomacromolecules, 2011, 12, 3344-3349). In addition, the strongest spider dragline fiber has been reported to have 45 to 65% of a β sheet domain (Vollrath F, et al., Polymer, 2009, 50, 5623-5632).

There, the composite molding composition of the invention can be produced by preparing a dope solution obtained by mixing and dissolving a polypeptide or polyamino acid containing a large amount of β-sheet structure into a fibroin-like protein as a raw material, and then forming, for example, a composite fiber, a composite film, a composite gel, a composite porous body, a composite particle(s) and a composite molded body.

When producing a composite film, a method for producing a film by using a fibroin-derived protein as a raw material is described in International Publication WO2014/103799, and the composite film can basically be produced by this method. When producing a composite fiber, a method for spinning fibers from a fibroin-derived protein is described in International Publication WO2012/165476, and the composite fiber can basically be produced according to this method. When producing a composite gel, a method for producing a gel from a fibroin-derived protein is described in International Publication WO2014/175177, and the composite gel can basically be produced according to this method. Further, when producing a composite porous body, a method for producing a porous body from a fibroin-derived protein is described in International Publication WO2014/175178, the composite porous body can basically be produced according to this method. Furthermore, when producing a composite particle(s), a method for producing a particle(s) from a fibroin-derived protein is described in International Publication WO2014/175179, the composite particle(s) can basically be produced according to this method. Furthermore, when producing a composite molded body, a method for producing a molded body from a fibroin-derived protein is described in the specification of Japanese Patent Application No. 2015-185777, and the composite molded body can basically be produced according to this method.

When the composite molding composition is a composite film produced using the above dope solution, a coating method may be that generally known in this field, such as a casting method, spin-coating method, a dipping method, a spray coating method, an electric field polymerization method, an evaporation method, a vapor-deposition polymerization method, a brush coating method, a blade coating method, a roller coating method, a gravure coating method and a roll-to-roll method.

Further, in the case of performing spinning using the dope solution obtained by adding to the fibroin-derived protein the polypeptide and/or polyamino acid having the β-sheet structure, a fibroin-derived composite fiber can be produced by changing environment-related elements of a fibroin-derived polypeptide fiber such as spider thread, while applying a shearing stress in the spinning process, such environment-related elements being, for example, pH of the dope solution, the type and concentration of a salt, and humidity or water concentration. By varying one or more of these elements, or by blending and changing a plurality of elements, there can be produced a fibroin-derived composite fiber. As a method for producing the fibroin-derived composite fiber of the present invention, there can be specifically listed known spinning methods such as a wet spinning method, a dry spinning method, a wet-dry spinning method and a melt spinning method.

In the embodiment of the present invention, when using a wet spinning method or a dry-wet spinning method, a fibroin-derived peptide fiber can be produced by adding a coagulant to the dope solution while applying a shear stress in a fiber axial direction; or by injecting, pushing out or immersing the dope solution into a solvent containing a coagulant.

A coagulant used in a wet spinning method and a dry-wet spinning method is not particularly limited, as long as it is capable of removing from the dope solution a solvent with which a fibroin-derived protein or the like has been dissolved (also referred to as desolventizing). For example, the coagulant may be a lower alcohol having 1 to 5 carbon atoms, such as methanol, ethanol and 2-propanol; or acetone and the like. Further, there may also be used an aqueous solution containing an inorganic salt. This inorganic salt aqueous solution is preferably a weakly acidic to acidic solvent.

For example, when producing a composite molded body, a protein-containing composition (containing only protein or other ingredients as well) is introduced into a mold of a press molding machine, followed by heating the mold and pressurizing the composition. Heating and pressurizing is then continued under a given pressure until the protein powder has reached a given temperature, thereby obtaining a heated and pressurized composition. Next, a cooler (e.g. spot cooler) is used to lower the temperature of the mold, and the content is then taken out to obtain a molded body when the composition has reached a given temperature. Heating is carried out preferably at 80 to 300°C, more preferably 100 to 180°C, and even more preferably 100 to 130°C. Pressurization is preferably carried out at least 5 kN, more preferably at least 10 kN, and even more preferably at least 20 kN. Further, after the given heating and pressurization condition has been met, a time period for continuing the treatment under such condition (heat-retaining condition) is preferably 0 to 100 minutes, more preferably 1 to 50 minutes, and even more preferably 5 to 30 minutes.

For example, when producing a resin, the resin of the present invention can be produced by preparing a dope solution obtained by dissolving or suspending the above composition of the invention in a solvent, and then insolubilizing the protein in such dope solution with a conventional method publically known to those skilled in the art. As the solvent, there can be used, for example, water or a polar organic solvent; or a mixed solvent thereof. As a method for insolubilizing the protein of the present invention, there may be employed, for example, methods of distilling way the solvent in the dope solution, changing the kind and/or concentration of the salt in the solvent, changing ionic strength or salt concentration and/or changing pH.

In the present specification, the "dope solution" refers to a solution prepared by mixing and dissolving a fibroin-derived protein and a polypeptide and/or polyamino acid having a β-sheet structure serving as raw materials for producing a composite molding composition such as a composite fiber and a composite film.

The polar organic solvent used in the dope solution may be selected from, but is not limited to dimethyl sulfoxide, N,N-dimethylformamide, N,N-dimethylacetamide or 1,1,1,3,3,3-hexafluoro-2-propanol (HFIP), formic acid, or even a mixed solution thereof.

Further, the dope solution may further contain an inorganic salt. An inorganic salt may function as a dissolution promoter for protein. Examples of an inorganic salt include alkali metal halides, alkaline-earth metal halides, alkaline-earth metal nitrates and thiocyanates. Specific examples of such inorganic salt include aluminum phosphate, lithium carbonate, aluminum carbonate, aluminum sulfate, aluminum fluoride, ferric acetate, aluminum acetate, zinc hydroxide, magnesium hydroxide, ferrous hydroxide, manganese hydroxide, chromium hydroxide, ferric hydroxide, aluminum hydroxide, nickel chloride, cobalt chloride, zinc chloride, ferrous chloride, manganese chloride, chromium chloride, ferric chloride, aluminum chloride, lithium nitrate, strontium nitrate, nickel nitrate, calcium nitrate, cobalt nitrate, zinc nitrate, magnesium nitrate, ferrous nitrate, manganese nitrate, chromium nitrate, ferric nitrate, aluminum nitrate, lithium bromide, barium bromide, strontium bromide, nickel bromide, calcium bromide, cobalt bromide, zinc bromide, magnesium bromide, ferrous bromide, manganese bromide, chromium bromide, ferric bromide, aluminum bromide, barium chlorate, strontium chlorate, nickel chlorate, calcium chlorate, cobalt chlorate, zinc chlorate, magnesium chlorate, ferrous chlorate, manganese chlorate, chromium chlorate, ferric chlorate, aluminum chlorate, rubidium iodide, sodium iodide, copper iodide, lithium iodide, barium iodide, strontium iodide, nickel iodide, calcium iodide, cobalt iodide, zinc iodide, magnesium iodide, ferrous iodide, manganese iodide, chromium iodide, ferric iodide, aluminum iodide, sodium perchlorate, lead perchlorate, copper perchlorate, lithium perchlorate, barium perchlorate, strontium perchlorate, nickel perchlorate, calcium perchlorate, cobalt perchlorate, zinc perchlorate, magnesium perchlorate, ferrous perchlorate, manganese perchlorate, chromium perchlorate, ferric perchlorate, aluminum perchlorate, potassium thiocyanate, sodium thiocyanate, lead thiocyanate, copper thiocyanate, lithium thiocyanate, barium thiocyanate, strontium thiocyanate, nickel thiocyanate, calcium thiocyanate, cobalt thiocyanate, zinc thiocyanate, magnesium thiocyanate, ferrous thiocyanate, manganese thiocyanate, chromium thiocyanate, ferric thiocyanate, aluminum thiocyanate, ammonium cyanate, cesium cyanate, rubidium cyanate, potassium cyanate, sodium cyanate, lead cyanate, copper cyanate, lithium cyanate, barium cyanate, strontium cyanate, nickel cyanate, calcium cyanate, cobalt cyanate, zinc cyanate, magnesium cyanate, ferrous cyanate, manganese cyanate, chromium cyanate, ferric cyanate and aluminum cyanate. At least one kind of these inorganic salts may be added to the solvent.

The amount of the inorganic salt contained in the dope solution is not particularly limited, but is appropriately determined based on, for example, the kind of the inorganic salt and the amount of the fibroin-derived protein. The amount of the inorganic salt is, for example, 1.0 part by mass or more, 5.0 parts by mass or more, 9.0 parts by mass or more, 15 parts by mass or more or 20 parts by mass or more, per 100 parts by mass of the total amount of protein. Further, the amount of the inorganic salt may, for example, also be 40 parts by mass or less, 35 parts by mass or less, or 30 parts by mass or less, per 100 parts by mass of the total amount of protein.

In this specification, the amount of the polypeptide and/or polyamino acid added to the fibroin-derived protein is expressed as a ratio of the weight of the polypeptide and/or polyamino acid to the total amount of the fibroin-derived protein and the polypeptide and/or polyamino acid added. For example, when the notation is "composite molding composition of polyAla 5 wt%," it indicates that the composition is a composite molding composition prepared by blending the fibroin-derived protein with the polypeptide and/or polyamino acid at a weight ratio (fibroin-derived protein): (polypeptide and/or polyamino acid) of 95:5. Further, in some cases, it is expressed as a ratio by mass.

The composition of the present invention that contains the fibroin and the polypeptide and/or polyamino acid having the β-sheet structure can, for example, be produced by adding an aqueous solution or aqueous suspension of the polypeptide and/or polyamino acid having the β-sheet structure to the dope solution with the fibroin dissolved therein, mixing them, and then carrying out molding and drying. The compounding ratio of the polypeptide and/or polyamino acid having the β-sheet structure is in a range of 0.1 to 50.0%, preferably in a range of 0.5 to 30.0%, more preferably in a range of 1 to 10.0%, and most preferably in a range of 1 to 5%.

When using polyalanine as the polyamino acid having the β-sheet structure, the polymerization degree of the polyalanine is in a range of 2 to 100, preferably in a range of 3 to 50, more preferably in a range of 10 to 30, and most preferably in a range of 10 to 20. Further, the ratio of the polyalanine added is in a range of 0.1 to 30.0%, preferably in a range of 0.5 to 20.0%, more preferably in a range of 1.0 to 10.0%, and most preferably in a range of 3.0 to 5.0%.

### 1-2. Pre-drawn composite molding composition

Another embodiment of the present invention is a pre-drawn composite molding composition. The pre-drawn composite molding composition is produced by allowing the production process of the composite molding composition to further include a process of performing pre-drawing. As compared to a non-drawing composite molding composition, the pre-drawn composite molding composition is capable of bringing about more excellent physical properties.

Specifically, the pre-drawn composite molding composition of this embodiment is a pre-drawn composite molding composition produced by adding the polypeptide and/or polyamino acid having the β-sheet structure to the fibroin-derived protein. This composite molding composition is selected from a fiber or a film, and the pre-drawn composite molding composition is produced by a production method including:
(i) preparing a dope solution in which the fibroin-derived protein and the polypeptide and/or polyamino acid having the β-sheet structure are dissolved;
(ii) molding the composite molding composition from the dope solution; and
(iii) drawing the composite molding composition obtained in the process (ii) in a solvent and then drying the composite molding composition.

By adding the pre-drawing process, physical properties such as tensile strength, strain and/or toughness can be further improved. As an example of such pre-drawing process, there may be employed, for example, wet heat drawing and dry heat drawing.

Wet heat drawing may be carried out in warm water, in a solution prepared by adding an organic solvent or the like into warm water or in an organic solvent, or while performing steam heating. The temperature may, for example, be 50 to 90°C, preferably 75 to 85°C. In wet heat drawing, a non-drawing fiber or film (or a pre-drawing fiber or film) may, for example, be drawn to 1 to 10 times, preferably 1 to 4 times.

Dry heat drawing can be carried out using, for example, an electric tubular furnace and a dry hot plate. The temperature may, for example, be 140 to 270°C, preferably 160 to 230°C. In dry heat drawing, a non-drawing fiber or film (or a pre-drawing fiber or film) may, for example, be drawn to 0.5 to 8 times, preferably 1 to 4 times.

Wet heat drawing and dry heat drawing may be carried out individually or in multiple stages, or even in a combined manner. That is, wet heat drawing and dry heat drawing may be appropriately carried out in a combined manner such that, for example, wet heat drawing is performed as a first stage drawing and dry heat drawing is then performed as a second stage drawing; or wet heat drawing is performed as a first stage drawing and the as a second stage drawing, and dry heat drawing is further performed as a third stage drawing.

From the composite molding composition of the present invention, there can be produced, for example, yarns, sheets, unwoven cloths, meshes and nets employing such composition. By utilizing the excellent properties of these composite molding compositions, such as heat resistance, a high tensile strength, toughness and/or stretchability (degree of elongation), the composition(s) can be utilized in the production of materials requiring high impact resistance, such as bulletproof jackets, parachutes and vehicle bodies of automobiles. Further, the composition(s) may be used as a medical material such as a wound closing material with a high strength, a high stretchability and a high toughness, and utilizing biodegradability as well as biocompatibility; a suture thread; an adhesive plaster; and a scaffold material or the like for use in regenerative medicine.

### 2. Method for producing the composite molding composition of the present invention

### 2-1. Method for producing non-drawing composite molding composition

Another embodiment of the present invention is a method for producing the abovementioned composite molding composition. More specifically, the present invention is a method for producing a composite molding composition that is selected from a fiber, a film and a gel, and is molded by blending a fibroin-derived protein with a polypeptide and/or polyamino acid having a β-sheet structure. This method includes:
(i) preparing a dope solution in which the fibroin-derived protein and the polypeptide and/or polyamino acid having the β-sheet structure are dissolved; and
(ii) producing the composite molding composition by performing spinning from the dope solution or further performing drawing.

As described above, for example, as for the fibroin-derived protein, natural fibroin proteins are commercially available, and can be acquired for use in the present invention. Further, there may be employed a modified fibroin-derived protein produced by using a microorganism into which a DNA artificially prepared by a genetic recombination method has been introduced, and then performing isolated purification. The composition of the present invention can be produced by obtaining the fibroin by these methods, and then separately producing the polypeptide and/or polyamino acid having the β-sheet structure by, for example, a known method such as a chemical enzymatic polymerization method (e.g. Numata K. et al., Polymer Journal, 2015; 47: 537-545 and, Baker J.P. et al., Biomacromolecules 2012, 13, in 947-951 etc.), mixing an aqueous suspension of the polypeptide and/or polyamino acid into a dope solution containing the fibroin-derived protein, and then performing insolubilization via drying or the like.

As a method for such insolubilization, other than a method of performing drying, there may be used a method similar to that described in the method for producing the above composite fiber, specifically, methods of, for example, changing the kind and/or concentration of the salt in the solvent, changing ionic strength or salt concentration and/or changing pH.

Furthermore, even with regard to a material(s) other than the fibroin-derived protein, the production method of the present invention can be carried out by using the various kinds of materials described in detail in the above composite molding composition, and by utilizing them in the manners descried in detail above.

### 2-2. Method for producing pre-drawn composite molding composition

Another embodiment of the present invention is a method for producing the pre-drawn composite molding composition. This method includes:
(i) drawing, in a solvent, the composite molding composition produced by the aforementioned production method; and
(ii) drying the composite molding composition drawn.

By adding the pre-drawing process, physical properties such as tensile strength, strain and/or toughness can be further improved. As an example of such pre-drawing process, there may be employed, for example, wet heat drawing and dry heat drawing.

Wet heat drawing may be carried out in warm water, in a solution prepared by adding an organic solvent or the like into warm water or in an organic solvent, or while performing steam heating. The temperature may, for example, be 50 to 90°C, preferably 75 to 85°C. In wet heat drawing, a non-drawing fiber or film (or a pre-drawing fiber or film) may, for example, be drawn to 1 to 10 times, preferably 1 to 4 times.

Dry heat drawing can be carried out using, for example, an electric tubular furnace and a dry hot plate. The temperature may, for example, be 140 to 270°C, preferably 160 to 230°C. In dry heat drawing, a non-drawing fiber or film (or a pre-drawing fiber or film) may, for example, be drawn to 0.5 to 8 times, preferably 1 to 4 times.

Wet heat drawing and dry heat drawing may be carried out individually or in multiple stages, or even in a combined manner. That is, wet heat drawing and dry heat drawing may be appropriately carried out in a combined manner such that, for example, wet heat drawing is performed as a first stage drawing and dry heat drawing is then performed as a second stage drawing; or wet heat drawing is performed as a first stage drawing and the as a second stage drawing, and dry heat drawing is further performed as a third stage drawing.

From the composite molding composition produced by the production method of the present invention, there can be further produced, for example, yarns, sheets, unwoven cloths, meshes and nets employing such composition. By utilizing the excellent properties of these composite molding compositions, such as heat resistance, a high tensile strength, toughness and/or stretchability, the composition(s) can be utilized in the production of materials requiring high impact resistance, such as bulletproof jackets, parachutes and vehicle bodies of automobiles. Further, the composition(s) may be used as a medical material such as a wound closing material with a high strength, a high stretchability and a high toughness, and utilizing biodegradability as well as biocompatibility; a suture thread; an adhesive plaster; and a scaffold material or the like for use in regenerative medicine.

### 3. Method for improving physical properties of the composite molding composition of the present invention

Another preferred embodiment of the present invention is a method for improving at least one physical property of the composite molding composition produced from a polypeptide such as a fibroin, such physical property being selected from, for example, tensile strength, toughness and stretchability. Examples of the composite molding composition include a composite film, a composite fiber, a composite gel, a composite porous body, a composite particle(s) and a composite molded body that are produced from a polypeptide.

The method for improving the physical properties of the composite molding composition is to, for example, produce a composite molding composition by adding to a molding composition raw material such as a resin, film and fiber a polyamino acid having the β-sheet structure, such as polyalanine. More specifically, for example, in order to produce a composite molding composition such as a composite film, a composite fiber, a composite gel and a composite resin, the polypeptide and/or polyamino acid having the β-sheet structure is added to and mixed with the dope solution with a raw material such as a fibroin dissolved therein, followed by, for example, distilling away the solvent and insolubilizing the polypeptide, thereby obtaining a composite molding composition with improved physical properties, as compared to a molding composition to which the polypeptide and/or polyamino acid having the β-sheet structure is not added.

In this specification, an improvement in a physical property of the composite molding composition is, for example, such that a commercially available tensile tester is obtained, a tensile strength test is then performed to obtain a critical stress observed when a test sample breaks, and the tensile strength is then deemed to have improved if the value of such critical stress is higher than that of a comparative sample. Further, an improvement in toughness is such that the test sample is likewise subjected to measurement using the tensile tester, and the toughness is then deemed to have improved when the value of an area defined by the curve in a stress-strain curve diagram is higher than an area value observed with the comparative sample. Furthermore, an improvement in stretchability is such that the test sample is likewise subjected to tensile testing using the tensile tester, a strain (rate of elongation) of the test sample as it breaks is then obtained, and the stretchability is then deemed to have improved when the value of the rate of elongation of the test sample as it breaks is higher than the strain of the comparative sample as it breaks, such strain of the comparative sample being obtained by carrying out the measurement under similar conditions.

In the method of the present invention, the polyamino acid used may be a polyamino acid capable of easily forming the β-sheet structure; more specifically, it may, for example, be polyalanine and polycysteine. These polyamino acids may be produced by a known method such as chemical enzymatic synthesis (e.g. Numata K. et al., Polymer Journal, 2015; 47: 537-545, and, Baker J.P. et al., Biomacromolecules 2012, 13, 947-951).

For example, the invention is implemented by adding polyalanine to the molding composition raw material composed of the fibroin-derived polypeptide. If improving the physical properties of the composite molding composition, a polyalanine is to be added to the dope solution in a way such that the polymerization degree of the polyalanine is in a range of 2 to 100, preferably in a range of 3 to 50, more preferably in a range of 10 to 30, and most preferably in a range of 10 to 20, and that the ratio of the polyalanine added is in a range of 0.1 to 30.0%, preferably in a range of 0.5 to 20.0%, more preferably in a range of 1.0 to 10.0%, and most preferably in a range of 3.0 to 5.0%.

By using the method of the present invention, there can be produced, for example, yarns, sheets, unwoven cloths, meshes and nets with further improved physical properties. By utilizing the excellent properties of these composite molding compositions, such as heat resistance, a high tensile strength, toughness and/or stretchability, the composition(s) may be utilized in the production of materials requiring high impact resistance, such as bulletproof jackets, parachutes and vehicle bodies of automobiles. Further, the composition(s) may be used in the production of a medical material such as a wound closing material with a high strength, a high stretchability and a high toughness, and utilizing biodegradability as well as biocompatibility; a suture thread; an adhesive plaster; and a scaffold material or the like for use in regenerative medicine.

Here, all the documents mentioned in this specification are incorporated herein by reference in their entirety.

### Examples

The embodiments of the present invention described below are for illustrative purposes only and shall not limit the technical scope of the present invention. The technical scope of the present invention is limited only by the recitation of the claims. Modifications of the present invention, for example, addition, deletion, and replacement of the constituent features of the present invention may be made provided that the gist of the present invention is not deviated.

### Example 1

### Production of composite molding films containing polyalanine (L-polyAla or T-polyAla) in naturally derived silkworm fibroin protein or modified spider thread fibroin protein, and evaluation of physical properties thereof

### 1. Production of composite molding films containing polyalanine in naturally derived silkworm fibroin protein

PolyAla (L-polyAla or T-polyAla) was synthesized using a method described below, and then the polyalanine (containing 5 or 10 wt% of L-polyAla, or 1 or 2.5 wt% of T-polyAla), produced by the method as described below, and a naturally derived silkworm fibroin protein (Bombix mori) was dissolved therein to prepare a dope solution from which a composite molding film was produced by the casting method. The composite molding film was subject to tensile deformation test to evaluate the changes in physical properties.

The tensile deformation test was conducted using a compact table-top tester (EZ -LX, Shimadzu Corp., Kyoto). Original length of the material was 15.0 mm, which was drawn at a constant rate of 0.5 mm/min. The results were recorded and analyzed by TRAPEZIUM (ver. 1.3.0, Shimadzu Corp., Kyoto). The measurements were carried out at 58% humidity at room temperature.

### 2. Production of polyAla (L-polyAla or T-polyAla)

### (1) Synthesis of telechelic-type polyalanine (T-polyAla)

### (i) Synthesis using leucine initiator (Leu-initiator)

### (a) Synthesis of leucine initiator (Leu-initiator)

The synthesis of the telechelic-type polyalanine using leucine initiator mas made by chemoenzymatic polymerization using papain. Specifically, L-leucine ethyl ester hydrochloride (6.07 g), triethylamine (9.2 mL), and diethyl ether (100 mL) were added to a flask at 0 °C under nitrogen. To this solution was added a solution of succinyl chloride (1.7 mL) in diethyl ether (50 mL) dropwise over 30 min, and the resulting mixture was stirred at 0 °C for 2 h. After the mixture was allowed to warm to room temperature, water was added, and the aqueous layer was extracted with diethyl ether. The organic layer was dried with sodium sulfate and concentrated. The crude product was dried in vacuo, and recrystallized with hexane/ethyl acetate (5/1 in volume) to afford 3.57g of yellow needle-like crystals (60% yield).

### (b) Synthesis of telechelic-type polyalanine by Chemoenzymatic Polymerization

To a glass tube, alanine ethyl ester hydrochloride (0.645 g), the leucine initiator (0.080 g), phosphate buffer (2 mL, 1 M, pH = 8.0), and ethanol (1 mL) were added, and the mixture was stirred at 40 °C until all the substrates were completely dissolved. To this solution was added a solution of papain (0.300 g) in phosphate buffer (2.2 mL) in one portion. The final concentrations of alanine and papain were 0.7 M and 50 mg/mL, respectively. The mixture was stirred at 40 °C for 6 h. After cooling to room temperature, the precipitate was collected by centrifuging at 7000 rpm for 10 min at 4 °C. The crude precipitate was washed twice with deionized water and lyophilized to provide 0.071 g of the oligopeptide as a white solid.

### (ii) Synthesis of telechelic-type polyalanine using Bis (alanine ethyl ester) initiator

### (a) Synthesis of Bis(alanine ethyl ester) initiator

To a 200 mL flask, alanine ethyl ester hydrochloride (4.76 g), triethylamine (9.2 mL), and chloroform (100 mL) were added. To this mixture, a solution of succinyl chloride (1.7 mL) in chloroform (50mL) was added dropwise at 0 °C under nitrogen atmosphere. The resulting solution was stirred at 0 °C for 2 h, and the reaction was quenched by the addition of water. The mixture was washed with water, sodium bicarbonate aq. (1 M), and brine. The organic layer was dried with sodium sulfate and concentrated. The crude product was recrystallized using hexane/ethyl acetate to afford 3.58 g of white needle-shaped crystal (76% yield). The results of the infrared absorption spectrum and NMR spectrum measurement, as well as those of combustion element analysis, are provided as follows: Infrared(IR) (neat): v = 3301, 2991, 1729, 1639, 1545, 1356, 1238, 1204,1168, 1020 cm⁻¹. ¹H NMR (500 MHz, CDCl₃, 25 °C, ppm): δ 6.66(s, 2H), 4.53 (m, 2H) 4.20 (q, J = 7.1 Hz, 4H), 2.57 (m, 4H), 1.40 (d,J = 7.1 Hz, 6H), 1.28 (t, J = 7.1 Hz, 6H). ¹³C NMR (125 MHz,CDCl₃, 25 °C): δ 173.16, 171.73, 61.37, 48.18, 31.55, 17.97, 14.04.Anal. Calcd for C₁₄H₂₄N₂O6: C, 53.15; H, 7.65; N, 8.86. Found: C, 53.08; H, 7.61; N, 8.85.

### (b) Synthesis of T-polyA by Chemoenzymatic Polymerization

To a 10 mL glass tube, alanine ethyl ester hydrochloride (0.922 g), the Bis(alanine ethyl ester) initiator (0.190 g), phosphate buffer (2.0 mL, 1 M, pH 8.0), and tetrahydrofuran (1.0 mL) were added, and the mixture was stirred at 40 °C until all substrates were completely dissolved. Then, a solution of papain (0.300 g) in phosphate buffer (2.0 mL) was added in one portion. The final concentrations of alanine ethyl ester and papain were 1 M and 50 mg/ mL, respectively. The mixture was stirred at 40 °C for 6 h. After cooling to the room temperature, the precipitate was collected by centrifugation at 7000 rpm and 4 °C for 10 min. The crude product was washed twice with deionized water and methanol and lyophilized to afford a 0.221g of white powder (61%).

### (2) Production of Linear polyalanine

Linear polyalanine (L-polyA) was also synthesized using a procedure similar to that of Telechelic-Type Polyalanine (T-polyAla) except for the condition of no Bis(alanine ethyl ester) Initiator.

### (3) Measurements on average polymerization degree and average molecular weight of polyalanine

Average molecular weights of the resultant L-polyAla and T-polyAla were measured using NMR (Varian NMR System 500, Varian Medical Systems, Palo Alto, CA, the United States of America) and then calculated. The L-polyAla had the average degree of polymerization of 5.8 and the average molecular weight of 531 while the T-polyAla had the average degree of polymerization of 5.9, and the average molecular weight of 593.

Examples of synthesis for such telechelic-type polyalanine (T-polyAla) are described in detail in e.g., Tsuchiya (Tsuchiya K. et.al, Macromol. Biosci. 2016, 16, 1001-1008).

### 3. Production of modified spider thread fibroin protein and composite films doped with polyAla

As a modified spider thread fibroin protein, a recombinant spider silk protein (ADF3KaiLargeNRSH1 of SEQ ID NO 4 and ADF3Kai_noNR of SEQ ID NO.18) was produced by a disclosed method (JP2014-129639) to be used in the production of the composite molding film.

The modified spider thread fibroin protein was used to produce a composite film of the modified spider thread fibroin protein by the casting method similar to the method for producing the composite film of the naturally derived silkworm fibroin protein.

### 4. Tensile deformation test of the composite film

Tensile deformation test was conducted for the above composite films by a method similar to the method for producing the composite films of the naturally derived fibroin protein.

### 5. Production of pre-drawn composite films and tensile deformation test thereof

A composite film of the above-described silk (the naturally derived fibroin protein or the modified fibroin protein) doped with polyAla (L-polyAla or T-polyAla) was used to conduct a tensile deformation test for the pre-drawn composite films produced by pre-drawing the films by using the method described below.

Three types of silk films of pure silk, T-polyAla-doped silk, and L-polyAla-doped silk were cut into small pieces (3 mm x 15 mm), which were then immersed in methanol for 5 min and slowly pre-drawn using a uniaxial film stretcher (IMC-1A11, Imoto Machinery Co., Ltd., Tokyo) to a length of 1.25-fold, 1.5-fold, 1.75-fold, or 2-fold (drawing ratios were 25, 50, 75, or 100%, respectively). The pre-drawn films were fixed on a glass Petri dish using double-sided tape and dried in a desiccator at room temperature under vacuum for 3 h. Each pre-drawn film underwent mechanical measurements on the tensile properties using a tensile tester (compact desktop tester, EZ Test series, EZ-LX HS of Shimadzu Corporation, Kyoto, Japan) at a drawing rate of 0.5 mm/ min at 25 °C at 55 to 60% relative humidity to calculate the maximum tensile strength, strain (elongation at break) and toughness from the obtained stress-strain curves. Five replicates underwent measurement for each measurement to determine the averaged values and standard deviations.

### 6. Wide Angle X-ray Diffraction (WAXD) measurements

The Wide Angle X-ray Diffraction (WAXD) for the silk-only films and polyAla containing film, with the pre-drawing ratio of 100%, were performed using the BL45XU beamline (SPring-8, Harima)

### 7. Results

### (1) Results on tensile deformation tests for the composite film of the naturally derived silkworm fibroin protein

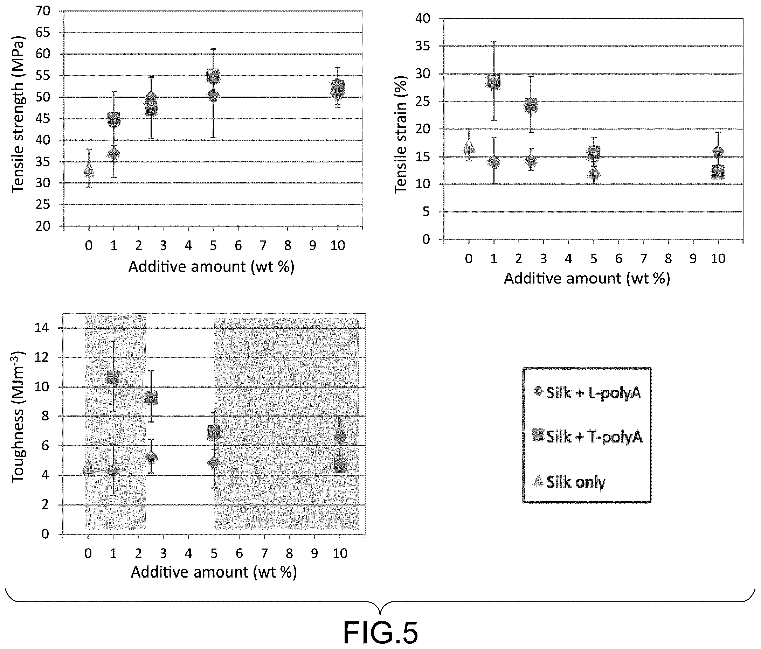

Tables 1 and 2 and FIG. 5 show the results thereof on the physical properties of the film produced by doping the naturally derived silkworm fibroin protein with 5 or 10 wt% of linear polyalanine (L-polyAla) or 1 or 2.5 wt% of telechelic-type polyalanine (T-polyAla) when the films are not drawn.

The naturally derived silkworm fibroin protein doped with 5wt% of linear polyalanine (L-polyAla) showed improvements in tensile stress, strain, and toughness.

**[Table 1]**

| Physical properties of the film produced by doping the silkworm fibroin protein (Bombyx mori) with 5 or 10 wt% of linear polyalanine (L-polyAla) when the films are not stretched | | | |
|---|---|---|---|
| Sample | A:Control group(undoped) | B:L-polyA 5% | C:L-polyA 10% |
| Tensile strength [MPa] | 65.6 ± 4.5 | 71.7 ± 7.8 | 78.7 ± 4.2 |
| Strain[%] | 102.5 ± 17.6 | 113.9 ± 37.5 | 80.8 ± 31.1 |
| Tough ness [MJm⁻³] | 61.1 ± 10.7 | 71.4 ± 33.1 | 62.5 ± 31.2 |

**[Table 2]**

| Physical properties of the film produced by doping the silkworm fibroin protein (Bombyx mori) with 1wt% or 2.5 wt% of telechelic-type polyalanine (T-polyAla) when the films are not stretched | | | |
|---|---|---|---|
| Sample | A:Control group(undoped) | B:T-PolyA 1% | C:T-polyA 2.5% |
| Tensile strength [MPa] | 65.6 ± 4.5 | 66.5 ± 10.2 | 69.0 ± 11.2 |
| Strain[%] | 102.5 ± 17.6 | 107.4 ± 17.7 | 78.7 ± 14.3 |
| Toughness [MJm⁻³] | 61.1 ± 10.7 | 63.4 ± 17.7 | 44.1 ± 6.3 |

### (2) Comparison of physical properties of the composite films of the naturally derived silkworm (Bombyx mori) fibroin protein and that of the modified spider thread fibroin protein

Tensile deformation test was conducted on a composite film (see Tables 3 and 5) of silkworm (Bombyx. mori fibroin) fibroin doped with 5 wt% of L-polyAla or 1wt% of T-polyAla and on a composite film (see Tables 4 and 6) of modified spider thread fibroin protein doped with 10 wt% of L-polyAla or 1wt% of T-polyAla to make a comparison of the physical properties.

The composite film of silkworm fibroin doped with 5 wt% of L-polyAla showed 11.1% increase in strain and 16.9 % increase in toughness. Further, the composite film of modified spider thread fibroin protein (ADF Kai-noNR) doped with 1 wt% of T-polyAla showed 66.8% increase in strain and 133% increase in toughness, exhibiting a remarkable improvement in the physical properties.

**[Table 3]**

| Strain [%]: Silkworm silk fibroin (Bombyx.mori fibroin) | | |
|---|---|---|
| Additive | Composite film | Control group (undoped) |
| L-polyA 5 wt% | 113.9 ± 37.5 (Increment: 11.1%) | 102.5 ± 17.6 |
| T-polyA 1wt% | 107.4 ± 17.7 (Increment: 4.8%) | |

**[Table 4]**

| Strain [%] : Modified spider silk fibroin (ADF3 Kai-noNR) | | |
|---|---|---|
| Additive | Composite film | Control group (undoped) |
| L-polyA 10 wt% | 16.1 ± 3.3 (Increment: -6.4%) | 17.2 ± 2.9 |
| T-polyA 1wt% | 28.7 ± 7.1 (Increment :66.8%) | |

**[Table 5]**

| Toughness [MJm⁻³] : Silkworm silk fibroin (Bombyx.mori fibroin) | | |
|---|---|---|
| Additive | Composite film | Control group (undoped) |
| L-polyA 5 wt% | 71.4 ± 33.1 (Increment: 16.9%) | 61.1 ± 10.7 |
| T-polyA 1wt% | 63.4 ± 17.7 (Increment: 3.8%) | |

**[Table 6]**

| Toughness [MJm⁻³] : Modified spider silk fibroin (ADF3 Kai-noNR) | | |
|---|---|---|
| Additive | Composite film | Control group (undoped) |
| L-polyA 10 wt% | 6.70 ± 1.33 (Increment: 45.9%) | 4.59 ± 0.34 |
| T-polyA 1wt% | 10.71 ± 2.38 (Increment: 133%) | |

### (3) Results of tensile deformation tests for pre-drawn composite films

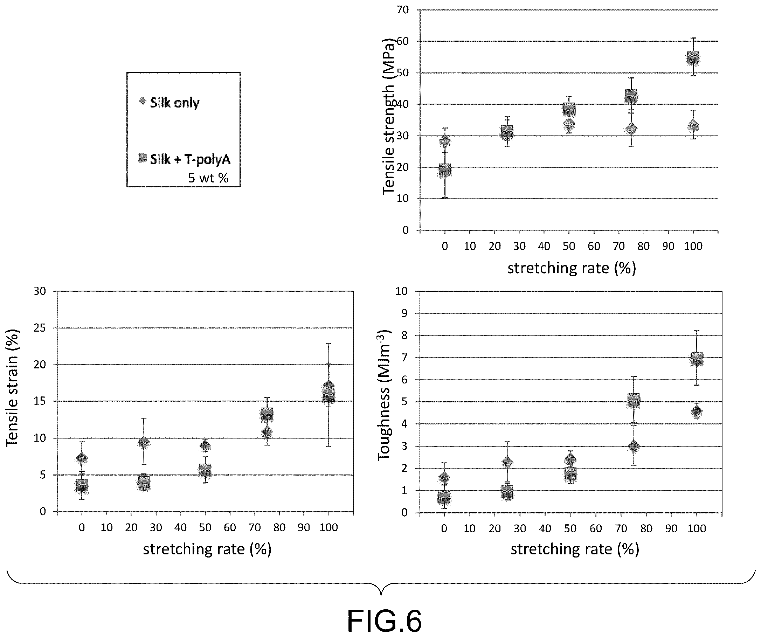

FIG. 6 shows results of tensile deformation tests conducted for composite films made by doping 5% of telechelic-type polyalanine (T-polyAla) and then being loaded with a pre-drawing having 0, 25, 50, 75 or 100% of the drawing ratio in the process of making the composite films. The pre-drawing process for composite films doped with telechelic-type polyalanine exhibited a more clear increase in tensile strength, strain, and toughness as compared to those not doped with telechelic-type polyalanine (see FIG. 6).

### (4) Result of Wide Angle X-ray Diffraction (WAXD) measurements

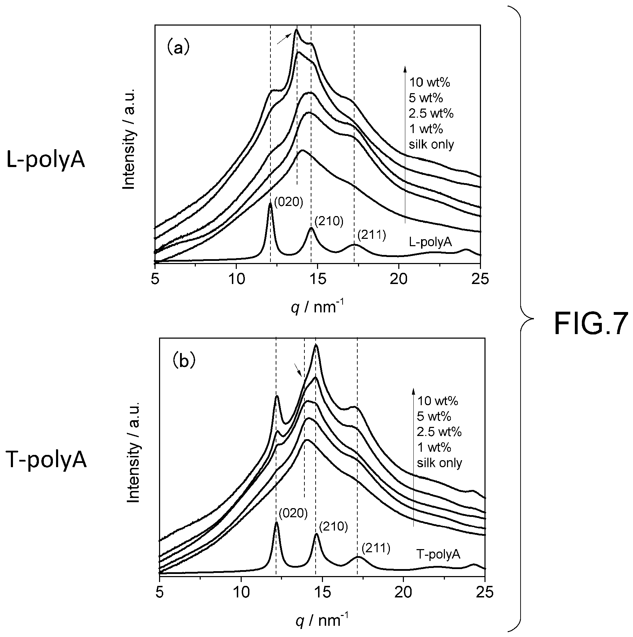

FIGs. 7A and 7B show results on WAXD for pre-drawn composite films doped with 0, 1, 2.5, 5 or 10 wt% of L-polyAla or T-polyAla which are pre-drawn to 100% pre-drawing ratio. FIG. 7A shows a variation therein when doped with L-poyAla while FIG. 7B shows a variation when doped with T-polyAla.

The only-silk film exhibits peaks originated from the (020), (210) and (211) planes of crystal lattice based on the antiparallel β-sheet in ADF3. The respective d-spacing were 0.51, 0.45, and 0.37 nm. T-poly A and L-polyA films also exhibit peaks originating from the β-sheet crystal but the inter-planar distance for (210) is 0.43 nm which is different from that of silk-only film.

FIG. 7A shows WAXD ID profiles of the 100% pre-drawn composite films with various L-polyAla additive amount. All of the peaks associated with polyA's β-sheet became more intense with the increment of additive content. However, the peak intensity of (210) plane was further enhanced not for the polyalanine but for the spider silk's as the L-polyA content exceeded greater than 5 wt%. This result indicates that L-polyA influences the crystal structure of silk owing to the structural similarity between their sequences of L-polyA and silk. It should be considered that the formation of silk's crystals induced by L-polyA leads to the enhancement in the rigidity of the films.

As shown in FIG. 7B illustrating the variation therein for WAXD when T-polyAla was added therein, the intensity of all of the peaks associated with polyalanine was increased in response to the increment of the additive amount. However, the peak intensity of the silk's (210) plane showed no significant change. These results indicate that T-polyA has little effect on the silk's β-sheet owing to the telechelic structure thereof. It should be indicated that the polyalanine independently forms crystals in a dispersed manner to thereby bring an enhancement thereto in the toughness of films with a small additive amount.

As shown above, WAXD on the composite film of the modified spider thread protein doped with 5 wt% of T-polyAla indicated an increase in peak intensities (see FIGs. 7A and 7B) indicating the crystal I response to the increment of doping content of T-polyAla or L-polyAla. It should be considered that T-polyAla or L-polyAla induces an increment of the β-sheet crystal in the silk, which influences the physical properties thereof.

### Example 2

### Production of composite fiber composition and physical property evaluation thereof

### 1. Experimental materials and methods

Unless otherwise noted, all solvents and reagents to be used were obtained from WAKO pure Chemical Corporation in Osaka. The protein powder (SEQ ID NO: 17) was obtained by the following method. The protein power was dried under vacuum at 100 °C for 2 hours before preparing the dope solution. Formic acid was used as the solvent of the dope solution. The spinning was carried out by a desk-top spinning machine No.1 following the standard procedure of Spiber's desk-top machine manual. The properties of fibers were measured in diameter, tensile stress, tensile strain, and toughness. The diameter was measured using a device of Nikon, ECLIPSE, LV100ND (Tokyo), and then evaluated. The stress and strain were evaluated by a device of INSTRON (Tokyo). The toughness was calculated using a Bluehill's software (INSTRON, Tokyo)

### 2. Production of spider thread protein (PRT799)

### (Synthesis of gene encoding spider thread protein, and construction of expression vector)

Based on the base sequence and amino acid sequence of a fibroin derived from Nephila clavipes (GenBank Accession Number: P46804.1, GI:1174415), a spider thread protein (herein also referred to as "PRT 799") having an amino acid sequence set forth in SEQ ID NO. 17 was designed.

The amino acid sequence set forth in SEQ ID NO: 17 is an amino acid sequence prepared by adding the amino acid sequence set forth in SEQ ID NO: 21 (containing His tag) to the N-terminal of an amino acid sequence prepared by adding His tag to the C-terminal of a sequence established by repeating 4 times a region of 20 domain sequences in the amino acid sequence set forth in SEQ ID NO.15 (Note that several amino acid residues at the C-terminal side of the region are substituted).

A nucleic acid encoding the designed PRT 799 was synthesized. In the nucleic acid, an NdeI site was added to the 5' end, and an EcoRI site was added downstream of the stop codon. The nucleic acid was cloned into a cloning vector (pUC118). The same nucleic acid was then cleaved by restriction enzyme treatment using NdeI and EcoRI, and then recombined into a protein expression vector pET-22b(+) to obtain an expression vector.

Escherichia coli BLR(DE3) was transformed with a pET22b(+) expression vector. The transformed Escherichia coli was cultured in 2 mL of an LB medium containing ampicillin for 15 hours. The culture solution was added to 100 ml of a seed culture medium (Table 7) containing ampicillin so that OD600 was 0.005. The temperature of the culture solution was maintained at 30°C and the flask culture was carried out for about 15 hours until OD600 reached 5 to obtain a seed culture solution.

**[Table 7]**

| Reagent | Concentration(g/L) |
|---|---|
| Glucose | 5.0 |
| KH₂PO₄ | 4.0 |
| K₂HPO₄ | 9.3 |
| Yeast Extract | 6.0 |
| Ampicillin | 0.1 |

The seed culture solution was added to a jar fermenter to which 500 ml of a production medium (Table 8) had been added so that the OD600 was 0.05. The culture was carried out while maintaining the culture solution temperature at 37 °C and keeping the pH constant at 6.9. Further, the dissolved oxygen concentration in the culture solution was maintained at 20% of the dissolved oxygen saturation concentration.

**[Table 8]**

| Reagent | Concentration(g/L) |
|---|---|
| Glucose | 12.0 |
| KH₂PO₄ | 9.0 |
| MgSO₄·7H₂O | 2.4 |
| Yeast Extract | 15 |
| FeSO₄·7H₂O | 0.04 |
| MnSO₄·5H₂O | 0.04 |
| CaCl₂·2H₂O | 0.04 |
| ADEKA NOL (ADEKA Corporation, LG-295S) | 0.1(mL/L) |

Immediately after completely consuming the glucose in the production medium, a feed solution (455 g/1L of glucose and 120 g/1L of Yeast Extract) was added at a rate of 1 ml/min. The culture was carried out while maintaining the culture solution temperature at 37 °C and keeping the pH constant at 6.9. Further, the dissolved oxygen concentration in the culture solution was maintained at 20% of the dissolved oxygen saturation concentration while carrying out the culture for 20 hours. Then, 1 M of isopropyl-β-thiogalactopyranoside (IPTG) was added to the culture solution to a final concentration of 1 mM to induce the expression of the target protein. Twenty hours after addition of IPTG, the culture solution was centrifuged to recover the bacterial cells. SDS-PAGE was carried out using the bacterial cells prepared from the culture solution before the addition of IPTG and after the addition of IPTG, and the expression of PRT799 was identified by the appearance of a band of a target protein size corresponding to PRT799 depending on the addition of IPTG.

### [Purification of spider thread protein]

The bacterial cells, recovered 2 hours after the addition of IPTG, were washed with 20 mM Tris-HCl buffer solution (pH 7.4). The bacterial cells after washing were suspended in 20 mM Tris-HCl buffer solution (pH 7.4) containing about 1 mM PMSF, and the cells were disrupted with a high-pressure homogenizer (available from GEA Niro Soavi SpA). The disrupted cells were centrifuged to obtain a precipitate. The obtained precipitate was washed with 20 mM Tris-HCl buffer solution (pH 7.4) to high purity. The precipitate after washing was suspended in 8 M guanidine buffer solution (8 M guanidine hydrochloride, 10 mM sodium dihydrogen phosphate, 20 mM NaCl, 1 mM Tris-HCl, pH 7.0) so as to have a concentration of 100 mg/mL, and dissolved by stirring with a stirrer at 60 °C for 30 minutes. After the dissolution, dialysis was carried out with water using a dialysis tube (cellulose tube 36/32 manufactured by Sanko Junyaku Co., Ltd.). A white aggregated protein (PRT 799) obtained after dialysis was recovered by centrifugation. The water content was removed from the aggregated protein (PRT 799) with a freeze dryer to obtain a freeze-dried powder.

The degree of purification of the resultant PRT799 in freeze-dried powder form was confirmed by image analysis of polyacrylamide gel electrophoresis results of the powder using TotalLab (Nonlinear Dynamics Ltd.). The purity of PRT799 was about 85%.

The modified spider thread protein thus produced (PRT799, SEQ ID NO: 17) by the above method was used in the experiment as shown below.

### 3. Experimental method

### (1) Preparation of dope solution (no L-polyAla and T-polyAla contained)

The above-described protein powder was used. 3.6g of the dry powder was precisely weighed and taken into a translucent vial. To this vial was added 11.1g of formic acid which was stirred overnight at 40 °C to obtain a translucent deep yellow liquid. The protein concentration in this dope solution was 24 wt%.

### (2) Preparation of L-polyAla or T-polyAla contained dope solution

The above-described protein powder was used. 0.036g (1wt% for the above-mentioned protein powder) of polyAla (L-polyAla or T-polyAla) was taken into a vial to which 11.364g of formic acid was added and stirred for 1 to 2 hours at 40 °C to be dissolved. After obtaining transparent liquid, the protein powder (3.6g) was added. The solution was vigorously stirred at 40 °C (normally for 8 to 12 hours) until the protein was completely dissolved therein. This dope solution had a protein concentration of 24 wt%.

### (3) Spinning method

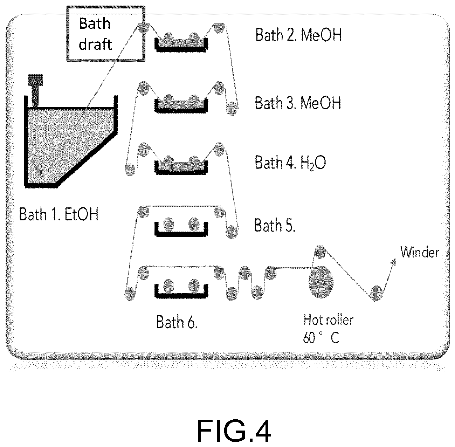

The above-described desk-top spinning machine was used for the spinning (see FIG. 4). Tables 9 and 10 summarize the conditions thereof. Bath 1 contained 100% ethanol while Baths 2 and 3 contained 100% methanol. Bath 4 contained water (tap water). No liquid was contained in Baths 5 and 6. The spun fibers were drawn only in Bath 4.

**[Table 9]**

| Discharging condition of polyAla-containing dope solution | | | | | | |
|---|---|---|---|---|---|---|
| Dope solution : 24wt % of formic acid | Dope solution content (mL) | Defoaming method | Dope solution discharging nozzle diameter (mm) | Temperature (°C) | Discharging rate (g/min) | Lineal speed (m/min) |
| L-polyAla 1 wt% | 15 | Allowed to stand for 1 hr. | 0.2 | 35 | 0.0184 | 0.49 |
| T-polyAla 1 wt% | 15 | Allowed to stand for 1 hr. | 0.2 | 35 | 0.0184 | 0.49 |
| Control | 15 | Allowed to stand for 1 hr. | 0.2 | 35 | 0.0184 | 0.49 |

**[Table 10]**

| Spinning condition of polyAla-containing dope solution | | | | | | | | | |
|---|---|---|---|---|---|---|---|---|---|
| Coagulation bath | | Bathes 2 and 3 | | Bath 4 | | Bathes 5 and 6 | | Heating roller(60°C) | Drying |
| Solvent | Rate of pulling speed | Solvent | Rate of pulling speed | Solvent | Rate of pulling speed | Solvent | Rate of pulling speed | Rate of pulling speed | 12 hours in Vacuum |
| EtOH | 0.5 or 0.6 | MeOH | 1.0 | water | 7.0-8.0 | none | 1 | 1 | |

### (4) Evaluation of physical properties of composite fiber composition

Tables. 11 and 12 show diameters, tensile strength, strain, toughness, standard deviation of the tensile stress and standard deviation of the strain in fibers which were spun in the draft bath at the rate of pulling speed of 0.6 or 0.5 to the discharging speed where the draw ratio in washing water bath were of 7.0 or 7.8 fold draw ratio.

**[Table 11]**

| Draw ratio in washing solution | Type of polyAla additive | Fiber diameter (µm) | Tensile strength (MPa) | Strain (%) | Toughness (MJ/m³) | Standard deviation of tensile stress | Standard deviation of tensile strain |
|---|---|---|---|---|---|---|---|
| 7.0 | L-polyAla 1 wt% | 45 | 274 | 14.2 | 24.2 | 12.9 | 1.1 |
| | T-polyAla 1 wt% | 37 | 264 | 7.9 | 13.9 | 12.1 | 0.4 |
| | Control (undoped) | 37 | 229 | 7.1 | 11.0 | 16.8 | 1.2 |
| 7.8 | L-polyAla 1 wt% | 41 | 306 | 11.1 | 20.1 | 31.5 | 1.0 |
| | T-polyAla 1 wt% | 37 | 300 | 6.8 | 12.4 | 10.0 | 0.4 |
| | Control (undoped) | Measurement failed for breakage thereof in spinning process | | | | | |

| | | | | | | | |
|---|---|---|---|---|---|---|---|
| Linear speed: 0.49 m/min Rate of pulling speed thereto in draft bath (MeOH): 0.6; Residence time in Bathes 2 and 3: 2 minutes 20 second. | | | | | | | |

**[Table 12]**

| Draw ratio in washing solution | Type of polyAla additive | Fiber diameter (µm) | Tensile strength (MPa) | Strain (%) | Toughness (MJ/m³) | Standard deviation of tensile stress | Standard deviation of tensile strain |
|---|---|---|---|---|---|---|---|
| 7.0 | L-polyAla 1 wt% | 46 | 269 | 16.5 | 26.5 | 19.8 | 4.1 |
| | T-polyAla 1 wt% | 43 | 267 | 8.0 | 14.4 | 19.5 | 1.0 |
| | Control (undoped) | 38 | 232 | 6.9 | 10.8 | 19.5 | 1.1 |
| 7.8 | L-polyAla 1 wt% | 46 | 323 | 13.6 | 20.1 | 54.3 | 4.9 |
| | T-polyAla 1 wt% | 42 | 294 | 294 | 12.3 | 31.4 | 0.4 |
| | Control (undoped) | Measurement failed for breakage thereof in spinning process | | | | | |

| | | | | | | | |
|---|---|---|---|---|---|---|---|
| Linear speed: 0.49 m/min Rate of pulling speed thereto in draft bath (MeOH): 0.5; Residence time in Bathes 2 and 3: 2 minutes 55 second. | | | | | | | |

As the rate of pulling speed thereto (pulling speed of fiber/ discharging speed of the doping liquid) in the draft bath become smaller, the film tends to have long aggregation time to thereby have stronger aggregation. The above results show improvements in tensile strength, strain and toughness of the composite fibers doped with 1% of L-polyAla or T-polyAla at the rate of pulling speed thereto of both 0.6 and 0.5. The results also show fiber breakage in the process of spinning in control groups as shown in Tables 11 and 12 where no polyAla were added if the draw ratio in washing water was of 7.8 fold. These results show improvement in physical properties of the composite film by doping a fibroin-derived protein with L-polyAla or T-polyAla.

### [General overview]

The above-described results show improvements in physical properties, such as tensile strain, maximum tensile limit, and toughness of the composite film, by doping a natural fibroin protein or an artificially modified and produced fibroin-derived protein with polypeptide or polyamino acid such as L-polyAla or T-polyAla having β-sheet structure. Further, the improvements in physical properties of the composite molding composition have indicated different types of polypeptide or polyamino acid having β-sheet structure for bringing about the optimal properties depending on the type of fibroins to be used. The results also indicate that doping amounts are varied in accordance with optimal physical properties to be brought about such as tensile strain, maximum tensile limit, and toughness.

The results indicate a possibility of obtaining a composite molding composition of improved physical properties by changing the material to be utilized or an additive amount thereof in accordance with desired properties of the composite molding composition.

Furthermore, the fibroin-derived protein may be doped with not only polypeptide or polyamino of natural amino acid but also any polymer having β-sheet structure not originated from the natural amino acid for the production of composite molding composition of the present invention.

## Claims

1. A composite molding composition which is obtained by molding a fibroin-derived protein blended with a polyalanine having a β-sheet structure.

2. The composite molding composition according to claim 1, wherein the fibroin-derived protein is selected from:
(i) a natural fibroin-derived protein; and/or
(ii) a modified fibroin-derived protein.

3. The composite molding composition according to claim 2,
wherein the modified fibroin-derived protein is a modified fibroin-derived protein having a domain sequence represented by the following formula (I):
[(A)ₙ motif -REP]ₘ (I),
wherein as compared to a naturally derived fibroin, at least one or a plurality of the glycine residues in REP are substituted with a different amino acid residue(s), and the domain sequence has an amino acid sequence with a reduced content of glycine residues,
[In the formula (I),
(A)ₙ motif represents an amino acid sequence consisting of 2 to 20 amino acid residues; and the number of alanine residues relative to a total number of the amino acid residues in the (A)ₙ motif is 40% or more;
REP represents an amino acid sequence consisting of 2 to 200 amino acid residues;
m represents an integer of 2 to 300;
the plurality of (A)ₙ motifs may be the same amino acid sequences or different amino acid sequences; and
the plurality of REPs may be the same amino acid sequences or different amino acid sequences.].

4. The composite molding composition
wherein in the modified fibroin-derived protein according to claim 3, the domain sequence, as compared to a naturally derived fibroin, has an amino acid sequence equivalent to an amino acid sequence in which, in at least one motif sequence selected from GGX and GPGXX (where X represents an amino acid residue other than glycine) in REP, one glycine residue in said at least one motif sequence or a plurality of the motif sequences is substituted with a different amino acid residue(s); and
a ratio of the motif sequences in which the glycine residue is substituted with a different amino acid residue(s) is 10% or more with respect to all the motif sequences.

5. The composite molding composition
wherein in the modified fibroin-derived protein according to claim 3 or 4, a maximum value of x/y (%) is 20% or more,
in which x represents a sum total of the numbers of amino acid residues in two adjacent [(A)ₙ motif-REP] units, provided that, with the number of amino acid residues in REPs of two adjacent [(A)ₙ motif-REP] units being sequentially compared from the N-terminal side to the C-terminal side, when the number of amino acid residues in an REP having a smaller number of amino acid residues is defined as 1, a ratio of the number of amino acid residues in the other REP thereto becomes 2 to 3.5; and
y represents a total number of amino acid residues in the domain sequence.

6. The composite molding composition according to any one of claims 3 to 5,
wherein the modified fibroin-derived protein represented by the formula (I) is a modified fibroin-derived protein having an amino acid sequence set forth in SEQ ID NO: 1 to 19.

7. The composite molding composition as a fibroin-derived protein having a homology of 80% or more with respect to the amino acid sequence of the fibroin-derived protein according to any one of claims 2 to 6.

8. The composite molding composition according to any one of claims 1 to 7,
wherein the polyalanine is selected from a linear polyalanine or a telechelic polyalanine.

9. The composite molding composition according to any one of claims 1 to 8,
wherein said composite molding composition is selected from a composite fiber, a composite film, a composite gel or a composite molded body.

10. A method for producing a composite molding composition that is formed of a fibroin-derived protein blended with a polyalanine having a β-sheet structure, and is selected from a composite fiber, a composite film and a composite gel, comprising:
(i) preparing a dope solution in which the fibroin-derived protein and the polyalanine having the β-sheet structure are dissolved; and
(ii) producing the composite molding composition by performing spinning from the dope solution and optionally further performing drawing.

11. A method for producing a composite molded body formed of a fibroin-derived protein blended with a polyalanine having a β-sheet structure, comprising:
(i) preparing a mixture by mixing a powder fibroin-derived protein with a powder polyalanine having the β-sheet structure; and
(ii) heating the mixture while applying a pressure thereto.

12. The method according to any one of claim 10 or 11,
wherein the fibroin-derived protein is selected from:
(i) a natural fibroin-derived protein; and/or
(ii) a modified fibroin-derived protein.

13. The method according to any one of claims 10 to 12,
wherein the polyalanine is selected from a linear polyalanine or a telechelic polyalanine.

## Patentansprüche

1. Verbundformmasse, die durch Formen eines von Fibroin abgeleiteten Proteins, das mit einem Polyalanin mit β-Faltblattstruktur vermischt ist, erhalten wird.

2. Verbundformmasse nach Anspruch 1, wobei das von Fibroin abgeleitete Protein ausgewählt ist aus:
(i) einem natürlichen, von Fibroin abgeleiteten Protein; und/oder
(ii) einem modifizierten, von Fibroin abgeleiteten Protein.

3. Verbundformmasse nach Anspruch 2,
wobei das modifizierte, von Fibroin abgeleitete Protein ein modifiziertes, von Fibroin abgeleitetes Protein mit einer Domänensequenz ist, die durch die folgende Formel (I) dargestellt wird:
[(A)ₙ-Motiv-REP]ₘ (I),
wobei im Vergleich zu einem natürlich abgeleiteten Fibroin mindestens einer oder mehrere der Glycinreste in REP durch einen oder mehrere andere Aminosäurereste ersetzt sind und die Domänensequenz eine Aminosäuresequenz mit einem reduzierten Gehalt an Glycinresten aufweist,
[In der Formel (I)
(A)ₙ-Motiv eine Aminosäuresequenz, die aus 2 bis 20 Aminosäureresten besteht, darstellt; und die Zahl der Alaninreste relativ zur Gesamtzahl der Aminosäurereste im (A)ₙ-Motiv 40 % oder mehr beträgt;
REP eine Aminosäuresequenz darstellt, die aus 2 bis 200 Aminosäureresten besteht;
m eine ganze Zahl von 2 bis 300 darstellt;
die Vielzahl von (A)ₙ-Motiven die gleichen Aminosäuresequenzen oder unterschiedliche Aminosäuresequenzen sein kann; und
die Vielzahl von REPs die gleichen Aminosäuresequenzen oder unterschiedliche Aminosäuresequenzen sein kann.].

4. Verbundformmasse
wobei in dem modifizierten, von Fibroin abgeleiteten Protein nach Anspruch 3 die Domänensequenz im Vergleich zu einem natürlich abgeleiteten Fibroin eine Aminosäuresequenz aufweist, die einer Aminosäuresequenz äquivalent ist, in der in mindestens einer Motivsequenz ausgewählt aus GGX und GPGXX (wobei X einen anderen Aminosäurerest als Glycin darstellt) in REP, ein Glycinrest in der mindestens eine Motivsequenz oder einer Vielzahl der Motivsequenzen durch einen oder mehrere andere Aminosäurereste ersetzt ist; und
ein Verhältnis der Motivsequenzen, in denen der Glycinrest durch einen oder mehrere andere Aminosäurereste ersetzt ist, 10 % oder mehr in Bezug auf alle Motivsequenzen beträgt.

5. Verbundformmasse
wobei in dem modifizierten, von Fibroin abgeleiteten Protein nach Anspruch 3 oder 4 ein Maximalwert von x/y (%) 20% oder mehr beträgt,
wobei x eine Gesamtsumme der Anzahl von Aminosäureresten in zwei benachbarten [(A)ₙ-Motiv-REP]-Einheiten darstellt, vorausgesetzt, dass mit der Anzahl von Aminosäureresten in REPs von zwei benachbarten [(A)ₙ-Motiv- REP]-Einheiten, die sequentiell von der N-terminalen Seite zur C-terminalen Seite verglichen werden, wenn die Zahl der Aminosäurereste in einem REP mit einer kleineren Zahl von Aminosäureresten als 1 definiert wird, ein Verhältnis der Zahl der Aminosäurereste in der anderen REP dazu 2 bis 3,5 wird; und
y eine Gesamtzahl von Aminosäureresten in der Domänensequenz darstellt.

6. Verbundformmasse nach einem der Ansprüche 3 bis 5,
wobei das modifizierte, von Fibroin abgeleitete Protein, dargestellt durch die Formel (I), ein modifiziertes, von Fibroin abgeleitetes Protein mit einer in SEQ ID NO: 1 bis 19 angegebenen Aminosäuresequenz ist.

7. Verbundformmasse als von Fibroin abgeleitetes Protein mit einer Homologie von 80 % oder mehr bezüglich der Aminosäuresequenz des von Fibroin abgeleiteten Proteins nach einem der Ansprüche 2 bis 6.

8. Verbundformmasse nach einem der Ansprüche 1 bis 7,
wobei das Polyalanin ausgewählt ist aus einem linearen Polyalanin oder einem telechelen Polyalanin.

9. Verbundformmasse nach einem der Ansprüche 1 bis 8,
wobei die Verbundformmasse ausgewählt ist aus einer Verbundfaser, einem Verbundfilm, einem Verbundgel oder einem Verbundformkörper.

10. Verfahren zur Herstellung einer Verbundformmasse, die aus einem von Fibroin abgeleiteten Protein gebildet ist, das mit einem Polyalanin mit einer β-Faltblattstruktur vermischt ist und ausgewählt ist aus einer Verbundfaser, einer Verbundfolie und einem Verbundgel, umfassend:
(i) Herstellen einer Spinnlösung, in der das von Fibroin abgeleitete Protein und das Polyalanin mit der β-Faltblatt-Struktur gelöst sind; und
(ii) Herstellen der Verbundformmasse durch Ausführen des Spinnens aus der Spinnlösung und gegebenenfalls weiteres Ausführen des Ausziehens.

11. Verfahren zur Herstellung eines zusammengesetzten Formkörpers, gebildet aus einem von Fibroin abgeleiteten Protein, gemischt mit einem Polyalanin mit einer β-Faltblattstruktur, umfassend:
(i) Herstellen einer Mischung durch Mischen eines pulverförmigen, von Fibroin abgeleiteten Proteins mit einem pulverförmigen Polyalanin mit der β-Faltblattstruktur; und
(ii) Erhitzen der Mischung, während ein Druck darauf ausgeübt wird.

12. Verfahren nach einem der Ansprüche 10 oder 11, wobei das von Fibroin abgeleitete Protein ausgewählt ist aus:
(i) einem natürlichen, von Fibroin abgeleiteten Protein; und/oder
(ii) einem modifizierten, von Fibroin abgeleiteten Protein.

13. Verfahren nach einem der Ansprüche 10 bis 12, wobei das Polyalanin ausgewählt ist aus einem linearen Polyalanin oder einem telechelen Polyalanin.

## Revendications

1. Composition de moulage composite qui est obtenue en moulant une protéine dérivée de la fibroïne mélangée à une polyalanine ayant une structure en feuillet β.

2. Composition de moulage composite selon la revendication 1, dans laquelle la protéine dérivée de la fibroïne est sélectionnée parmi :
(i) une protéine dérivée de la fibroïne naturelle ; et/ou
(ii) une protéine dérivée de la fibroïne modifiée.

3. Composition de moulage composite selon la revendication 2, dans laquelle la protéine dérivée de la fibroïne modifiée est une protéine dérivée de la fibroïne modifiée ayant une séquence de domaine représentée par la formule (I) suivante :
[motif (A)ₙ - REP]ₘ (I)
dans laquelle, en comparaison avec une fibroïne dérivée naturellement, au moins un ou une pluralité de résidus glycine dans REP est substitué par un ou plusieurs résidus d'acide aminé différents, et la séquence de domaine a une séquence d'acides aminés ayant une teneur réduite en résidus glycine,
[dans la formule (I),
le motif (A)ₙ représente une séquence d'acides aminés constituée de 2 à 20 résidus d'acide aminé ; et le nombre de résidus alanine par rapport au nombre total de résidus d'acide aminé dans le motif (A)ₙ est de 40 % ou plus ;
REP représente une séquence d'acides aminés constituée de 2 à 200 résidus d'acide aminé ;
m représente un nombre entier de 2 à 300 ;
la pluralité de motifs (A)ₙ peut être les mêmes séquences d'acides aminés ou des séquences d'acides aminés différentes ; et
la pluralité de REPs peut être les mêmes séquences d'acides aminés ou des séquences d'acides aminés différentes].

4. Composition de moulage composite, dans laquelle
dans la protéine dérivée de la fibroïne modifiée selon la revendication 3, la séquence de domaine, en comparaison avec une fibroïne dérivée naturellement, a une séquence d'acides aminés équivalant à une séquence d'acides aminés dans laquelle, dans au moins une séquence de motif sélectionnée parmi GGX et GPGXX (où X représente un résidu d'acide aminé autre que la glycine) dans REP, un résidu glycine dans ladite au moins une séquence de motif ou une pluralité de séquences de motif est substitué par un ou plusieurs résidus d'acide aminé différents ; et
la proportion des séquences de motif dans lesquelles le résidu glycine est substitué par un ou plusieurs résidus d'acide aminé différents est de 10 % ou plus par rapport à toutes les séquences de motif.

5. Composition de moulage composite, dans laquelle,
dans la protéine dérivée de la fibroïne modifiée selon la revendication 3 ou 4, une valeur maximale de x/y (%) est de 20 % ou plus,
dans laquelle x représente la somme totale des nombres de résidus d'acide aminé dans deux unités [motif(A)ₙ - REP] adjacentes, sous réserve que, le nombre de résidus d'acide aminé dans les REP de deux unités [motif(A)ₙ - REP] adjacentes étant comparé séquentiellement du côté N-terminal au côté C-terminal, lorsque le nombre de résidus d'acide aminé dans un REP ayant un plus petit nombre de résidus d'acide aminé est défini comme 1, un rapport du nombre de résidus d'acide aminé dans l'autre REP devient alors 2 à 3,5 ; et
y représente le nombre total de résidus d'acide aminé dans la séquence de domaine.

6. Composition de moulage composite selon l'une quelconque des revendications 3 à 5, dans laquelle la protéine dérivée de la fibroïne modifiée représentée par la formule (I) est une protéine dérivée de la fibroïne modifiée ayant une séquence d'acides aminés indiquée dans les SEQ ID NO : 1 à 19.

7. Composition de moulage composite en tant que protéine dérivée de la fibroïne ayant une homologie de 80 % ou plus par rapport à la séquence d'acides aminés de la protéine dérivée de la fibroïne selon l'une quelconque des revendications 2 à 6.

8. Composition de moulage composite selon l'une quelconque des revendications 1 à 7, dans laquelle la polyalanine est sélectionnée parmi une polyalanine linéaire ou une polyalanine téléchélique.

9. Composition de moulage composite selon l'une quelconque des revendications 1 à 8, laquelle composition de moulage composite est sélectionnée parmi une fibre composite, un film composite, un gel composite, ou un corps moulé composite.

10. Méthode pour produire une composition de moulage composite qui est constituée d'une protéine dérivée de la fibroïne mélangée à une polyalanine ayant une structure en feuillet β, et sélectionnée parmi une fibre composite, un film composite et un gel composite, comprenant :
(i) préparer une solution de filage dans laquelle la protéine dérivée de la fibroïne et la polyalanine ayant la structure en feuillet β sont dissoutes ; et
(ii) produire la composition de moulage composite en réalisant un filage à partir de la solution de filage et à titre facultatif réaliser un étirage.

11. Méthode pour produire un corps moulé composite constitué d'une protéine dérivée de la fibroïne mélangée à une polyalanine ayant une structure en feuillet β, comprenant :
(i) préparer un mélange en mélangeant une poudre de protéine dérivée de la fibroïne avec une poudre de polyalanine ayant la structure en feuillet β ; et
(ii) chauffer le mélange tout en lui appliquant une pression.

12. Méthode selon l'une quelconque des revendications 10 ou 11, dans laquelle la protéine dérivée de la fibroïne est sélectionnée parmi :
(i) une protéine dérivée de la fibroïne naturelle ; et/ou
(ii) une protéine dérivée de la fibroïne modifiée.

13. Méthode selon l'une quelconque des revendications 10 à 12, dans laquelle la polyalanine est sélectionnée parmi une polyalanine linéaire ou une polyalanine téléchélique.


### SEQUENCE LISTING

<110> RIKEN
   SPIBER INC.
<120> A composit mold composition comprising fibroin-like protein and a method thereof
<130> 08422-WO-2
<160> 21
<170> PatentIn version 3.5
<210> 1
   <211> 50
   <212> PRT
   <213> Araneus diadematus
<400> 1
   Ser Gly Cys Asp Val Leu Val Gln Ala Leu Leu Glu Val Val Ser Ala
   1               5                   10                  15
   Leu Val Ser Ile Leu Gly Ser Ser Ser Ile Gly Gln Ile Asn Tyr Gly
               20                  25                  30
   Ala Ser Ala Gln Tyr Thr Gln Met Val Gly Gln Ser Val Ala Gln Ala
           35                  40                  45
   Leu Ala
       50
<210> 2
   <211> 30
   <212> PRT
   <213> Araneus diadematus
<400> 2
   Ser Gly Cys Asp Val Leu Val Gln Ala Leu Leu Glu Val Val Ser Ala
   1               5                   10                  15
   Leu Val Ser Ile Leu Gly Ser Ser Ser Ile Gly Gln Ile Asn
               20                  25                  30
<210> 3
   <211> 21
   <212> PRT
   <213> Araneus diadematus
<400> 3
   Ser Gly Cys Asp Val Leu Val Gln Ala Leu Leu Glu Val Val Ser Ala
   1               5                   10                  15
   Leu Val Ser Ile Leu
               20
<210> 4
   <211> 1154
   <212> PRT
   <213> Artificial Sequence
<220>
   <223> recombinant spider silk protein ADF3KaiLargeNRSH1
<400> 4
   Met His His His His His His His His His His Ser Ser Gly Ser Ser
   1               5                   10                  15
   Leu Glu Val Leu Phe Gln Gly Pro Ala Arg Ala Gly Ser Gly Gln Gln
               20                  25                  30
   Gly Pro Gly Gln Gln Gly Pro Gly Gln Gln Gly Pro Gly Gln Gln Gly
           35                  40                  45
   Pro Tyr Gly Pro Gly Ala Ser Ala Ala Ala Ala Ala Ala Gly Gly Tyr
       50                  55                  60
   Gly Pro Gly Ser Gly Gln Gln Gly Pro Ser Gln Gln Gly Pro Gly Gln
   65                  70                  75                  80
   Gln Gly Pro Gly Gly Gln Gly Pro Tyr Gly Pro Gly Ala Ser Ala Ala
                   85                  90                  95
   Ala Ala Ala Ala Gly Gly Tyr Gly Pro Gly Ser Gly Gln Gln Gly Pro
               100                 105                 110
   Gly Gly Gln Gly Pro Tyr Gly Pro Gly Ser Ser Ala Ala Ala Ala Ala
           115                 120                 125
   Ala Gly Gly Asn Gly Pro Gly Ser Gly Gln Gln Gly Ala Gly Gln Gln
       130                 135                 140
   Gly Pro Gly Gln Gln Gly Pro Gly Ala Ser Ala Ala Ala Ala Ala Ala
   145                 150                 155                 160
   Gly Gly Tyr Gly Pro Gly Ser Gly Gln Gln Gly Pro Gly Gln Gln Gly
                   165                 170                 175
   Pro Gly Gly Gln Gly Pro Tyr Gly Pro Gly Ala Ser Ala Ala Ala Ala
               180                 185                 190
   Ala Ala Gly Gly Tyr Gly Pro Gly Ser Gly Gln Gly Pro Gly Gln Gln
   195 200 205
   Gly Pro Gly Gly Gln Gly Pro Tyr Gly Pro Gly Ala Ser Ala Ala Ala
   210 215 220
   Ala Ala Ala Gly Gly Tyr Gly Pro Gly Ser Gly Gln Gln Gly Pro Gly
   225 230 235 240
   Gln Gln Gly Pro Gly Gln Gln Gly Pro Gly Gly Gln Gly Pro Tyr Gly
   245 250 255
   Pro Gly Ala Ser Ala Ala Ala Ala Ala Ala Gly Gly Tyr Gly Pro Gly
   260 265 270
   Tyr Gly Gln Gln Gly Pro Gly Gln Gln Gly Pro Gly Gly Gln Gly Pro
   275 280 285
   Tyr Gly Pro Gly Ala Ser Ala Ala Ser Ala Ala Ser Gly Gly Tyr Gly
   290 295 300
   Pro Gly Ser Gly Gln Gln Gly Pro Gly Gln Gln Gly Pro Gly Gly Gln
   305 310 315 320
   Gly Pro Tyr Gly Pro Gly Ala Ser Ala Ala Ala Ala Ala Ala Gly Gly
   325 330 335
   Tyr Gly Pro Gly Ser Gly Gln Gln Gly Pro Gly Gln Gln Gly Pro Gly
   340 345 350
   Gln Gln Gly Pro Gly Gln Gln Gly Pro Gly Gly Gln Gly Pro Tyr Gly
   355 360 365
   Pro Gly Ala Ser Ala Ala Ala Ala Ala Ala Gly Gly Tyr Gly Pro Gly
   370 375 380
   Ser Gly Gln Gln Gly Pro Gly Gln Gln Gly Pro Gly Gln Gln Gly Pro
   385 390 395 400
   Gly Gln Gln Gly Pro Gly Gln Gln Gly Pro Gly Gln Gln Gly Pro Gly
   405 410 415
   Gln Gln Gly Pro Gly Gln Gln Gly Pro Gly Gln Gln Gly Pro Gly Gly
   420 425 430
   Gln Gly Ala Tyr Gly Pro Gly Ala Ser Ala Ala Ala Gly Ala Ala Gly
   435 440 445
   Gly Tyr Gly Pro Gly Ser Gly Gln Gln Gly Pro Gly Gln Gln Gly Pro
       450                 455                 460
   Gly Gln Gln Gly Pro Gly Gln Gln Gly Pro Gly Gln Gln Gly Pro Gly
   465                 470                 475                 480
   Gln Gln Gly Pro Gly Gln Gln Gly Pro Gly Gln Gln Gly Pro Tyr Gly
                   485                 490                 495
   Pro Gly Ala Ser Ala Ala Ala Ala Ala Ala Gly Gly Tyr Gly Pro Gly
               500                 505                 510
   Ser Gly Gln Gln Gly Pro Gly Gln Gln Gly Pro Gly Gln Gln Gly Pro
           515                 520                 525
   Gly Gly Gln Gly Pro Tyr Gly Pro Gly Ala Ala Ser Ala Ala Val Ser
       530                 535                 540
   Val Ser Arg Ala Arg Ala Gly Ser Gly Gln Gln Gly Pro Gly Gln Gln
   545                 550                 555                 560
   Gly Pro Gly Gln Gln Gly Pro Gly Gln Gln Gly Pro Tyr Gly Pro Gly
                   565                 570                 575
   Ala Ser Ala Ala Ala Ala Ala Ala Gly Gly Tyr Gly Pro Gly Ser Gly
               580                 585                 590
   Gln Gln Gly Pro Ser Gln Gln Gly Pro Gly Gln Gln Gly Pro Gly Gly
           595                 600                 605
   Gln Gly Pro Tyr Gly Pro Gly Ala Ser Ala Ala Ala Ala Ala Ala Gly
       610                 615                 620
   Gly Tyr Gly Pro Gly Ser Gly Gln Gln Gly Pro Gly Gly Gln Gly Pro
   625                 630                 635                 640
   Tyr Gly Pro Gly Ser Ser Ala Ala Ala Ala Ala Ala Gly Gly Asn Gly
                   645                 650                 655
   Pro Gly Ser Gly Gln Gln Gly Ala Gly Gln Gln Gly Pro Gly Gln Gln
               660                 665                 670
   Gly Pro Gly Ala Ser Ala Ala Ala Ala Ala Ala Gly Gly Tyr Gly Pro
           675                 680                 685
   Gly Ser Gly Gln Gln Gly Pro Gly Gln Gln Gly Pro Gly Gly Gln Gly
       690                 695                 700
   Pro Tyr Gly Pro Gly Ala Ser Ala Ala Ala Ala Ala Ala Gly Gly Tyr
   705 710 715 720
   Gly Pro Gly Ser Gly Gln Gly Pro Gly Gln Gln Gly Pro Gly Gly Gln
   725 730 735
   Gly Pro Tyr Gly Pro Gly Ala Ser Ala Ala Ala Ala Ala Ala Gly Gly
   740 745 750
   Tyr Gly Pro Gly Ser Gly Gln Gln Gly Pro Gly Gln Gln Gly Pro Gly
   755 760 765
   Gln Gln Gly Pro Gly Gly Gln Gly Pro Tyr Gly Pro Gly Ala Ser Ala
   770 775 780
   Ala Ala Ala Ala Ala Gly Gly Tyr Gly Pro Gly Tyr Gly Gln Gln Gly
   785 790 795 800
   Pro Gly Gln Gln Gly Pro Gly Gly Gln Gly Pro Tyr Gly Pro Gly Ala
   805 810 815
   Ser Ala Ala Ser Ala Ala Ser Gly Gly Tyr Gly Pro Gly Ser Gly Gln
   820 825 830
   Gln Gly Pro Gly Gln Gln Gly Pro Gly Gly Gln Gly Pro Tyr Gly Pro
   835 840 845
   Gly Ala Ser Ala Ala Ala Ala Ala Ala Gly Gly Tyr Gly Pro Gly Ser
   850 855 860
   Gly Gln Gln Gly Pro Gly Gln Gln Gly Pro Gly Gln Gln Gly Pro Gly
   865 870 875 880
   Gln Gln Gly Pro Gly Gly Gln Gly Pro Tyr Gly Pro Gly Ala Ser Ala
   885 890 895
   Ala Ala Ala Ala Ala Gly Gly Tyr Gly Pro Gly Ser Gly Gln Gln Gly
   900 905 910
   Pro Gly Gln Gln Gly Pro Gly Gln Gln Gly Pro Gly Gln Gln Gly Pro
   915 920 925
   Gly Gln Gln Gly Pro Gly Gln Gln Gly Pro Gly Gln Gln Gly Pro Gly
   930 935 940
   Gln Gln Gly Pro Gly Gln Gln Gly Pro Gly Gly Gln Gly Ala Tyr Gly
   945 950 955 960
   Pro Gly Ala Ser Ala Ala Ala Gly Ala Ala Gly Gly Tyr Gly Pro Gly
                   965                 970                 975
   Ser Gly Gln Gln Gly Pro Gly Gln Gln Gly Pro Gly Gln Gln Gly Pro
               980                 985                 990
   Gly Gln Gln Gly Pro Gly Gln Gln  Gly Pro Gly Gln Gln  Gly Pro Gly
           995                 1000                1005
   Gln Gln  Gly Pro Gly Gln Gln  Gly Pro Tyr Gly Pro  Gly Ala Ser
       1010                 1015                 1020
   Ala Ala  Ala Ala Ala Ala Gly  Gly Tyr Gly Pro Gly  Ser Gly Gln
       1025                 1030                 1035
   Gln Gly  Pro Gly Gln Gln Gly  Pro Gly Gln Gln Gly  Pro Gly Gly
       1040                 1045                 1050
   Gln Gly  Pro Tyr Gly Pro Gly  Ala Ala Ser Ala Ala  Val Ser Val
       1055                 1060                 1065
   Gly Gly  Tyr Gly Pro Gln Ser  Ser Ser Val Pro Val  Ala Ser Ala
       1070                 1075                 1080
   Val Ala  Ser Arg Leu Ser Ser  Pro Ala Ala Ser Ser  Arg Val Ser
       1085                 1090                 1095
   Ser Ala  Val Ser Ser Leu Val  Ser Ser Gly Pro Thr  Lys His Ala
       1100                 1105                 1110
   Ala Leu  Ser Asn Thr Ile Ser  Ser Val Val Ser Gln  Val Ser Ala
       1115                 1120                 1125
   Ser Asn  Pro Gly Leu Ser Gly  Cys Asp Val Leu Val  Gln Ala Leu
       1130                 1135                 1140
   Leu Glu  Val Val Ser Ala Leu  Val Ser Ile Leu
       1145                 1150
<210> 5
   <211> 1131
   <212> PRT
   <213> Artificial Sequence
<220>
   <223> recombinant spider silk protein ADF3KaiLargeNRSH1
<400> 5
   Met Ala Arg Ala Gly Ser Gly Gln Gln Gly Pro Gly Gln Gln Gly Pro
   1               5                   10                  15
   Gly Gln Gln Gly Pro Gly Gln Gln Gly Pro Tyr Gly Pro Gly Ala Ser
               20                  25                  30
   Ala Ala Ala Ala Ala Ala Gly Gly Tyr Gly Pro Gly Ser Gly Gln Gln
           35                  40                  45
   Gly Pro Ser Gln Gln Gly Pro Gly Gln Gln Gly Pro Gly Gly Gln Gly
       50                  55                  60
   Pro Tyr Gly Pro Gly Ala Ser Ala Ala Ala Ala Ala Ala Gly Gly Tyr
   65                  70                  75                  80
   Gly Pro Gly Ser Gly Gln Gln Gly Pro Gly Gly Gln Gly Pro Tyr Gly
                   85                  90                  95
   Pro Gly Ser Ser Ala Ala Ala Ala Ala Ala Gly Gly Asn Gly Pro Gly
               100                 105                 110
   Ser Gly Gln Gln Gly Ala Gly Gln Gln Gly Pro Gly Gln Gln Gly Pro
           115                 120                 125
   Gly Ala Ser Ala Ala Ala Ala Ala Ala Gly Gly Tyr Gly Pro Gly Ser
       130                 135                 140
   Gly Gln Gln Gly Pro Gly Gln Gln Gly Pro Gly Gly Gln Gly Pro Tyr
   145                 150                 155                 160
   Gly Pro Gly Ala Ser Ala Ala Ala Ala Ala Ala Gly Gly Tyr Gly Pro
                   165                 170                 175
   Gly Ser Gly Gln Gly Pro Gly Gln Gln Gly Pro Gly Gly Gln Gly Pro
               180                 185                 190
   Tyr Gly Pro Gly Ala Ser Ala Ala Ala Ala Ala Ala Gly Gly Tyr Gly
           195                 200                 205
   Pro Gly Ser Gly Gln Gln Gly Pro Gly Gln Gln Gly Pro Gly Gln Gln
       210                 215                 220
   Gly Pro Gly Gly Gln Gly Pro Tyr Gly Pro Gly Ala Ser Ala Ala Ala
   225                 230                 235                 240
   Ala Ala Ala Gly Gly Tyr Gly Pro Gly Tyr Gly Gln Gln Gly Pro Gly
                   245                 250                 255
   Gln Gln Gly Pro Gly Gly Gln Gly Pro Tyr Gly Pro Gly Ala Ser Ala
               260                 265                 270
   Ala Ser Ala Ala Ser Gly Gly Tyr Gly Pro Gly Ser Gly Gln Gln Gly
           275                 280                 285
   Pro Gly Gln Gln Gly Pro Gly Gly Gln Gly Pro Tyr Gly Pro Gly Ala
       290                 295                 300
   Ser Ala Ala Ala Ala Ala Ala Gly Gly Tyr Gly Pro Gly Ser Gly Gln
   305                 310                 315                 320
   Gln Gly Pro Gly Gln Gln Gly Pro Gly Gln Gln Gly Pro Gly Gln Gln
                   325                 330                 335
   Gly Pro Gly Gly Gln Gly Pro Tyr Gly Pro Gly Ala Ser Ala Ala Ala
               340                 345                 350
   Ala Ala Ala Gly Gly Tyr Gly Pro Gly Ser Gly Gln Gln Gly Pro Gly
           355                 360                 365
   Gln Gln Gly Pro Gly Gln Gln Gly Pro Gly Gln Gln Gly Pro Gly Gln
       370                 375                 380
   Gln Gly Pro Gly Gln Gln Gly Pro Gly Gln Gln Gly Pro Gly Gln Gln
   385                 390                 395                 400
   Gly Pro Gly Gln Gln Gly Pro Gly Gly Gln Gly Ala Tyr Gly Pro Gly
                   405                 410                 415
   Ala Ser Ala Ala Ala Gly Ala Ala Gly Gly Tyr Gly Pro Gly Ser Gly
               420                 425                 430
   Gln Gln Gly Pro Gly Gln Gln Gly Pro Gly Gln Gln Gly Pro Gly Gln
           435                 440                 445
   Gln Gly Pro Gly Gln Gln Gly Pro Gly Gln Gln Gly Pro Gly Gln Gln
       450                 455                 460
   Gly Pro Gly Gln Gln Gly Pro Tyr Gly Pro Gly Ala Ser Ala Ala Ala
   465                 470                 475                 480
   Ala Ala Ala Gly Gly Tyr Gly Pro Gly Ser Gly Gln Gln Gly Pro Gly
                   485                 490                 495
   Gln Gln Gly Pro Gly Gln Gln Gly Pro Gly Gly Gln Gly Pro Tyr Gly
   500 505 510
   Pro Gly Ala Ala Ser Ala Ala Val Ser Val Ser Arg Ala Arg Ala Gly
   515 520 525
   Ser Gly Gln Gln Gly Pro Gly Gln Gln Gly Pro Gly Gln Gln Gly Pro
   530 535 540
   Gly Gln Gln Gly Pro Tyr Gly Pro Gly Ala Ser Ala Ala Ala Ala Ala
   545 550 555 560
   Ala Gly Gly Tyr Gly Pro Gly Ser Gly Gln Gln Gly Pro Ser Gln Gln
   565 570 575
   Gly Pro Gly Gln Gln Gly Pro Gly Gly Gln Gly Pro Tyr Gly Pro Gly
   580 585 590
   Ala Ser Ala Ala Ala Ala Ala Ala Gly Gly Tyr Gly Pro Gly Ser Gly
   595 600 605
   Gln Gln Gly Pro Gly Gly Gln Gly Pro Tyr Gly Pro Gly Ser Ser Ala
   610 615 620
   Ala Ala Ala Ala Ala Gly Gly Asn Gly Pro Gly Ser Gly Gln Gln Gly
   625 630 635 640
   Ala Gly Gln Gln Gly Pro Gly Gln Gln Gly Pro Gly Ala Ser Ala Ala
   645 650 655
   Ala Ala Ala Ala Gly Gly Tyr Gly Pro Gly Ser Gly Gln Gln Gly Pro
   660 665 670
   Gly Gln Gln Gly Pro Gly Gly Gln Gly Pro Tyr Gly Pro Gly Ala Ser
   675 680 685
   Ala Ala Ala Ala Ala Ala Gly Gly Tyr Gly Pro Gly Ser Gly Gln Gly
   690 695 700
   Pro Gly Gln Gln Gly Pro Gly Gly Gln Gly Pro Tyr Gly Pro Gly Ala
   705 710 715 720
   Ser Ala Ala Ala Ala Ala Ala Gly Gly Tyr Gly Pro Gly Ser Gly Gln
   725 730 735
   Gln Gly Pro Gly Gln Gln Gly Pro Gly Gln Gln Gly Pro Gly Gly Gln
   740 745 750
   Gly Pro Tyr Gly Pro Gly Ala Ser Ala Ala Ala Ala Ala Ala Gly Gly
   755 760 765
   Tyr Gly Pro Gly Tyr Gly Gln Gln Gly Pro Gly Gln Gln Gly Pro Gly
   770 775 780
   Gly Gln Gly Pro Tyr Gly Pro Gly Ala Ser Ala Ala Ser Ala Ala Ser
   785 790 795 800
   Gly Gly Tyr Gly Pro Gly Ser Gly Gln Gln Gly Pro Gly Gln Gln Gly
   805 810 815
   Pro Gly Gly Gln Gly Pro Tyr Gly Pro Gly Ala Ser Ala Ala Ala Ala
   820 825 830
   Ala Ala Gly Gly Tyr Gly Pro Gly Ser Gly Gln Gln Gly Pro Gly Gln
   835 840 845
   Gln Gly Pro Gly Gln Gln Gly Pro Gly Gln Gln Gly Pro Gly Gly Gln
   850 855 860
   Gly Pro Tyr Gly Pro Gly Ala Ser Ala Ala Ala Ala Ala Ala Gly Gly
   865 870 875 880
   Tyr Gly Pro Gly Ser Gly Gln Gln Gly Pro Gly Gln Gln Gly Pro Gly
   885 890 895
   Gln Gln Gly Pro Gly Gln Gln Gly Pro Gly Gln Gln Gly Pro Gly Gln
   900 905 910
   Gln Gly Pro Gly Gln Gln Gly Pro Gly Gln Gln Gly Pro Gly Gln Gln
   915 920 925
   Gly Pro Gly Gly Gln Gly Ala Tyr Gly Pro Gly Ala Ser Ala Ala Ala
   930 935 940
   Gly Ala Ala Gly Gly Tyr Gly Pro Gly Ser Gly Gln Gln Gly Pro Gly
   945 950 955 960
   Gln Gln Gly Pro Gly Gln Gln Gly Pro Gly Gln Gln Gly Pro Gly Gln
   965 970 975
   Gln Gly Pro Gly Gln Gln Gly Pro Gly Gln Gln Gly Pro Gly Gln Gln
   980 985 990
   Gly Pro Tyr Gly Pro Gly Ala Ser Ala Ala Ala Ala Ala Ala Gly Gly
   995 1000 1005
   Tyr Gly  Pro Gly Ser Gly Gln  Gln Gly Pro Gly Gln  Gln Gly Pro
       1010                 1015                 1020
   Gly Gln  Gln Gly Pro Gly Gly  Gln Gly Pro Tyr Gly  Pro Gly Ala
       1025                 1030                 1035
   Ala Ser  Ala Ala Val Ser Val  Gly Gly Tyr Gly Pro  Gln Ser Ser
       1040                 1045                 1050
   Ser Val  Pro Val Ala Ser Ala  Val Ala Ser Arg Leu  Ser Ser Pro
       1055                 1060                 1065
   Ala Ala  Ser Ser Arg Val Ser  Ser Ala Val Ser Ser  Leu Val Ser
       1070                 1075                 1080
   Ser Gly  Pro Thr Lys His Ala  Ala Leu Ser Asn Thr  Ile Ser Ser
       1085                 1090                 1095
   Val Val  Ser Gln Val Ser Ala  Ser Asn Pro Gly Leu  Ser Gly Cys
       1100                 1105                 1110
   Asp Val  Leu Val Gln Ala Leu  Leu Glu Val Val Ser  Ala Leu Val
       1115                 1120                 1125
   Ser Ile  Leu
       1130
<210> 6
   <211> 597
   <212> PRT
   <213> Artificial Sequence
<220>
   <223> Met-PRT313: Met-CRY1_L_A5
<400> 6
   Met Gly Pro Gly Gly Gln Gly Pro Tyr Gly Pro Gly Ala Ser Ala Ala
   1               5                   10                  15
   Ala Ala Ala Gly Gly Asn Gly Pro Gly Ser Gly Gln Gln Gly Pro Gly
               20                  25                  30
   Gly Ser Ala Ala Ala Ala Ala Gly Gly Tyr Gly Pro Gly Gly Gln Gly
           35                  40                  45
   Pro Gly Gln Gln Gly Pro Gly Ser Ser Ala Ala Ala Ala Ala Gly Pro
       50                  55                  60
   Gly Gly Tyr Gly Pro Gly Gly Gln Gly Pro Ser Ala Ser Ala Ala Ala
   65                  70                  75                  80
   Ala Ala Gly Pro Gly Ser Gly Gln Gln Gly Pro Gly Ala Ser Ala Ala
                   85                  90                  95
   Ala Ala Ala Gly Gly Tyr Gly Pro Gly Gly Gln Gly Pro Gly Gln Gln
               100                 105                 110
   Gly Pro Gly Ser Ser Ala Ala Ala Ala Ala Gly Gly Tyr Gly Ser Gly
           115                 120                 125
   Pro Gly Gln Gln Gly Pro Tyr Gly Ser Ala Ala Ala Ala Ala Gly Pro
       130                 135                 140
   Gly Ser Gly Gly Tyr Gly Gln Gly Pro Tyr Gly Pro Gly Ala Ser Ala
   145                 150                 155                 160
   Ala Ala Ala Ala Gly Pro Gly Gly Tyr Gly Pro Gly Gly Gln Gly Pro
                   165                 170                 175
   Ser Ala Ser Ala Ala Ala Ala Ala Gly Ser Gly Gln Gln Gly Pro Gly
               180                 185                 190
   Gly Tyr Gly Pro Tyr Ala Ser Ala Ala Ala Ala Ala Gly Gly Tyr Gly
           195                 200                 205
   Ser Gly Pro Gly Gln Gln Gly Pro Tyr Gly Pro Gly Gly Ser Ala Ala
       210                 215                 220
   Ala Ala Ala Gly Ser Gly Gln Gln Gly Pro Gly Gln Gln Gly Pro Tyr
   225                 230                 235                 240
   Ala Ser Ala Ala Ala Ala Ala Gly Pro Gly Gly Gln Gly Pro Tyr Gly
                   245                 250                 255
   Pro Gly Ser Ser Ala Ala Ala Ala Ala Gly Gly Tyr Gly Tyr Gly Pro
               260                 265                 270
   Gly Gly Gln Gly Pro Tyr Gly Pro Gly Ala Ser Ala Ala Ala Ala Ala
           275                 280                 285
   Gly Gly Asn Gly Pro Gly Ser Gly Gly Tyr Gly Pro Gly Gln Gln Gly
       290                 295                 300
   Pro Gly Gly Ser Ala Ala Ala Ala Ala Gly Pro Gly Gly Gln Gly Pro
   305                 310                 315                 320
   Tyr Gly Pro Gly Ala Ser Ala Ala Ala Ala Ala Gly Gly Tyr Gly Pro
                   325                 330                 335
   Gly Gly Gln Gly Pro Gly Gly Tyr Gly Pro Gly Ser Ser Ala Ala Ala
               340                 345                 350
   Ala Ala Gly Pro Gly Gly Gln Gly Pro Tyr Gly Pro Gly Ser Ser Ala
           355                 360                 365
   Ala Ala Ala Ala Gly Gly Tyr Gly Pro Gly Gln Gln Gly Pro Tyr Gly
       370                 375                 380
   Pro Gly Gly Ser Ala Ala Ala Ala Ala Gly Gly Tyr Gln Gln Gly Pro
   385                 390                 395                 400
   Gly Gly Gln Gly Pro Tyr Gly Pro Gly Ala Ser Ala Ala Ala Ala Ala
                   405                 410                 415
   Gly Pro Gly Gly Gln Gly Pro Tyr Gly Pro Gly Ala Ser Ala Ala Ala
               420                 425                 430
   Ala Ala Gly Pro Gly Gly Tyr Gly Pro Gly Gly Gln Gly Pro Ser Ala
           435                 440                 445
   Ser Ala Ala Ala Ala Ala Gly Gly Tyr Gly Ser Gly Pro Gly Gly Tyr
       450                 455                 460
   Gly Pro Tyr Gly Pro Gly Gly Ser Ala Ala Ala Ala Ala Gly Pro Gly
   465                 470                 475                 480
   Ser Gly Gln Gln Gly Gln Gly Pro Tyr Gly Pro Gly Ala Ser Ala Ala
                   485                 490                 495
   Ala Ala Ala Gly Gly Tyr Gly Pro Gly Gln Gln Gly Pro Tyr Gly Pro
               500                 505                 510
   Gly Gly Ser Ala Ala Ala Ala Ala Gly Pro Gly Ser Gly Gly Tyr Gly
           515                 520                 525
   Pro Gly Ala Ser Ala Ala Ala Ala Ala Gly Gly Asn Gly Pro Gly Ser
       530                 535                 540
   Gly Gly Tyr Gly Pro Gly Gln Gln Gly Pro Gly Gly Ser Ala Ala Ala
   545                 550                 555                 560
   Ala Ala Gly Gly Tyr Gln Gln Gly Pro Gly Gly Gln Gly Pro Tyr Gly
                   565                 570                 575
   Pro Gly Ala Ser Ala Ala Ala Ala Ala Gly Pro Gly Ser Gly Gln Gln
                   580                 585                 590
   Gly Pro Gly Ala Ser
               595
<210> 7
   <211> 590
   <212> PRT
   <213> Artificial Sequence
<220>
   <223> Met-PRT399: Met-CRY1_L_A5_giza
<400> 7
   Met Gly Pro Gly Gly Gln Gly Pro Tyr Gly Pro Gly Ala Ser Ala Ala
   1               5                   10                  15
   Ala Ala Ala Gly Gly Asn Gly Pro Gly Ser Gly Gln Gln Gly Pro Gly
               20                  25                  30
   Gly Ser Gly Gly Tyr Gly Pro Gly Gly Gln Gly Pro Gly Gln Gln Gly
           35                  40                  45
   Pro Gly Ser Ser Ala Ala Ala Ala Ala Gly Pro Gly Gly Tyr Gly Pro
       50                  55                  60
   Gly Gly Gln Gly Pro Ser Ala Ser Ala Ala Ala Ala Ala Gly Pro Gly
   65                  70                  75                  80
   Ser Gly Gln Gln Gly Pro Gly Ala Ser Gly Gly Tyr Gly Pro Gly Gly
                   85                  90                  95
   Gln Gly Pro Gly Gln Gln Gly Pro Gly Ser Ser Ala Ala Ala Ala Ala
               100                 105                 110
   Gly Gly Tyr Gly Ser Gly Pro Gly Gln Gln Gly Pro Tyr Gly Ser Ala
           115                 120                 125
   Ala Ala Ala Ala Gly Pro Gly Ser Gly Gly Tyr Gly Gln Gly Pro Tyr
       130                 135                 140
   Gly Pro Gly Ala Ser Gly Pro Gly Gly Tyr Gly Pro Gly Gly Gln Gly
   145                 150                 155                 160
   Pro Ser Ala Ser Ala Ala Ala Ala Ala Gly Ser Gly Gln Gln Gly Pro
                   165                 170                 175
   Gly Gly Tyr Gly Pro Tyr Ala Ser Ala Ala Ala Ala Ala Gly Gly Tyr
               180                 185                 190
   Gly Ser Gly Pro Gly Gln Gln Gly Pro Tyr Gly Pro Gly Gly Ser Gly
           195                 200                 205
   Ser Gly Gln Gln Gly Pro Gly Gln Gln Gly Pro Tyr Ala Ser Ala Ala
       210                 215                 220
   Ala Ala Ala Gly Pro Gly Gly Gln Gly Pro Tyr Gly Pro Gly Ser Ser
   225                 230                 235                 240
   Ala Ala Ala Ala Ala Gly Gly Tyr Gly Tyr Gly Pro Gly Gly Gln Gly
                   245                 250                 255
   Pro Tyr Gly Pro Gly Ala Ser Gly Gly Asn Gly Pro Gly Ser Gly Gly
               260                 265                 270
   Tyr Gly Pro Gly Gln Gln Gly Pro Gly Gly Ser Ala Ala Ala Ala Ala
           275                 280                 285
   Gly Pro Gly Gly Gln Gly Pro Tyr Gly Pro Gly Ala Ser Ala Ala Ala
       290                 295                 300
   Ala Ala Gly Gly Tyr Gly Pro Gly Gly Gln Gly Pro Gly Gly Tyr Gly
   305                 310                 315                 320
   Pro Gly Ser Ser Gly Pro Gly Gly Gln Gly Pro Tyr Gly Pro Gly Ser
                   325                 330                 335
   Ser Ala Ala Ala Ala Ala Gly Gly Tyr Gly Pro Gly Gln Gln Gly Pro
               340                 345                 350
   Tyr Gly Pro Gly Gly Ser Ala Ala Ala Ala Ala Gly Gly Tyr Gln Gln
           355                 360                 365
   Gly Pro Gly Gly Gln Gly Pro Tyr Gly Pro Gly Ala Ser Gly Pro Gly
       370                 375                 380
   Gly Gln Gly Pro Tyr Gly Pro Gly Ala Ser Ala Ala Ala Ala Ala Gly
   385                 390                 395                 400
   Pro Gly Gly Tyr Gly Pro Gly Gly Gln Gly Pro Ser Ala Ser Ala Ala
                   405                 410                 415
   Ala Ala Ala Gly Gly Tyr Gly Ser Gly Pro Gly Gly Tyr Gly Pro Tyr
               420                 425                 430
   Gly Pro Gly Gly Ser Gly Pro Gly Ser Gly Gln Gln Gly Gln Gly Pro
           435                 440                 445
   Tyr Gly Pro Gly Ala Ser Ala Ala Ala Ala Ala Gly Gly Tyr Gly Pro
       450                 455                 460
   Gly Gln Gln Gly Pro Tyr Gly Pro Gly Gly Ser Ala Ala Ala Ala Ala
   465                 470                 475                 480
   Gly Pro Gly Ser Gly Gly Tyr Gly Pro Gly Ala Ser Gly Gly Asn Gly
                   485                 490                 495
   Pro Gly Ser Gly Gly Tyr Gly Pro Gly Gln Gln Gly Pro Gly Gly Ser
               500                 505                 510
   Ala Ala Ala Ala Ala Gly Gly Tyr Gln Gln Gly Pro Gly Gly Gln Gly
           515                 520                 525
   Pro Tyr Gly Pro Gly Ala Ser Ala Ala Ala Ala Ala Gly Gly Tyr Gly
       530                 535                 540
   Ser Gly Pro Gly Gln Gln Gly Pro Tyr Gly Pro Gly Gly Ser Gly Ser
   545                 550                 555                 560
   Gly Gln Gln Gly Pro Gly Gln Gln Gly Pro Tyr Ala Ser Ala Ala Ala
                   565                 570                 575
   Ala Ala Gly Pro Gly Ser Gly Gln Gln Gly Pro Gly Ala Ser
               580                 585                 590
<210> 8
   <211> 597
   <212> PRT
   <213> Artificial Sequence
<220>
   <223> Met-PRT380: Met-CRY1_L_A5_QQQ
<400> 8
   Met Gly Pro Gly Gln Gln Gly Pro Tyr Gly Pro Gly Ala Ser Ala Ala
   1               5                   10                  15
   Ala Ala Ala Gly Gln Asn Gly Pro Gly Ser Gly Gln Gln Gly Pro Gly
               20                  25                  30
   Gln Ser Ala Ala Ala Ala Ala Gly Gln Tyr Gly Pro Gly Gln Gln Gly
           35                  40                  45
   Pro Gly Gln Gln Gly Pro Gly Ser Ser Ala Ala Ala Ala Ala Gly Pro
       50                  55                  60
   Gly Gln Tyr Gly Pro Gly Gln Gln Gly Pro Ser Ala Ser Ala Ala Ala
   65                  70                  75                  80
   Ala Ala Gly Pro Gly Ser Gly Gln Gln Gly Pro Gly Ala Ser Ala Ala
                   85                  90                  95
   Ala Ala Ala Gly Gln Tyr Gly Pro Gly Gln Gln Gly Pro Gly Gln Gln
               100                 105                 110
   Gly Pro Gly Ser Ser Ala Ala Ala Ala Ala Gly Gln Tyr Gly Ser Gly
           115                 120                 125
   Pro Gly Gln Gln Gly Pro Tyr Gly Ser Ala Ala Ala Ala Ala Gly Pro
       130                 135                 140
   Gly Ser Gly Gln Tyr Gly Gln Gly Pro Tyr Gly Pro Gly Ala Ser Ala
   145                 150                 155                 160
   Ala Ala Ala Ala Gly Pro Gly Gln Tyr Gly Pro Gly Gln Gln Gly Pro
                   165                 170                 175
   Ser Ala Ser Ala Ala Ala Ala Ala Gly Ser Gly Gln Gln Gly Pro Gly
               180                 185                 190
   Gln Tyr Gly Pro Tyr Ala Ser Ala Ala Ala Ala Ala Gly Gln Tyr Gly
           195                 200                 205
   Ser Gly Pro Gly Gln Gln Gly Pro Tyr Gly Pro Gly Gln Ser Ala Ala
       210                 215                 220
   Ala Ala Ala Gly Ser Gly Gln Gln Gly Pro Gly Gln Gln Gly Pro Tyr
   225                 230                 235                 240
   Ala Ser Ala Ala Ala Ala Ala Gly Pro Gly Gln Gln Gly Pro Tyr Gly
                   245                 250                 255
   Pro Gly Ser Ser Ala Ala Ala Ala Ala Gly Gln Tyr Gly Tyr Gly Pro
               260                 265                 270
   Gly Gln Gln Gly Pro Tyr Gly Pro Gly Ala Ser Ala Ala Ala Ala Ala
           275                 280                 285
   Gly Gln Asn Gly Pro Gly Ser Gly Gln Tyr Gly Pro Gly Gln Gln Gly
       290                 295                 300
   Pro Gly Gln Ser Ala Ala Ala Ala Ala Gly Pro Gly Gln Gln Gly Pro
   305 310 315 320
   Tyr Gly Pro Gly Ala Ser Ala Ala Ala Ala Ala Gly Gln Tyr Gly Pro
   325 330 335
   Gly Gln Gln Gly Pro Gly Gln Tyr Gly Pro Gly Ser Ser Ala Ala Ala
   340 345 350
   Ala Ala Gly Pro Gly Gln Gln Gly Pro Tyr Gly Pro Gly Ser Ser Ala
   355 360 365
   Ala Ala Ala Ala Gly Gln Tyr Gly Pro Gly Gln Gln Gly Pro Tyr Gly
   370 375 380
   Pro Gly Gln Ser Ala Ala Ala Ala Ala Gly Gln Tyr Gln Gln Gly Pro
   385 390 395 400
   Gly Gln Gln Gly Pro Tyr Gly Pro Gly Ala Ser Ala Ala Ala Ala Ala
   405 410 415
   Gly Pro Gly Gln Gln Gly Pro Tyr Gly Pro Gly Ala Ser Ala Ala Ala
   420 425 430
   Ala Ala Gly Pro Gly Gln Tyr Gly Pro Gly Gln Gln Gly Pro Ser Ala
   435 440 445
   Ser Ala Ala Ala Ala Ala Gly Gln Tyr Gly Ser Gly Pro Gly Gln Tyr
   450 455 460
   Gly Pro Tyr Gly Pro Gly Gln Ser Ala Ala Ala Ala Ala Gly Pro Gly
   465 470 475 480
   Ser Gly Gln Gln Gly Gln Gly Pro Tyr Gly Pro Gly Ala Ser Ala Ala
   485 490 495
   Ala Ala Ala Gly Gln Tyr Gly Pro Gly Gln Gln Gly Pro Tyr Gly Pro
   500 505 510
   Gly Gln Ser Ala Ala Ala Ala Ala Gly Pro Gly Ser Gly Gln Tyr Gly
   515 520 525
   Pro Gly Ala Ser Ala Ala Ala Ala Ala Gly Gln Asn Gly Pro Gly Ser
   530 535 540
   Gly Gln Tyr Gly Pro Gly Gln Gln Gly Pro Gly Gln Ser Ala Ala Ala
   545                 550                 555                 560
   Ala Ala Gly Gln Tyr Gln Gln Gly Pro Gly Gln Gln Gly Pro Tyr Gly
                   565                 570                 575
   Pro Gly Ala Ser Ala Ala Ala Ala Ala Gly Pro Gly Ser Gly Gln Gln
               580                 585                 590
   Gly Pro Gly Ala Ser
           595
<210> 9
   <211> 590
   <212> PRT
   <213> Artificial Sequence
<220>
   <223> Met-PRT410: Met-CRY1_L_A5_giza_QQQ
<400> 9
   Met Gly Pro Gly Gln Gln Gly Pro Tyr Gly Pro Gly Ala Ser Ala Ala
   1               5                   10                  15
   Ala Ala Ala Gly Gln Asn Gly Pro Gly Ser Gly Gln Gln Gly Pro Gly
               20                  25                  30
   Gln Ser Gly Gln Tyr Gly Pro Gly Gln Gln Gly Pro Gly Gln Gln Gly
           35                  40                  45
   Pro Gly Ser Ser Ala Ala Ala Ala Ala Gly Pro Gly Gln Tyr Gly Pro
       50                  55                  60
   Gly Gln Gln Gly Pro Ser Ala Ser Ala Ala Ala Ala Ala Gly Pro Gly
   65                  70                  75                  80
   Ser Gly Gln Gln Gly Pro Gly Ala Ser Gly Gln Tyr Gly Pro Gly Gln
                   85                  90                  95
   Gln Gly Pro Gly Gln Gln Gly Pro Gly Ser Ser Ala Ala Ala Ala Ala
               100                 105                 110
   Gly Gln Tyr Gly Ser Gly Pro Gly Gln Gln Gly Pro Tyr Gly Ser Ala
           115                 120                 125
   Ala Ala Ala Ala Gly Pro Gly Ser Gly Gln Tyr Gly Gln Gly Pro Tyr
       130                 135                 140
   Gly Pro Gly Ala Ser Gly Pro Gly Gln Tyr Gly Pro Gly Gln Gln Gly
   145                 150                 155                 160
   Pro Ser Ala Ser Ala Ala Ala Ala Ala Gly Ser Gly Gln Gln Gly Pro
                   165                 170                 175
   Gly Gln Tyr Gly Pro Tyr Ala Ser Ala Ala Ala Ala Ala Gly Gln Tyr
               180                 185                 190
   Gly Ser Gly Pro Gly Gln Gln Gly Pro Tyr Gly Pro Gly Gln Ser Gly
           195                 200                 205
   Ser Gly Gln Gln Gly Pro Gly Gln Gln Gly Pro Tyr Ala Ser Ala Ala
       210                 215                 220
   Ala Ala Ala Gly Pro Gly Gln Gln Gly Pro Tyr Gly Pro Gly Ser Ser
   225                 230                 235                 240
   Ala Ala Ala Ala Ala Gly Gln Tyr Gly Tyr Gly Pro Gly Gln Gln Gly
                   245                 250                 255
   Pro Tyr Gly Pro Gly Ala Ser Gly Gln Asn Gly Pro Gly Ser Gly Gln
               260                 265                 270
   Tyr Gly Pro Gly Gln Gln Gly Pro Gly Gln Ser Ala Ala Ala Ala Ala
           275                 280                 285
   Gly Pro Gly Gln Gln Gly Pro Tyr Gly Pro Gly Ala Ser Ala Ala Ala
       290                 295                 300
   Ala Ala Gly Gln Tyr Gly Pro Gly Gln Gln Gly Pro Gly Gln Tyr Gly
   305                 310                 315                 320
   Pro Gly Ser Ser Gly Pro Gly Gln Gln Gly Pro Tyr Gly Pro Gly Ser
                   325                 330                 335
   Ser Ala Ala Ala Ala Ala Gly Gln Tyr Gly Pro Gly Gln Gln Gly Pro
               340                 345                 350
   Tyr Gly Pro Gly Gln Ser Ala Ala Ala Ala Ala Gly Gln Tyr Gln Gln
           355                 360                 365
   Gly Pro Gly Gln Gln Gly Pro Tyr Gly Pro Gly Ala Ser Gly Pro Gly
       370                 375                 380
   Gln Gln Gly Pro Tyr Gly Pro Gly Ala Ser Ala Ala Ala Ala Ala Gly
   385                 390                 395                 400
   Pro Gly Gln Tyr Gly Pro Gly Gln Gln Gly Pro Ser Ala Ser Ala Ala
                   405                 410                 415
   Ala Ala Ala Gly Gln Tyr Gly Ser Gly Pro Gly Gln Tyr Gly Pro Tyr
               420                 425                 430
   Gly Pro Gly Gln Ser Gly Pro Gly Ser Gly Gln Gln Gly Gln Gly Pro
           435                 440                 445
   Tyr Gly Pro Gly Ala Ser Ala Ala Ala Ala Ala Gly Gln Tyr Gly Pro
       450                 455                 460
   Gly Gln Gln Gly Pro Tyr Gly Pro Gly Gln Ser Ala Ala Ala Ala Ala
   465                 470                 475                 480
   Gly Pro Gly Ser Gly Gln Tyr Gly Pro Gly Ala Ser Gly Gln Asn Gly
                   485                 490                 495
   Pro Gly Ser Gly Gln Tyr Gly Pro Gly Gln Gln Gly Pro Gly Gln Ser
               500                 505                 510
   Ala Ala Ala Ala Ala Gly Gln Tyr Gln Gln Gly Pro Gly Gln Gln Gly
           515                 520                 525
   Pro Tyr Gly Pro Gly Ala Ser Ala Ala Ala Ala Ala Gly Gln Tyr Gly
       530                 535                 540
   Ser Gly Pro Gly Gln Gln Gly Pro Tyr Gly Pro Gly Gln Ser Gly Ser
   545                 550                 555                 560
   Gly Gln Gln Gly Pro Gly Gln Gln Gly Pro Tyr Ala Ser Ala Ala Ala
                   565                 570                 575
   Ala Ala Gly Pro Gly Ser Gly Gln Gln Gly Pro Gly Ala Ser
               580                 585                 590
<210> 10
   <211> 565
   <212> PRT
   <213> Artificial Sequence
<220>
   <223> Met-PRT468: Met-CRY1_L_A7_giza_QQQ
<400> 10
   Met Gly Pro Gly Gln Gln Gly Pro Tyr Gly Pro Gly Ala Ser Ala Ala
   1               5                   10                  15
   Ala Ala Ala Ala Ala Gly Ser Asn Gly Pro Gly Ser Gly Gln Gln Gly
               20                  25                  30
   Pro Gly Gln Ser Gly Gln Tyr Gly Pro Gly Gln Gln Gly Pro Gly Gln
           35                  40                  45
   Gln Gly Pro Gly Ser Ser Ala Ala Ala Ala Ala Ala Ala Gly Pro Gly
       50                  55                  60
   Gln Tyr Gly Pro Gly Gln Gln Gly Pro Ser Ala Ser Ala Ala Ala Ala
   65                  70                  75                  80
   Ala Ala Ala Gly Pro Gly Ser Gly Gln Gln Gly Pro Gly Ala Ser Gly
                   85                  90                  95
   Gln Tyr Gly Pro Gly Gln Gln Gly Pro Gly Gln Gln Gly Pro Gly Ser
               100                 105                 110
   Ser Ala Ala Ala Ala Ala Ala Ala Gly Ser Tyr Gly Ser Gly Pro Gly
           115                 120                 125
   Gln Gln Gly Pro Tyr Gly Ser Ala Ala Ala Ala Ala Ala Ala Gly Pro
       130                 135                 140
   Gly Ser Gly Gln Tyr Gly Gln Gly Pro Tyr Gly Pro Gly Ala Ser Gly
   145                 150                 155                 160
   Pro Gly Gln Tyr Gly Pro Gly Gln Gln Gly Pro Ser Ala Ser Ala Ala
                   165                 170                 175
   Ala Ala Ala Ala Ala Gly Ser Gly Gln Gln Gly Pro Gly Gln Tyr Gly
               180                 185                 190
   Pro Tyr Ala Ser Ala Ala Ala Ala Ala Ala Ala Gly Ser Tyr Gly Ser
           195                 200                 205
   Gly Pro Gly Gln Gln Gly Pro Tyr Gly Pro Gly Gln Ser Gly Ser Gly
       210                 215                 220
   Gln Gln Gly Pro Gly Gln Gln Gly Pro Tyr Ala Ser Ala Ala Ala Ala
   225                 230                 235                 240
   Ala Ala Ala Gly Pro Gly Gln Gln Gly Pro Tyr Gly Pro Gly Ser Ser
                   245                 250                 255
   Ala Ala Ala Ala Ala Ala Ala Gly Ser Tyr Gly Tyr Gly Pro Gly Gln
               260                 265                 270
   Gln Gly Pro Tyr Gly Pro Gly Ala Ser Gly Gln Asn Gly Pro Gly Ser
               275                 280                 285
   Gly Gln Tyr Gly Pro Gly Gln Gln Gly Pro Gly Pro Ser Ala Ala Ala
       290                 295                 300
   Ala Ala Ala Ala Gly Pro Gly Gln Gln Gly Pro Tyr Gly Pro Gly Ala
   305                 310                 315                 320
   Ser Ala Ala Ala Ala Ala Ala Ala Gly Ser Tyr Gly Pro Gly Gln Gln
                   325                 330                 335
   Gly Pro Gly Gln Tyr Gly Pro Gly Ser Ser Gly Pro Gly Gln Gln Gly
               340                 345                 350
   Pro Tyr Gly Pro Gly Ser Ser Ala Ala Ala Ala Ala Ala Ala Gly Ser
           355                 360                 365
   Tyr Gly Pro Gly Gln Gln Gly Pro Tyr Gly Pro Gly Pro Ser Ala Ala
       370                 375                 380
   Ala Ala Ala Ala Ala Gly Ser Tyr Gln Gln Gly Pro Gly Gln Gln Gly
   385                 390                 395                 400
   Pro Tyr Gly Pro Gly Ala Ser Gly Pro Gly Gln Gln Gly Pro Tyr Gly
                   405                 410                 415
   Pro Gly Ala Ser Ala Ala Ala Ala Ala Ala Ala Gly Pro Gly Gln Tyr
               420                 425                 430
   Gly Pro Gly Gln Gln Gly Pro Ser Ala Ser Ala Ala Ala Ala Ala Ala
           435                 440                 445
   Ala Gly Ser Tyr Gly Ser Gly Pro Gly Gln Tyr Gly Pro Tyr Gly Pro
       450                 455                 460
   Gly Gln Ser Gly Pro Gly Ser Gly Gln Gln Gly Gln Gly Pro Tyr Gly
   465                 470                 475                 480
   Pro Gly Ala Ser Ala Ala Ala Ala Ala Ala Ala Gly Ser Tyr Gly Pro
                   485                 490                 495
   Gly Gln Gln Gly Pro Tyr Gly Pro Gly Pro Ser Ala Ala Ala Ala Ala
               500                 505                 510
   Ala Ala Gly Pro Gly Ser Gly Gln Tyr Gly Pro Gly Ala Ser Gly Gln
           515                 520                 525
   Asn Gly Pro Gly Ser Gly Gln Tyr Gly Pro Gly Gln Gln Gly Pro Gly
       530                 535                 540
   Pro Ser Ala Ala Ala Ala Ala Ala Ala Gly Pro Gly Ser Gly Gln Gln
   545                 550                 555                 560
   Gly Pro Gly Ala Ser
                   565
<210> 11
   <211> 2364
   <212> PRT
   <213> Artificial Sequence
<220>
   <223> Met-PRT799: Met-CRY1_200_A5_giza_QQQ_WHis6
<400> 11
   Met Gly Pro Gly Gln Gln Gly Pro Tyr Gly Pro Gly Ala Ser Ala Ala
   1               5                   10                  15
   Ala Ala Ala Gly Gln Asn Gly Pro Gly Ser Gly Gln Gln Gly Pro Gly
               20                  25                  30
   Gln Ser Gly Gln Tyr Gly Pro Gly Gln Gln Gly Pro Gly Gln Gln Gly
           35                  40                  45
   Pro Gly Ser Ser Ala Ala Ala Ala Ala Gly Pro Gly Gln Tyr Gly Pro
       50                  55                  60
   Gly Gln Gln Gly Pro Ser Ala Ser Ala Ala Ala Ala Ala Gly Pro Gly
   65                  70                  75                  80
   Ser Gly Gln Gln Gly Pro Gly Ala Ser Gly Gln Tyr Gly Pro Gly Gln
                   85                  90                  95
   Gln Gly Pro Gly Gln Gln Gly Pro Gly Ser Ser Ala Ala Ala Ala Ala
               100                 105                 110
   Gly Gln Tyr Gly Ser Gly Pro Gly Gln Gln Gly Pro Tyr Gly Ser Ala
           115                 120                 125
   Ala Ala Ala Ala Gly Pro Gly Ser Gly Gln Tyr Gly Gln Gly Pro Tyr
       130                 135                 140
   Gly Pro Gly Ala Ser Gly Pro Gly Gln Tyr Gly Pro Gly Gln Gln Gly
   145                 150                 155                 160
   Pro Ser Ala Ser Ala Ala Ala Ala Ala Gly Ser Gly Gln Gln Gly Pro
   165 170 175
   Gly Gln Tyr Gly Pro Tyr Ala Ser Ala Ala Ala Ala Ala Gly Gln Tyr
   180 185 190
   Gly Ser Gly Pro Gly Gln Gln Gly Pro Tyr Gly Pro Gly Gln Ser Gly
   195 200 205
   Ser Gly Gln Gln Gly Pro Gly Gln Gln Gly Pro Tyr Ala Ser Ala Ala
   210 215 220
   Ala Ala Ala Gly Pro Gly Gln Gln Gly Pro Tyr Gly Pro Gly Ser Ser
   225 230 235 240
   Ala Ala Ala Ala Ala Gly Gln Tyr Gly Tyr Gly Pro Gly Gln Gln Gly
   245 250 255
   Pro Tyr Gly Pro Gly Ala Ser Gly Gln Asn Gly Pro Gly Ser Gly Gln
   260 265 270
   Tyr Gly Pro Gly Gln Gln Gly Pro Gly Gln Ser Ala Ala Ala Ala Ala
   275 280 285
   Gly Pro Gly Gln Gln Gly Pro Tyr Gly Pro Gly Ala Ser Ala Ala Ala
   290 295 300
   Ala Ala Gly Gln Tyr Gly Pro Gly Gln Gln Gly Pro Gly Gln Tyr Gly
   305 310 315 320
   Pro Gly Ser Ser Gly Pro Gly Gln Gln Gly Pro Tyr Gly Pro Gly Ser
   325 330 335
   Ser Ala Ala Ala Ala Ala Gly Gln Tyr Gly Pro Gly Gln Gln Gly Pro
   340 345 350
   Tyr Gly Pro Gly Gln Ser Ala Ala Ala Ala Ala Gly Gln Tyr Gln Gln
   355 360 365
   Gly Pro Gly Gln Gln Gly Pro Tyr Gly Pro Gly Ala Ser Gly Pro Gly
   370 375 380
   Gln Gln Gly Pro Tyr Gly Pro Gly Ala Ser Ala Ala Ala Ala Ala Gly
   385 390 395 400
   Pro Gly Gln Tyr Gly Pro Gly Gln Gln Gly Pro Ser Ala Ser Ala Ala
   405 410 415
   Ala Ala Ala Gly Gln Tyr Gly Ser Gly Pro Gly Gln Tyr Gly Pro Tyr
   420 425 430
   Gly Pro Gly Gln Ser Gly Pro Gly Ser Gly Gln Gln Gly Gln Gly Pro
   435 440 445
   Tyr Gly Pro Gly Ala Ser Ala Ala Ala Ala Ala Gly Gln Tyr Gly Pro
   450 455 460
   Gly Gln Gln Gly Pro Tyr Gly Pro Gly Gln Ser Ala Ala Ala Ala Ala
   465 470 475 480
   Gly Pro Gly Ser Gly Gln Tyr Gly Pro Gly Ala Ser Gly Gln Asn Gly
   485 490 495
   Pro Gly Ser Gly Gln Tyr Gly Pro Gly Gln Gln Gly Pro Gly Gln Ser
   500 505 510
   Ala Ala Ala Ala Ala Gly Gln Tyr Gln Gln Gly Pro Gly Gln Gln Gly
   515 520 525
   Pro Tyr Gly Pro Gly Ala Ser Ala Ala Ala Ala Ala Gly Gln Tyr Gly
   530 535 540
   Ser Gly Pro Gly Gln Gln Gly Pro Tyr Gly Pro Gly Gln Ser Gly Ser
   545 550 555 560
   Gly Gln Gln Gly Pro Gly Gln Gln Gly Pro Tyr Ala Ser Ala Ala Ala
   565 570 575
   Ala Ala Gly Pro Gly Ser Gly Gln Gln Gly Pro Gly Ala Ser Gly Gln
   580 585 590
   Gln Gly Pro Tyr Gly Pro Gly Ala Ser Ala Ala Ala Ala Ala Gly Gln
   595 600 605
   Asn Gly Pro Gly Ser Gly Gln Gln Gly Pro Gly Gln Ser Gly Gln Tyr
   610 615 620
   Gly Pro Gly Gln Gln Gly Pro Gly Gln Gln Gly Pro Gly Ser Ser Ala
   625 630 635 640
   Ala Ala Ala Ala Gly Pro Gly Gln Tyr Gly Pro Gly Gln Gln Gly Pro
   645 650 655
   Ser Ala Ser Ala Ala Ala Ala Ala Gly Pro Gly Ser Gly Gln Gln Gly
   660 665 670
   Pro Gly Ala Ser Gly Gln Tyr Gly Pro Gly Gln Gln Gly Pro Gly Gln
   675 680 685
   Gln Gly Pro Gly Ser Ser Ala Ala Ala Ala Ala Gly Gln Tyr Gly Ser
   690 695 700
   Gly Pro Gly Gln Gln Gly Pro Tyr Gly Ser Ala Ala Ala Ala Ala Gly
   705 710 715 720
   Pro Gly Ser Gly Gln Tyr Gly Gln Gly Pro Tyr Gly Pro Gly Ala Ser
   725 730 735
   Gly Pro Gly Gln Tyr Gly Pro Gly Gln Gln Gly Pro Ser Ala Ser Ala
   740 745 750
   Ala Ala Ala Ala Gly Ser Gly Gln Gln Gly Pro Gly Gln Tyr Gly Pro
   755 760 765
   Tyr Ala Ser Ala Ala Ala Ala Ala Gly Gln Tyr Gly Ser Gly Pro Gly
   770 775 780
   Gln Gln Gly Pro Tyr Gly Pro Gly Gln Ser Gly Ser Gly Gln Gln Gly
   785 790 795 800
   Pro Gly Gln Gln Gly Pro Tyr Ala Ser Ala Ala Ala Ala Ala Gly Pro
   805 810 815
   Gly Gln Gln Gly Pro Tyr Gly Pro Gly Ser Ser Ala Ala Ala Ala Ala
   820 825 830
   Gly Gln Tyr Gly Tyr Gly Pro Gly Gln Gln Gly Pro Tyr Gly Pro Gly
   835 840 845
   Ala Ser Gly Gln Asn Gly Pro Gly Ser Gly Gln Tyr Gly Pro Gly Gln
   850 855 860
   Gln Gly Pro Gly Gln Ser Ala Ala Ala Ala Ala Gly Pro Gly Gln Gln
   865 870 875 880
   Gly Pro Tyr Gly Pro Gly Ala Ser Ala Ala Ala Ala Ala Gly Gln Tyr
   885 890 895
   Gly Pro Gly Gln Gln Gly Pro Gly Gln Tyr Gly Pro Gly Ser Ser Gly
   900 905 910
   Pro Gly Gln Gln Gly Pro Tyr Gly Pro Gly Ser Ser Ala Ala Ala Ala
   915 920 925
   Ala Gly Gln Tyr Gly Pro Gly Gln Gln Gly Pro Tyr Gly Pro Gly Gln
       930                 935                 940
   Ser Ala Ala Ala Ala Ala Gly Gln Tyr Gln Gln Gly Pro Gly Gln Gln
   945                 950                 955                 960
   Gly Pro Tyr Gly Pro Gly Ala Ser Gly Pro Gly Gln Gln Gly Pro Tyr
                   965                 970                 975
   Gly Pro Gly Ala Ser Ala Ala Ala Ala Ala Gly Pro Gly Gln Tyr Gly
               980                 985                 990
   Pro Gly Gln Gln Gly Pro Ser Ala  Ser Ala Ala Ala Ala  Ala Gly Gln
           995                 1000                1005
   Tyr Gly  Ser Gly Pro Gly Gln  Tyr Gly Pro Tyr Gly  Pro Gly Gln
       1010                 1015                 1020
   Ser Gly  Pro Gly Ser Gly Gln  Gln Gly Gln Gly Pro  Tyr Gly Pro
       1025                 1030                 1035
   Gly Ala  Ser Ala Ala Ala Ala  Ala Gly Gln Tyr Gly  Pro Gly Gln
       1040                 1045                 1050
   Gln Gly  Pro Tyr Gly Pro Gly  Gln Ser Ala Ala Ala  Ala Ala Gly
       1055                 1060                 1065
   Pro Gly  Ser Gly Gln Tyr Gly  Pro Gly Ala Ser Gly  Gln Asn Gly
       1070                 1075                 1080
   Pro Gly  Ser Gly Gln Tyr Gly  Pro Gly Gln Gln Gly  Pro Gly Gln
       1085                 1090                 1095
   Ser Ala  Ala Ala Ala Ala Gly  Gln Tyr Gln Gln Gly  Pro Gly Gln
       1100                 1105                 1110
   Gln Gly  Pro Tyr Gly Pro Gly  Ala Ser Ala Ala Ala  Ala Ala Gly
       1115                 1120                 1125
   Gln Tyr  Gly Ser Gly Pro Gly  Gln Gln Gly Pro Tyr  Gly Pro Gly
       1130                 1135                 1140
   Gln Ser  Gly Ser Gly Gln Gln  Gly Pro Gly Gln Gln  Gly Pro Tyr
       1145                 1150                 1155
   Ala Ser  Ala Ala Ala Ala Ala  Gly Pro Gly Ser Gly  Gln Gln Gly
   1160 1165 1170
   Pro Gly Ala Ser Gly Gln Gln Gly Pro Tyr Gly Pro Gly Ala Ser
   1175 1180 1185
   Ala Ala Ala Ala Ala Gly Gln Asn Gly Pro Gly Ser Gly Gln Gln
   1190 1195 1200
   Gly Pro Gly Gln Ser Gly Gln Tyr Gly Pro Gly Gln Gln Gly Pro
   1205 1210 1215
   Gly Gln Gln Gly Pro Gly Ser Ser Ala Ala Ala Ala Ala Gly Pro
   1220 1225 1230
   Gly Gln Tyr Gly Pro Gly Gln Gln Gly Pro Ser Ala Ser Ala Ala
   1235 1240 1245
   Ala Ala Ala Gly Pro Gly Ser Gly Gln Gln Gly Pro Gly Ala Ser
   1250 1255 1260
   Gly Gln Tyr Gly Pro Gly Gln Gln Gly Pro Gly Gln Gln Gly Pro
   1265 1270 1275
   Gly Ser Ser Ala Ala Ala Ala Ala Gly Gln Tyr Gly Ser Gly Pro
   1280 1285 1290
   Gly Gln Gln Gly Pro Tyr Gly Ser Ala Ala Ala Ala Ala Gly Pro
   1295 1300 1305
   Gly Ser Gly Gln Tyr Gly Gln Gly Pro Tyr Gly Pro Gly Ala Ser
   1310 1315 1320
   Gly Pro Gly Gln Tyr Gly Pro Gly Gln Gln Gly Pro Ser Ala Ser
   1325 1330 1335
   Ala Ala Ala Ala Ala Gly Ser Gly Gln Gln Gly Pro Gly Gln Tyr
   1340 1345 1350
   Gly Pro Tyr Ala Ser Ala Ala Ala Ala Ala Gly Gln Tyr Gly Ser
   1355 1360 1365
   Gly Pro Gly Gln Gln Gly Pro Tyr Gly Pro Gly Gln Ser Gly Ser
   1370 1375 1380
   Gly Gln Gln Gly Pro Gly Gln Gln Gly Pro Tyr Ala Ser Ala Ala
   1385 1390 1395
   Ala Ala Ala Gly Pro Gly Gln Gln Gly Pro Tyr Gly Pro Gly Ser
   1400 1405 1410
   Ser Ala Ala Ala Ala Ala Gly Gln Tyr Gly Tyr Gly Pro Gly Gln
   1415 1420 1425
   Gln Gly Pro Tyr Gly Pro Gly Ala Ser Gly Gln Asn Gly Pro Gly
   1430 1435 1440
   Ser Gly Gln Tyr Gly Pro Gly Gln Gln Gly Pro Gly Gln Ser Ala
   1445 1450 1455
   Ala Ala Ala Ala Gly Pro Gly Gln Gln Gly Pro Tyr Gly Pro Gly
   1460 1465 1470
   Ala Ser Ala Ala Ala Ala Ala Gly Gln Tyr Gly Pro Gly Gln Gln
   1475 1480 1485
   Gly Pro Gly Gln Tyr Gly Pro Gly Ser Ser Gly Pro Gly Gln Gln
   1490 1495 1500
   Gly Pro Tyr Gly Pro Gly Ser Ser Ala Ala Ala Ala Ala Gly Gln
   1505 1510 1515
   Tyr Gly Pro Gly Gln Gln Gly Pro Tyr Gly Pro Gly Gln Ser Ala
   1520 1525 1530
   Ala Ala Ala Ala Gly Gln Tyr Gln Gln Gly Pro Gly Gln Gln Gly
   1535 1540 1545
   Pro Tyr Gly Pro Gly Ala Ser Gly Pro Gly Gln Gln Gly Pro Tyr
   1550 1555 1560
   Gly Pro Gly Ala Ser Ala Ala Ala Ala Ala Gly Pro Gly Gln Tyr
   1565 1570 1575
   Gly Pro Gly Gln Gln Gly Pro Ser Ala Ser Ala Ala Ala Ala Ala
   1580 1585 1590
   Gly Gln Tyr Gly Ser Gly Pro Gly Gln Tyr Gly Pro Tyr Gly Pro
   1595 1600 1605
   Gly Gln Ser Gly Pro Gly Ser Gly Gln Gln Gly Gln Gly Pro Tyr
   1610 1615 1620
   Gly Pro Gly Ala Ser Ala Ala Ala Ala Ala Gly Gln Tyr Gly Pro
   1625 1630 1635
   Gly Gln Gln Gly Pro Tyr Gly Pro Gly Gln Ser Ala Ala Ala Ala
   1640 1645 1650
   Ala Gly Pro Gly Ser Gly Gln Tyr Gly Pro Gly Ala Ser Gly Gln
   1655 1660 1665
   Asn Gly Pro Gly Ser Gly Gln Tyr Gly Pro Gly Gln Gln Gly Pro
   1670 1675 1680
   Gly Gln Ser Ala Ala Ala Ala Ala Gly Gln Tyr Gln Gln Gly Pro
   1685 1690 1695
   Gly Gln Gln Gly Pro Tyr Gly Pro Gly Ala Ser Ala Ala Ala Ala
   1700 1705 1710
   Ala Gly Gln Tyr Gly Ser Gly Pro Gly Gln Gln Gly Pro Tyr Gly
   1715 1720 1725
   Pro Gly Gln Ser Gly Ser Gly Gln Gln Gly Pro Gly Gln Gln Gly
   1730 1735 1740
   Pro Tyr Ala Ser Ala Ala Ala Ala Ala Gly Pro Gly Ser Gly Gln
   1745 1750 1755
   Gln Gly Pro Gly Ala Ser Gly Gln Gln Gly Pro Tyr Gly Pro Gly
   1760 1765 1770
   Ala Ser Ala Ala Ala Ala Ala Gly Gln Asn Gly Pro Gly Ser Gly
   1775 1780 1785
   Gln Gln Gly Pro Gly Gln Ser Gly Gln Tyr Gly Pro Gly Gln Gln
   1790 1795 1800
   Gly Pro Gly Gln Gln Gly Pro Gly Ser Ser Ala Ala Ala Ala Ala
   1805 1810 1815
   Gly Pro Gly Gln Tyr Gly Pro Gly Gln Gln Gly Pro Ser Ala Ser
   1820 1825 1830
   Ala Ala Ala Ala Ala Gly Pro Gly Ser Gly Gln Gln Gly Pro Gly
   1835 1840 1845
   Ala Ser Gly Gln Tyr Gly Pro Gly Gln Gln Gly Pro Gly Gln Gln
   1850 1855 1860
   Gly Pro Gly Ser Ser Ala Ala Ala Ala Ala Gly Gln Tyr Gly Ser
   1865 1870 1875
   Gly Pro  Gly Gln Gln Gly Pro  Tyr Gly Ser Ala Ala  Ala Ala Ala
       1880                 1885                 1890
   Gly Pro  Gly Ser Gly Gln Tyr  Gly Gln Gly Pro Tyr  Gly Pro Gly
       1895                 1900                 1905
   Ala Ser  Gly Pro Gly Gln Tyr  Gly Pro Gly Gln Gln  Gly Pro Ser
       1910                 1915                 1920
   Ala Ser  Ala Ala Ala Ala Ala  Gly Ser Gly Gln Gln  Gly Pro Gly
       1925                 1930                 1935
   Gln Tyr  Gly Pro Tyr Ala Ser  Ala Ala Ala Ala Ala  Gly Gln Tyr
       1940                 1945                 1950
   Gly Ser  Gly Pro Gly Gln Gln  Gly Pro Tyr Gly Pro  Gly Gln Ser
       1955                 1960                 1965
   Gly Ser  Gly Gln Gln Gly Pro  Gly Gln Gln Gly Pro  Tyr Ala Ser
       1970                 1975                 1980
   Ala Ala  Ala Ala Ala Gly Pro  Gly Gln Gln Gly Pro  Tyr Gly Pro
       1985                 1990                 1995
   Gly Ser  Ser Ala Ala Ala Ala  Ala Gly Gln Tyr Gly  Tyr Gly Pro
       2000                 2005                 2010
   Gly Gln  Gln Gly Pro Tyr Gly  Pro Gly Ala Ser Gly  Gln Asn Gly
       2015                 2020                 2025
   Pro Gly  Ser Gly Gln Tyr Gly  Pro Gly Gln Gln Gly  Pro Gly Gln
       2030                 2035                 2040
   Ser Ala  Ala Ala Ala Ala Gly  Pro Gly Gln Gln Gly  Pro Tyr Gly
       2045                 2050                 2055
   Pro Gly  Ala Ser Ala Ala Ala  Ala Ala Gly Gln Tyr  Gly Pro Gly
       2060                 2065                 2070
   Gln Gln  Gly Pro Gly Gln Tyr  Gly Pro Gly Ser Ser  Gly Pro Gly
       2075                 2080                 2085
   Gln Gln  Gly Pro Tyr Gly Pro  Gly Ser Ser Ala Ala  Ala Ala Ala
       2090                 2095                 2100
   Gly Gln  Tyr Gly Pro Gly Gln  Gln Gly Pro Tyr Gly  Pro Gly Gln
   2105 2110 2115
   Ser Ala Ala Ala Ala Ala Gly Gln Tyr Gln Gln Gly Pro Gly Gln
   2120 2125 2130
   Gln Gly Pro Tyr Gly Pro Gly Ala Ser Gly Pro Gly Gln Gln Gly
   2135 2140 2145
   Pro Tyr Gly Pro Gly Ala Ser Ala Ala Ala Ala Ala Gly Pro Gly
   2150 2155 2160
   Gln Tyr Gly Pro Gly Gln Gln Gly Pro Ser Ala Ser Ala Ala Ala
   2165 2170 2175
   Ala Ala Gly Gln Tyr Gly Ser Gly Pro Gly Gln Tyr Gly Pro Tyr
   2180 2185 2190
   Gly Pro Gly Gln Ser Gly Pro Gly Ser Gly Gln Gln Gly Gln Gly
   2195 2200 2205
   Pro Tyr Gly Pro Gly Ala Ser Ala Ala Ala Ala Ala Gly Gln Tyr
   2210 2215 2220
   Gly Pro Gly Gln Gln Gly Pro Tyr Gly Pro Gly Gln Ser Ala Ala
   2225 2230 2235
   Ala Ala Ala Gly Pro Gly Ser Gly Gln Tyr Gly Pro Gly Ala Ser
   2240 2245 2250
   Gly Gln Asn Gly Pro Gly Ser Gly Gln Tyr Gly Pro Gly Gln Gln
   2255 2260 2265
   Gly Pro Gly Gln Ser Ala Ala Ala Ala Ala Gly Gln Tyr Gln Gln
   2270 2275 2280
   Gly Pro Gly Gln Gln Gly Pro Tyr Gly Pro Gly Ala Ser Ala Ala
   2285 2290 2295
   Ala Ala Ala Gly Gln Tyr Gly Ser Gly Pro Gly Gln Gln Gly Pro
   2300 2305 2310
   Tyr Gly Pro Gly Gln Ser Gly Ser Gly Gln Gln Gly Pro Gly Gln
   2315 2320 2325
   Gln Gly Pro Tyr Ala Ser Ala Ala Ala Ala Ala Gly Pro Gly Ser
   2330 2335 2340
   Gly Gln  Gln Gly Ser Ser Val  Asp Lys Leu Ala Ala  Ala Leu Glu
       2345                 2350                 2355
   His His  His His His His
       2360
<210> 12
   <211> 608
   <212> PRT
   <213> Artificial Sequence
<220>
   <223> PRT313
<400> 12
   Met His His His His His His Ser Ser Gly Ser Ser Gly Pro Gly Gly
   1               5                   10                  15
   Gln Gly Pro Tyr Gly Pro Gly Ala Ser Ala Ala Ala Ala Ala Gly Gly
               20                  25                  30
   Asn Gly Pro Gly Ser Gly Gln Gln Gly Pro Gly Gly Ser Ala Ala Ala
           35                  40                  45
   Ala Ala Gly Gly Tyr Gly Pro Gly Gly Gln Gly Pro Gly Gln Gln Gly
       50                  55                  60
   Pro Gly Ser Ser Ala Ala Ala Ala Ala Gly Pro Gly Gly Tyr Gly Pro
   65                  70                  75                  80
   Gly Gly Gln Gly Pro Ser Ala Ser Ala Ala Ala Ala Ala Gly Pro Gly
                   85                  90                  95
   Ser Gly Gln Gln Gly Pro Gly Ala Ser Ala Ala Ala Ala Ala Gly Gly
               100                 105                 110
   Tyr Gly Pro Gly Gly Gln Gly Pro Gly Gln Gln Gly Pro Gly Ser Ser
           115                 120                 125
   Ala Ala Ala Ala Ala Gly Gly Tyr Gly Ser Gly Pro Gly Gln Gln Gly
       130                 135                 140
   Pro Tyr Gly Ser Ala Ala Ala Ala Ala Gly Pro Gly Ser Gly Gly Tyr
   145                 150                 155                 160
   Gly Gln Gly Pro Tyr Gly Pro Gly Ala Ser Ala Ala Ala Ala Ala Gly
                   165                 170                 175
   Pro Gly Gly Tyr Gly Pro Gly Gly Gln Gly Pro Ser Ala Ser Ala Ala
               180                 185                 190
   Ala Ala Ala Gly Ser Gly Gln Gln Gly Pro Gly Gly Tyr Gly Pro Tyr
           195                 200                 205
   Ala Ser Ala Ala Ala Ala Ala Gly Gly Tyr Gly Ser Gly Pro Gly Gln
       210                 215                 220
   Gln Gly Pro Tyr Gly Pro Gly Gly Ser Ala Ala Ala Ala Ala Gly Ser
   225                 230                 235                 240
   Gly Gln Gln Gly Pro Gly Gln Gln Gly Pro Tyr Ala Ser Ala Ala Ala
                   245                 250                 255
   Ala Ala Gly Pro Gly Gly Gln Gly Pro Tyr Gly Pro Gly Ser Ser Ala
               260                 265                 270
   Ala Ala Ala Ala Gly Gly Tyr Gly Tyr Gly Pro Gly Gly Gln Gly Pro
           275                 280                 285
   Tyr Gly Pro Gly Ala Ser Ala Ala Ala Ala Ala Gly Gly Asn Gly Pro
       290                 295                 300
   Gly Ser Gly Gly Tyr Gly Pro Gly Gln Gln Gly Pro Gly Gly Ser Ala
   305                 310                 315                 320
   Ala Ala Ala Ala Gly Pro Gly Gly Gln Gly Pro Tyr Gly Pro Gly Ala
                   325                 330                 335
   Ser Ala Ala Ala Ala Ala Gly Gly Tyr Gly Pro Gly Gly Gln Gly Pro
               340                 345                 350
   Gly Gly Tyr Gly Pro Gly Ser Ser Ala Ala Ala Ala Ala Gly Pro Gly
           355                 360                 365
   Gly Gln Gly Pro Tyr Gly Pro Gly Ser Ser Ala Ala Ala Ala Ala Gly
       370                 375                 380
   Gly Tyr Gly Pro Gly Gln Gln Gly Pro Tyr Gly Pro Gly Gly Ser Ala
   385                 390                 395                 400
   Ala Ala Ala Ala Gly Gly Tyr Gln Gln Gly Pro Gly Gly Gln Gly Pro
                   405                 410                 415
   Tyr Gly Pro Gly Ala Ser Ala Ala Ala Ala Ala Gly Pro Gly Gly Gln
               420                 425                 430
   Gly Pro Tyr Gly Pro Gly Ala Ser Ala Ala Ala Ala Ala Gly Pro Gly
   435 440 445
   Gly Tyr Gly Pro Gly Gly Gln Gly Pro Ser Ala Ser Ala Ala Ala Ala
   450 455 460
   Ala Gly Gly Tyr Gly Ser Gly Pro Gly Gly Tyr Gly Pro Tyr Gly Pro
   465 470 475 480
   Gly Gly Ser Ala Ala Ala Ala Ala Gly Pro Gly Ser Gly Gln Gln Gly
   485 490 495
   Gln Gly Pro Tyr Gly Pro Gly Ala Ser Ala Ala Ala Ala Ala Gly Gly
   500 505 510
   Tyr Gly Pro Gly Gln Gln Gly Pro Tyr Gly Pro Gly Gly Ser Ala Ala
   515 520 525
   Ala Ala Ala Gly Pro Gly Ser Gly Gly Tyr Gly Pro Gly Ala Ser Ala
   530 535 540
   Ala Ala Ala Ala Gly Gly Asn Gly Pro Gly Ser Gly Gly Tyr Gly Pro
   545 550 555 560
   Gly Gln Gln Gly Pro Gly Gly Ser Ala Ala Ala Ala Ala Gly Gly Tyr
   565 570 575
   Gln Gln Gly Pro Gly Gly Gln Gly Pro Tyr Gly Pro Gly Ala Ser Ala
   580 585 590
   Ala Ala Ala Ala Gly Pro Gly Ser Gly Gln Gln Gly Pro Gly Ala Ser
   595 600 605
<210> 13
   <211> 601
   <212> PRT
   <213> Artificial Sequence
<220>
   <223> PRT399
<400> 13
   Met His His His His His His Ser Ser Gly Ser Ser Gly Pro Gly Gly
   1               5                   10                  15
   Gln Gly Pro Tyr Gly Pro Gly Ala Ser Ala Ala Ala Ala Ala Gly Gly
               20                  25                  30
   Asn Gly Pro Gly Ser Gly Gln Gln Gly Pro Gly Gly Ser Gly Gly Tyr
               35                  40                  45
   Gly Pro Gly Gly Gln Gly Pro Gly Gln Gln Gly Pro Gly Ser Ser Ala
       50                  55                  60
   Ala Ala Ala Ala Gly Pro Gly Gly Tyr Gly Pro Gly Gly Gln Gly Pro
   65                  70                  75                  80
   Ser Ala Ser Ala Ala Ala Ala Ala Gly Pro Gly Ser Gly Gln Gln Gly
                   85                  90                  95
   Pro Gly Ala Ser Gly Gly Tyr Gly Pro Gly Gly Gln Gly Pro Gly Gln
               100                 105                 110
   Gln Gly Pro Gly Ser Ser Ala Ala Ala Ala Ala Gly Gly Tyr Gly Ser
           115                 120                 125
   Gly Pro Gly Gln Gln Gly Pro Tyr Gly Ser Ala Ala Ala Ala Ala Gly
       130                 135                 140
   Pro Gly Ser Gly Gly Tyr Gly Gln Gly Pro Tyr Gly Pro Gly Ala Ser
   145                 150                 155                 160
   Gly Pro Gly Gly Tyr Gly Pro Gly Gly Gln Gly Pro Ser Ala Ser Ala
                   165                 170                 175
   Ala Ala Ala Ala Gly Ser Gly Gln Gln Gly Pro Gly Gly Tyr Gly Pro
               180                 185                 190
   Tyr Ala Ser Ala Ala Ala Ala Ala Gly Gly Tyr Gly Ser Gly Pro Gly
           195                 200                 205
   Gln Gln Gly Pro Tyr Gly Pro Gly Gly Ser Gly Ser Gly Gln Gln Gly
       210                 215                 220
   Pro Gly Gln Gln Gly Pro Tyr Ala Ser Ala Ala Ala Ala Ala Gly Pro
   225                 230                 235                 240
   Gly Gly Gln Gly Pro Tyr Gly Pro Gly Ser Ser Ala Ala Ala Ala Ala
                   245                 250                 255
   Gly Gly Tyr Gly Tyr Gly Pro Gly Gly Gln Gly Pro Tyr Gly Pro Gly
               260                 265                 270
   Ala Ser Gly Gly Asn Gly Pro Gly Ser Gly Gly Tyr Gly Pro Gly Gln
           275                 280                 285
   Gln Gly Pro Gly Gly Ser Ala Ala Ala Ala Ala Gly Pro Gly Gly Gln
       290                 295                 300
   Gly Pro Tyr Gly Pro Gly Ala Ser Ala Ala Ala Ala Ala Gly Gly Tyr
   305                 310                 315                 320
   Gly Pro Gly Gly Gln Gly Pro Gly Gly Tyr Gly Pro Gly Ser Ser Gly
                   325                 330                 335
   Pro Gly Gly Gln Gly Pro Tyr Gly Pro Gly Ser Ser Ala Ala Ala Ala
               340                 345                 350
   Ala Gly Gly Tyr Gly Pro Gly Gln Gln Gly Pro Tyr Gly Pro Gly Gly
           355                 360                 365
   Ser Ala Ala Ala Ala Ala Gly Gly Tyr Gln Gln Gly Pro Gly Gly Gln
       370                 375                 380
   Gly Pro Tyr Gly Pro Gly Ala Ser Gly Pro Gly Gly Gln Gly Pro Tyr
   385                 390                 395                 400
   Gly Pro Gly Ala Ser Ala Ala Ala Ala Ala Gly Pro Gly Gly Tyr Gly
                   405                 410                 415
   Pro Gly Gly Gln Gly Pro Ser Ala Ser Ala Ala Ala Ala Ala Gly Gly
               420                 425                 430
   Tyr Gly Ser Gly Pro Gly Gly Tyr Gly Pro Tyr Gly Pro Gly Gly Ser
           435                 440                 445
   Gly Pro Gly Ser Gly Gln Gln Gly Gln Gly Pro Tyr Gly Pro Gly Ala
       450                 455                 460
   Ser Ala Ala Ala Ala Ala Gly Gly Tyr Gly Pro Gly Gln Gln Gly Pro
   465                 470                 475                 480
   Tyr Gly Pro Gly Gly Ser Ala Ala Ala Ala Ala Gly Pro Gly Ser Gly
                   485                 490                 495
   Gly Tyr Gly Pro Gly Ala Ser Gly Gly Asn Gly Pro Gly Ser Gly Gly
               500                 505                 510
   Tyr Gly Pro Gly Gln Gln Gly Pro Gly Gly Ser Ala Ala Ala Ala Ala
           515                 520                 525
   Gly Gly Tyr Gln Gln Gly Pro Gly Gly Gln Gly Pro Tyr Gly Pro Gly
       530                 535                 540
   Ala Ser Ala Ala Ala Ala Ala Gly Gly Tyr Gly Ser Gly Pro Gly Gln
   545                 550                 555                 560
   Gln Gly Pro Tyr Gly Pro Gly Gly Ser Gly Ser Gly Gln Gln Gly Pro
                   565                 570                 575
   Gly Gln Gln Gly Pro Tyr Ala Ser Ala Ala Ala Ala Ala Gly Pro Gly
               580                 585                 590
   Ser Gly Gln Gln Gly Pro Gly Ala Ser
           595                 600
<210> 14
   <211> 608
   <212> PRT
   <213> Artificial Sequence
<220>
   <223> PRT380
<400> 14
   Met His His His His His His Ser Ser Gly Ser Ser Gly Pro Gly Gln
   1               5                   10                  15
   Gln Gly Pro Tyr Gly Pro Gly Ala Ser Ala Ala Ala Ala Ala Gly Gln
               20                  25                  30
   Asn Gly Pro Gly Ser Gly Gln Gln Gly Pro Gly Gln Ser Ala Ala Ala
           35                  40                  45
   Ala Ala Gly Gln Tyr Gly Pro Gly Gln Gln Gly Pro Gly Gln Gln Gly
       50                  55                  60
   Pro Gly Ser Ser Ala Ala Ala Ala Ala Gly Pro Gly Gln Tyr Gly Pro
   65                  70                  75                  80
   Gly Gln Gln Gly Pro Ser Ala Ser Ala Ala Ala Ala Ala Gly Pro Gly
                   85                  90                  95
   Ser Gly Gln Gln Gly Pro Gly Ala Ser Ala Ala Ala Ala Ala Gly Gln
               100                 105                 110
   Tyr Gly Pro Gly Gln Gln Gly Pro Gly Gln Gln Gly Pro Gly Ser Ser
           115                 120                 125
   Ala Ala Ala Ala Ala Gly Gln Tyr Gly Ser Gly Pro Gly Gln Gln Gly
       130                 135                 140
   Pro Tyr Gly Ser Ala Ala Ala Ala Ala Gly Pro Gly Ser Gly Gln Tyr
   145                 150                 155                 160
   Gly Gln Gly Pro Tyr Gly Pro Gly Ala Ser Ala Ala Ala Ala Ala Gly
                   165                 170                 175
   Pro Gly Gln Tyr Gly Pro Gly Gln Gln Gly Pro Ser Ala Ser Ala Ala
               180                 185                 190
   Ala Ala Ala Gly Ser Gly Gln Gln Gly Pro Gly Gln Tyr Gly Pro Tyr
           195                 200                 205
   Ala Ser Ala Ala Ala Ala Ala Gly Gln Tyr Gly Ser Gly Pro Gly Gln
       210                 215                 220
   Gln Gly Pro Tyr Gly Pro Gly Gln Ser Ala Ala Ala Ala Ala Gly Ser
   225                 230                 235                 240
   Gly Gln Gln Gly Pro Gly Gln Gln Gly Pro Tyr Ala Ser Ala Ala Ala
                   245                 250                 255
   Ala Ala Gly Pro Gly Gln Gln Gly Pro Tyr Gly Pro Gly Ser Ser Ala
               260                 265                 270
   Ala Ala Ala Ala Gly Gln Tyr Gly Tyr Gly Pro Gly Gln Gln Gly Pro
           275                 280                 285
   Tyr Gly Pro Gly Ala Ser Ala Ala Ala Ala Ala Gly Gln Asn Gly Pro
       290                 295                 300
   Gly Ser Gly Gln Tyr Gly Pro Gly Gln Gln Gly Pro Gly Gln Ser Ala
   305                 310                 315                 320
   Ala Ala Ala Ala Gly Pro Gly Gln Gln Gly Pro Tyr Gly Pro Gly Ala
                   325                 330                 335
   Ser Ala Ala Ala Ala Ala Gly Gln Tyr Gly Pro Gly Gln Gln Gly Pro
               340                 345                 350
   Gly Gln Tyr Gly Pro Gly Ser Ser Ala Ala Ala Ala Ala Gly Pro Gly
           355                 360                 365
   Gln Gln Gly Pro Tyr Gly Pro Gly Ser Ser Ala Ala Ala Ala Ala Gly
       370                 375                 380
   Gln Tyr Gly Pro Gly Gln Gln Gly Pro Tyr Gly Pro Gly Gln Ser Ala
   385                 390                 395                 400
   Ala Ala Ala Ala Gly Gln Tyr Gln Gln Gly Pro Gly Gln Gln Gly Pro
                   405                 410                 415
   Tyr Gly Pro Gly Ala Ser Ala Ala Ala Ala Ala Gly Pro Gly Gln Gln
               420                 425                 430
   Gly Pro Tyr Gly Pro Gly Ala Ser Ala Ala Ala Ala Ala Gly Pro Gly
           435                 440                 445
   Gln Tyr Gly Pro Gly Gln Gln Gly Pro Ser Ala Ser Ala Ala Ala Ala
       450                 455                 460
   Ala Gly Gln Tyr Gly Ser Gly Pro Gly Gln Tyr Gly Pro Tyr Gly Pro
   465                 470                 475                 480
   Gly Gln Ser Ala Ala Ala Ala Ala Gly Pro Gly Ser Gly Gln Gln Gly
                   485                 490                 495
   Gln Gly Pro Tyr Gly Pro Gly Ala Ser Ala Ala Ala Ala Ala Gly Gln
               500                 505                 510
   Tyr Gly Pro Gly Gln Gln Gly Pro Tyr Gly Pro Gly Gln Ser Ala Ala
           515                 520                 525
   Ala Ala Ala Gly Pro Gly Ser Gly Gln Tyr Gly Pro Gly Ala Ser Ala
       530                 535                 540
   Ala Ala Ala Ala Gly Gln Asn Gly Pro Gly Ser Gly Gln Tyr Gly Pro
   545                 550                 555                 560
   Gly Gln Gln Gly Pro Gly Gln Ser Ala Ala Ala Ala Ala Gly Gln Tyr
                   565                 570                 575
   Gln Gln Gly Pro Gly Gln Gln Gly Pro Tyr Gly Pro Gly Ala Ser Ala
               580                 585                 590
   Ala Ala Ala Ala Gly Pro Gly Ser Gly Gln Gln Gly Pro Gly Ala Ser
           595                 600                 605
<210> 15
   <211> 601
   <212> PRT
   <213> Artificial Sequence
<220>
   <223> PRT410
<400> 15
   Met His His His His His His Ser Ser Gly Ser Ser Gly Pro Gly Gln
   1               5                   10                  15
   Gln Gly Pro Tyr Gly Pro Gly Ala Ser Ala Ala Ala Ala Ala Gly Gln
               20                  25                  30
   Asn Gly Pro Gly Ser Gly Gln Gln Gly Pro Gly Gln Ser Gly Gln Tyr
           35                  40                  45
   Gly Pro Gly Gln Gln Gly Pro Gly Gln Gln Gly Pro Gly Ser Ser Ala
       50                  55                  60
   Ala Ala Ala Ala Gly Pro Gly Gln Tyr Gly Pro Gly Gln Gln Gly Pro
   65                  70                  75                  80
   Ser Ala Ser Ala Ala Ala Ala Ala Gly Pro Gly Ser Gly Gln Gln Gly
                   85                  90                  95
   Pro Gly Ala Ser Gly Gln Tyr Gly Pro Gly Gln Gln Gly Pro Gly Gln
               100                 105                 110
   Gln Gly Pro Gly Ser Ser Ala Ala Ala Ala Ala Gly Gln Tyr Gly Ser
           115                 120                 125
   Gly Pro Gly Gln Gln Gly Pro Tyr Gly Ser Ala Ala Ala Ala Ala Gly
       130                 135                 140
   Pro Gly Ser Gly Gln Tyr Gly Gln Gly Pro Tyr Gly Pro Gly Ala Ser
   145                 150                 155                 160
   Gly Pro Gly Gln Tyr Gly Pro Gly Gln Gln Gly Pro Ser Ala Ser Ala
                   165                 170                 175
   Ala Ala Ala Ala Gly Ser Gly Gln Gln Gly Pro Gly Gln Tyr Gly Pro
               180                 185                 190
   Tyr Ala Ser Ala Ala Ala Ala Ala Gly Gln Tyr Gly Ser Gly Pro Gly
           195                 200                 205
   Gln Gln Gly Pro Tyr Gly Pro Gly Gln Ser Gly Ser Gly Gln Gln Gly
       210                 215                 220
   Pro Gly Gln Gln Gly Pro Tyr Ala Ser Ala Ala Ala Ala Ala Gly Pro
   225                 230                 235                 240
   Gly Gln Gln Gly Pro Tyr Gly Pro Gly Ser Ser Ala Ala Ala Ala Ala
                   245                 250                 255
   Gly Gln Tyr Gly Tyr Gly Pro Gly Gln Gln Gly Pro Tyr Gly Pro Gly
   260 265 270
   Ala Ser Gly Gln Asn Gly Pro Gly Ser Gly Gln Tyr Gly Pro Gly Gln
   275 280 285
   Gln Gly Pro Gly Gln Ser Ala Ala Ala Ala Ala Gly Pro Gly Gln Gln
   290 295 300
   Gly Pro Tyr Gly Pro Gly Ala Ser Ala Ala Ala Ala Ala Gly Gln Tyr
   305 310 315 320
   Gly Pro Gly Gln Gln Gly Pro Gly Gln Tyr Gly Pro Gly Ser Ser Gly
   325 330 335
   Pro Gly Gln Gln Gly Pro Tyr Gly Pro Gly Ser Ser Ala Ala Ala Ala
   340 345 350
   Ala Gly Gln Tyr Gly Pro Gly Gln Gln Gly Pro Tyr Gly Pro Gly Gln
   355 360 365
   Ser Ala Ala Ala Ala Ala Gly Gln Tyr Gln Gln Gly Pro Gly Gln Gln
   370 375 380
   Gly Pro Tyr Gly Pro Gly Ala Ser Gly Pro Gly Gln Gln Gly Pro Tyr
   385 390 395 400
   Gly Pro Gly Ala Ser Ala Ala Ala Ala Ala Gly Pro Gly Gln Tyr Gly
   405 410 415
   Pro Gly Gln Gln Gly Pro Ser Ala Ser Ala Ala Ala Ala Ala Gly Gln
   420 425 430
   Tyr Gly Ser Gly Pro Gly Gln Tyr Gly Pro Tyr Gly Pro Gly Gln Ser
   435 440 445
   Gly Pro Gly Ser Gly Gln Gln Gly Gln Gly Pro Tyr Gly Pro Gly Ala
   450 455 460
   Ser Ala Ala Ala Ala Ala Gly Gln Tyr Gly Pro Gly Gln Gln Gly Pro
   465 470 475 480
   Tyr Gly Pro Gly Gln Ser Ala Ala Ala Ala Ala Gly Pro Gly Ser Gly
   485 490 495
   Gln Tyr Gly Pro Gly Ala Ser Gly Gln Asn Gly Pro Gly Ser Gly Gln
   500 505 510
   Tyr Gly Pro Gly Gln Gln Gly Pro Gly Gln Ser Ala Ala Ala Ala Ala
   515 520 525
   Gly Gln Tyr Gln Gln Gly Pro Gly Gln Gln Gly Pro Tyr Gly Pro Gly
   530 535 540
   Ala Ser Ala Ala Ala Ala Ala Gly Gln Tyr Gly Ser Gly Pro Gly Gln
   545 550 555 560
   Gln Gly Pro Tyr Gly Pro Gly Gln Ser Gly Ser Gly Gln Gln Gly Pro
   565 570 575
   Gly Gln Gln Gly Pro Tyr Ala Ser Ala Ala Ala Ala Ala Gly Pro Gly
   580 585 590
   Ser Gly Gln Gln Gly Pro Gly Ala Ser
   595 600
<210> 16
   <211> 576
   <212> PRT
   <213> Artificial Sequence
<220>
   <223> PRT468
<400> 16
   Met His His His His His His Ser Ser Gly Ser Ser Gly Pro Gly Gln
   1 5 10 15
   Gln Gly Pro Tyr Gly Pro Gly Ala Ser Ala Ala Ala Ala Ala Ala Ala
   20 25 30
   Gly Ser Asn Gly Pro Gly Ser Gly Gln Gln Gly Pro Gly Gln Ser Gly
   35 40 45
   Gln Tyr Gly Pro Gly Gln Gln Gly Pro Gly Gln Gln Gly Pro Gly Ser
   50 55 60
   Ser Ala Ala Ala Ala Ala Ala Ala Gly Pro Gly Gln Tyr Gly Pro Gly
   65 70 75 80
   Gln Gln Gly Pro Ser Ala Ser Ala Ala Ala Ala Ala Ala Ala Gly Pro
   85 90 95
   Gly Ser Gly Gln Gln Gly Pro Gly Ala Ser Gly Gln Tyr Gly Pro Gly
   100 105 110
   Gln Gln Gly Pro Gly Gln Gln Gly Pro Gly Ser Ser Ala Ala Ala Ala
           115                 120                 125
   Ala Ala Ala Gly Ser Tyr Gly Ser Gly Pro Gly Gln Gln Gly Pro Tyr
       130                 135                 140
   Gly Ser Ala Ala Ala Ala Ala Ala Ala Gly Pro Gly Ser Gly Gln Tyr
   145                 150                 155                 160
   Gly Gln Gly Pro Tyr Gly Pro Gly Ala Ser Gly Pro Gly Gln Tyr Gly
                   165                 170                 175
   Pro Gly Gln Gln Gly Pro Ser Ala Ser Ala Ala Ala Ala Ala Ala Ala
               180                 185                 190
   Gly Ser Gly Gln Gln Gly Pro Gly Gln Tyr Gly Pro Tyr Ala Ser Ala
           195                 200                 205
   Ala Ala Ala Ala Ala Ala Gly Ser Tyr Gly Ser Gly Pro Gly Gln Gln
       210                 215                 220
   Gly Pro Tyr Gly Pro Gly Gln Ser Gly Ser Gly Gln Gln Gly Pro Gly
   225                 230                 235                 240
   Gln Gln Gly Pro Tyr Ala Ser Ala Ala Ala Ala Ala Ala Ala Gly Pro
                   245                 250                 255
   Gly Gln Gln Gly Pro Tyr Gly Pro Gly Ser Ser Ala Ala Ala Ala Ala
               260                 265                 270
   Ala Ala Gly Ser Tyr Gly Tyr Gly Pro Gly Gln Gln Gly Pro Tyr Gly
           275                 280                 285
   Pro Gly Ala Ser Gly Gln Asn Gly Pro Gly Ser Gly Gln Tyr Gly Pro
       290                 295                 300
   Gly Gln Gln Gly Pro Gly Pro Ser Ala Ala Ala Ala Ala Ala Ala Gly
   305                 310                 315                 320
   Pro Gly Gln Gln Gly Pro Tyr Gly Pro Gly Ala Ser Ala Ala Ala Ala
                   325                 330                 335
   Ala Ala Ala Gly Ser Tyr Gly Pro Gly Gln Gln Gly Pro Gly Gln Tyr
               340                 345                 350
   Gly Pro Gly Ser Ser Gly Pro Gly Gln Gln Gly Pro Tyr Gly Pro Gly
           355                 360                 365
   Ser Ser Ala Ala Ala Ala Ala Ala Ala Gly Ser Tyr Gly Pro Gly Gln
   370 375 380
   Gln Gly Pro Tyr Gly Pro Gly Pro Ser Ala Ala Ala Ala Ala Ala Ala
   385 390 395 400
   Gly Ser Tyr Gln Gln Gly Pro Gly Gln Gln Gly Pro Tyr Gly Pro Gly
   405 410 415
   Ala Ser Gly Pro Gly Gln Gln Gly Pro Tyr Gly Pro Gly Ala Ser Ala
   420 425 430
   Ala Ala Ala Ala Ala Ala Gly Pro Gly Gln Tyr Gly Pro Gly Gln Gln
   435 440 445
   Gly Pro Ser Ala Ser Ala Ala Ala Ala Ala Ala Ala Gly Ser Tyr Gly
   450 455 460
   Ser Gly Pro Gly Gln Tyr Gly Pro Tyr Gly Pro Gly Gln Ser Gly Pro
   465 470 475 480
   Gly Ser Gly Gln Gln Gly Gln Gly Pro Tyr Gly Pro Gly Ala Ser Ala
   485 490 495
   Ala Ala Ala Ala Ala Ala Gly Ser Tyr Gly Pro Gly Gln Gln Gly Pro
   500 505 510
   Tyr Gly Pro Gly Pro Ser Ala Ala Ala Ala Ala Ala Ala Gly Pro Gly
   515 520 525
   Ser Gly Gln Tyr Gly Pro Gly Ala Ser Gly Gln Asn Gly Pro Gly Ser
   530 535 540
   Gly Gln Tyr Gly Pro Gly Gln Gln Gly Pro Gly Pro Ser Ala Ala Ala
   545 550 555 560
   Ala Ala Ala Ala Gly Pro Gly Ser Gly Gln Gln Gly Pro Gly Ala Ser
   565 570 575
<210> 17
   <211> 2375
   <212> PRT
   <213> Artificial Sequence
<220>
   <223> PRT799
<400> 17
   Met His His His His His His Ser Ser Gly Ser Ser Gly Pro Gly Gln
   1               5                   10                  15
   Gln Gly Pro Tyr Gly Pro Gly Ala Ser Ala Ala Ala Ala Ala Gly Gln
               20                  25                  30
   Asn Gly Pro Gly Ser Gly Gln Gln Gly Pro Gly Gln Ser Gly Gln Tyr
           35                  40                  45
   Gly Pro Gly Gln Gln Gly Pro Gly Gln Gln Gly Pro Gly Ser Ser Ala
       50                  55                  60
   Ala Ala Ala Ala Gly Pro Gly Gln Tyr Gly Pro Gly Gln Gln Gly Pro
   65                  70                  75                  80
   Ser Ala Ser Ala Ala Ala Ala Ala Gly Pro Gly Ser Gly Gln Gln Gly
                   85                  90                  95
   Pro Gly Ala Ser Gly Gln Tyr Gly Pro Gly Gln Gln Gly Pro Gly Gln
               100                 105                 110
   Gln Gly Pro Gly Ser Ser Ala Ala Ala Ala Ala Gly Gln Tyr Gly Ser
           115                 120                 125
   Gly Pro Gly Gln Gln Gly Pro Tyr Gly Ser Ala Ala Ala Ala Ala Gly
       130                 135                 140
   Pro Gly Ser Gly Gln Tyr Gly Gln Gly Pro Tyr Gly Pro Gly Ala Ser
   145                 150                 155                 160
   Gly Pro Gly Gln Tyr Gly Pro Gly Gln Gln Gly Pro Ser Ala Ser Ala
                   165                 170                 175
   Ala Ala Ala Ala Gly Ser Gly Gln Gln Gly Pro Gly Gln Tyr Gly Pro
               180                 185                 190
   Tyr Ala Ser Ala Ala Ala Ala Ala Gly Gln Tyr Gly Ser Gly Pro Gly
           195                 200                 205
   Gln Gln Gly Pro Tyr Gly Pro Gly Gln Ser Gly Ser Gly Gln Gln Gly
       210                 215                 220
   Pro Gly Gln Gln Gly Pro Tyr Ala Ser Ala Ala Ala Ala Ala Gly Pro
   225                 230                 235                 240
   Gly Gln Gln Gly Pro Tyr Gly Pro Gly Ser Ser Ala Ala Ala Ala Ala
                   245                 250                 255
   Gly Gln Tyr Gly Tyr Gly Pro Gly Gln Gln Gly Pro Tyr Gly Pro Gly
   260 265 270
   Ala Ser Gly Gln Asn Gly Pro Gly Ser Gly Gln Tyr Gly Pro Gly Gln
   275 280 285
   Gln Gly Pro Gly Gln Ser Ala Ala Ala Ala Ala Gly Pro Gly Gln Gln
   290 295 300
   Gly Pro Tyr Gly Pro Gly Ala Ser Ala Ala Ala Ala Ala Gly Gln Tyr
   305 310 315 320
   Gly Pro Gly Gln Gln Gly Pro Gly Gln Tyr Gly Pro Gly Ser Ser Gly
   325 330 335
   Pro Gly Gln Gln Gly Pro Tyr Gly Pro Gly Ser Ser Ala Ala Ala Ala
   340 345 350
   Ala Gly Gln Tyr Gly Pro Gly Gln Gln Gly Pro Tyr Gly Pro Gly Gln
   355 360 365
   Ser Ala Ala Ala Ala Ala Gly Gln Tyr Gln Gln Gly Pro Gly Gln Gln
   370 375 380
   Gly Pro Tyr Gly Pro Gly Ala Ser Gly Pro Gly Gln Gln Gly Pro Tyr
   385 390 395 400
   Gly Pro Gly Ala Ser Ala Ala Ala Ala Ala Gly Pro Gly Gln Tyr Gly
   405 410 415
   Pro Gly Gln Gln Gly Pro Ser Ala Ser Ala Ala Ala Ala Ala Gly Gln
   420 425 430
   Tyr Gly Ser Gly Pro Gly Gln Tyr Gly Pro Tyr Gly Pro Gly Gln Ser
   435 440 445
   Gly Pro Gly Ser Gly Gln Gln Gly Gln Gly Pro Tyr Gly Pro Gly Ala
   450 455 460
   Ser Ala Ala Ala Ala Ala Gly Gln Tyr Gly Pro Gly Gln Gln Gly Pro
   465 470 475 480
   Tyr Gly Pro Gly Gln Ser Ala Ala Ala Ala Ala Gly Pro Gly Ser Gly
   485 490 495
   Gln Tyr Gly Pro Gly Ala Ser Gly Gln Asn Gly Pro Gly Ser Gly Gln
   500 505 510
   Tyr Gly Pro Gly Gln Gln Gly Pro Gly Gln Ser Ala Ala Ala Ala Ala
   515 520 525
   Gly Gln Tyr Gln Gln Gly Pro Gly Gln Gln Gly Pro Tyr Gly Pro Gly
   530 535 540
   Ala Ser Ala Ala Ala Ala Ala Gly Gln Tyr Gly Ser Gly Pro Gly Gln
   545 550 555 560
   Gln Gly Pro Tyr Gly Pro Gly Gln Ser Gly Ser Gly Gln Gln Gly Pro
   565 570 575
   Gly Gln Gln Gly Pro Tyr Ala Ser Ala Ala Ala Ala Ala Gly Pro Gly
   580 585 590
   Ser Gly Gln Gln Gly Pro Gly Ala Ser Gly Gln Gln Gly Pro Tyr Gly
   595 600 605
   Pro Gly Ala Ser Ala Ala Ala Ala Ala Gly Gln Asn Gly Pro Gly Ser
   610 615 620
   Gly Gln Gln Gly Pro Gly Gln Ser Gly Gln Tyr Gly Pro Gly Gln Gln
   625 630 635 640
   Gly Pro Gly Gln Gln Gly Pro Gly Ser Ser Ala Ala Ala Ala Ala Gly
   645 650 655
   Pro Gly Gln Tyr Gly Pro Gly Gln Gln Gly Pro Ser Ala Ser Ala Ala
   660 665 670
   Ala Ala Ala Gly Pro Gly Ser Gly Gln Gln Gly Pro Gly Ala Ser Gly
   675 680 685
   Gln Tyr Gly Pro Gly Gln Gln Gly Pro Gly Gln Gln Gly Pro Gly Ser
   690 695 700
   Ser Ala Ala Ala Ala Ala Gly Gln Tyr Gly Ser Gly Pro Gly Gln Gln
   705 710 715 720
   Gly Pro Tyr Gly Ser Ala Ala Ala Ala Ala Gly Pro Gly Ser Gly Gln
   725 730 735
   Tyr Gly Gln Gly Pro Tyr Gly Pro Gly Ala Ser Gly Pro Gly Gln Tyr
   740 745 750
   Gly Pro Gly Gln Gln Gly Pro Ser Ala Ser Ala Ala Ala Ala Ala Gly
           755                 760                 765
   Ser Gly Gln Gln Gly Pro Gly Gln Tyr Gly Pro Tyr Ala Ser Ala Ala
       770                 775                 780
   Ala Ala Ala Gly Gln Tyr Gly Ser Gly Pro Gly Gln Gln Gly Pro Tyr
   785                 790                 795                 800
   Gly Pro Gly Gln Ser Gly Ser Gly Gln Gln Gly Pro Gly Gln Gln Gly
                   805                 810                 815
   Pro Tyr Ala Ser Ala Ala Ala Ala Ala Gly Pro Gly Gln Gln Gly Pro
               820                 825                 830
   Tyr Gly Pro Gly Ser Ser Ala Ala Ala Ala Ala Gly Gln Tyr Gly Tyr
           835                 840                 845
   Gly Pro Gly Gln Gln Gly Pro Tyr Gly Pro Gly Ala Ser Gly Gln Asn
       850                 855                 860
   Gly Pro Gly Ser Gly Gln Tyr Gly Pro Gly Gln Gln Gly Pro Gly Gln
   865                 870                 875                 880
   Ser Ala Ala Ala Ala Ala Gly Pro Gly Gln Gln Gly Pro Tyr Gly Pro
                   885                 890                 895
   Gly Ala Ser Ala Ala Ala Ala Ala Gly Gln Tyr Gly Pro Gly Gln Gln
               900                 905                 910
   Gly Pro Gly Gln Tyr Gly Pro Gly Ser Ser Gly Pro Gly Gln Gln Gly
           915                 920                 925
   Pro Tyr Gly Pro Gly Ser Ser Ala Ala Ala Ala Ala Gly Gln Tyr Gly
       930                 935                 940
   Pro Gly Gln Gln Gly Pro Tyr Gly Pro Gly Gln Ser Ala Ala Ala Ala
   945                 950                 955                 960
   Ala Gly Gln Tyr Gln Gln Gly Pro Gly Gln Gln Gly Pro Tyr Gly Pro
                   965                 970                 975
   Gly Ala Ser Gly Pro Gly Gln Gln Gly Pro Tyr Gly Pro Gly Ala Ser
               980                 985                 990
   Ala Ala Ala Ala Ala Gly Pro Gly  Gln Tyr Gly Pro Gly  Gln Gln Gly
           995                 1000                1005
   Pro Ser Ala Ser Ala Ala Ala Ala Ala Gly Gln Tyr Gly Ser Gly
       1010                1015                1020
   Pro Gly Gln Tyr Gly Pro Tyr Gly Pro Gly Gln Ser Gly Pro Gly
       1025                1030                1035
   Ser Gly Gln Gln Gly Gln Gly Pro Tyr Gly Pro Gly Ala Ser Ala
       1040                1045                1050
   Ala Ala Ala Ala Gly Gln Tyr Gly Pro Gly Gln Gln Gly Pro Tyr
       1055                1060                1065
   Gly Pro Gly Gln Ser Ala Ala Ala Ala Ala Gly Pro Gly Ser Gly
       1070                1075                1080
   Gln Tyr Gly Pro Gly Ala Ser Gly Gln Asn Gly Pro Gly Ser Gly
       1085                1090                1095
   Gln Tyr Gly Pro Gly Gln Gln Gly Pro Gly Gln Ser Ala Ala Ala
       1100                1105                1110
   Ala Ala Gly Gln Tyr Gln Gln Gly Pro Gly Gln Gln Gly Pro Tyr
       1115                1120                1125
   Gly Pro Gly Ala Ser Ala Ala Ala Ala Ala Gly Gln Tyr Gly Ser
       1130                1135                1140
   Gly Pro Gly Gln Gln Gly Pro Tyr Gly Pro Gly Gln Ser Gly Ser
       1145                1150                1155
   Gly Gln Gln Gly Pro Gly Gln Gln Gly Pro Tyr Ala Ser Ala Ala
       1160                1165                1170
   Ala Ala Ala Gly Pro Gly Ser Gly Gln Gln Gly Pro Gly Ala Ser
       1175                1180                1185
   Gly Gln Gln Gly Pro Tyr Gly Pro Gly Ala Ser Ala Ala Ala Ala
       1190                1195                1200
   Ala Gly Gln Asn Gly Pro Gly Ser Gly Gln Gln Gly Pro Gly Gln
       1205                1210                1215
   Ser Gly Gln Tyr Gly Pro Gly Gln Gln Gly Pro Gly Gln Gln Gly
       1220                1225                1230
   Pro Gly Ser Ser Ala Ala Ala Ala Ala Gly Pro Gly Gln Tyr Gly
       1235                1240                1245
   Pro Gly Gln Gln Gly Pro Ser Ala Ser Ala Ala Ala Ala Ala Gly
   1250 1255 1260
   Pro Gly Ser Gly Gln Gln Gly Pro Gly Ala Ser Gly Gln Tyr Gly
   1265 1270 1275
   Pro Gly Gln Gln Gly Pro Gly Gln Gln Gly Pro Gly Ser Ser Ala
   1280 1285 1290
   Ala Ala Ala Ala Gly Gln Tyr Gly Ser Gly Pro Gly Gln Gln Gly
   1295 1300 1305
   Pro Tyr Gly Ser Ala Ala Ala Ala Ala Gly Pro Gly Ser Gly Gln
   1310 1315 1320
   Tyr Gly Gln Gly Pro Tyr Gly Pro Gly Ala Ser Gly Pro Gly Gln
   1325 1330 1335
   Tyr Gly Pro Gly Gln Gln Gly Pro Ser Ala Ser Ala Ala Ala Ala
   1340 1345 1350
   Ala Gly Ser Gly Gln Gln Gly Pro Gly Gln Tyr Gly Pro Tyr Ala
   1355 1360 1365
   Ser Ala Ala Ala Ala Ala Gly Gln Tyr Gly Ser Gly Pro Gly Gln
   1370 1375 1380
   Gln Gly Pro Tyr Gly Pro Gly Gln Ser Gly Ser Gly Gln Gln Gly
   1385 1390 1395
   Pro Gly Gln Gln Gly Pro Tyr Ala Ser Ala Ala Ala Ala Ala Gly
   1400 1405 1410
   Pro Gly Gln Gln Gly Pro Tyr Gly Pro Gly Ser Ser Ala Ala Ala
   1415 1420 1425
   Ala Ala Gly Gln Tyr Gly Tyr Gly Pro Gly Gln Gln Gly Pro Tyr
   1430 1435 1440
   Gly Pro Gly Ala Ser Gly Gln Asn Gly Pro Gly Ser Gly Gln Tyr
   1445 1450 1455
   Gly Pro Gly Gln Gln Gly Pro Gly Gln Ser Ala Ala Ala Ala Ala
   1460 1465 1470
   Gly Pro Gly Gln Gln Gly Pro Tyr Gly Pro Gly Ala Ser Ala Ala
   1475 1480 1485
   Ala Ala Ala Gly Gln Tyr Gly Pro Gly Gln Gln Gly Pro Gly Gln
   1490 1495 1500
   Tyr Gly Pro Gly Ser Ser Gly Pro Gly Gln Gln Gly Pro Tyr Gly
   1505 1510 1515
   Pro Gly Ser Ser Ala Ala Ala Ala Ala Gly Gln Tyr Gly Pro Gly
   1520 1525 1530
   Gln Gln Gly Pro Tyr Gly Pro Gly Gln Ser Ala Ala Ala Ala Ala
   1535 1540 1545
   Gly Gln Tyr Gln Gln Gly Pro Gly Gln Gln Gly Pro Tyr Gly Pro
   1550 1555 1560
   Gly Ala Ser Gly Pro Gly Gln Gln Gly Pro Tyr Gly Pro Gly Ala
   1565 1570 1575
   Ser Ala Ala Ala Ala Ala Gly Pro Gly Gln Tyr Gly Pro Gly Gln
   1580 1585 1590
   Gln Gly Pro Ser Ala Ser Ala Ala Ala Ala Ala Gly Gln Tyr Gly
   1595 1600 1605
   Ser Gly Pro Gly Gln Tyr Gly Pro Tyr Gly Pro Gly Gln Ser Gly
   1610 1615 1620
   Pro Gly Ser Gly Gln Gln Gly Gln Gly Pro Tyr Gly Pro Gly Ala
   1625 1630 1635
   Ser Ala Ala Ala Ala Ala Gly Gln Tyr Gly Pro Gly Gln Gln Gly
   1640 1645 1650
   Pro Tyr Gly Pro Gly Gln Ser Ala Ala Ala Ala Ala Gly Pro Gly
   1655 1660 1665
   Ser Gly Gln Tyr Gly Pro Gly Ala Ser Gly Gln Asn Gly Pro Gly
   1670 1675 1680
   Ser Gly Gln Tyr Gly Pro Gly Gln Gln Gly Pro Gly Gln Ser Ala
   1685 1690 1695
   Ala Ala Ala Ala Gly Gln Tyr Gln Gln Gly Pro Gly Gln Gln Gly
   1700 1705 1710
   Pro Tyr Gly Pro Gly Ala Ser Ala Ala Ala Ala Ala Gly Gln Tyr
   1715 1720 1725
   Gly Ser Gly Pro Gly Gln Gln Gly Pro Tyr Gly Pro Gly Gln Ser
   1730 1735 1740
   Gly Ser Gly Gln Gln Gly Pro Gly Gln Gln Gly Pro Tyr Ala Ser
   1745 1750 1755
   Ala Ala Ala Ala Ala Gly Pro Gly Ser Gly Gln Gln Gly Pro Gly
   1760 1765 1770
   Ala Ser Gly Gln Gln Gly Pro Tyr Gly Pro Gly Ala Ser Ala Ala
   1775 1780 1785
   Ala Ala Ala Gly Gln Asn Gly Pro Gly Ser Gly Gln Gln Gly Pro
   1790 1795 1800
   Gly Gln Ser Gly Gln Tyr Gly Pro Gly Gln Gln Gly Pro Gly Gln
   1805 1810 1815
   Gln Gly Pro Gly Ser Ser Ala Ala Ala Ala Ala Gly Pro Gly Gln
   1820 1825 1830
   Tyr Gly Pro Gly Gln Gln Gly Pro Ser Ala Ser Ala Ala Ala Ala
   1835 1840 1845
   Ala Gly Pro Gly Ser Gly Gln Gln Gly Pro Gly Ala Ser Gly Gln
   1850 1855 1860
   Tyr Gly Pro Gly Gln Gln Gly Pro Gly Gln Gln Gly Pro Gly Ser
   1865 1870 1875
   Ser Ala Ala Ala Ala Ala Gly Gln Tyr Gly Ser Gly Pro Gly Gln
   1880 1885 1890
   Gln Gly Pro Tyr Gly Ser Ala Ala Ala Ala Ala Gly Pro Gly Ser
   1895 1900 1905
   Gly Gln Tyr Gly Gln Gly Pro Tyr Gly Pro Gly Ala Ser Gly Pro
   1910 1915 1920
   Gly Gln Tyr Gly Pro Gly Gln Gln Gly Pro Ser Ala Ser Ala Ala
   1925 1930 1935
   Ala Ala Ala Gly Ser Gly Gln Gln Gly Pro Gly Gln Tyr Gly Pro
   1940 1945 1950
   Tyr Ala  Ser Ala Ala Ala Ala  Ala Gly Gln Tyr Gly  Ser Gly Pro
       1955                 1960                 1965
   Gly Gln  Gln Gly Pro Tyr Gly  Pro Gly Gln Ser Gly  Ser Gly Gln
       1970                 1975                 1980
   Gln Gly  Pro Gly Gln Gln Gly  Pro Tyr Ala Ser Ala  Ala Ala Ala
       1985                 1990                 1995
   Ala Gly  Pro Gly Gln Gln Gly  Pro Tyr Gly Pro Gly  Ser Ser Ala
       2000                 2005                 2010
   Ala Ala  Ala Ala Gly Gln Tyr  Gly Tyr Gly Pro Gly  Gln Gln Gly
       2015                 2020                 2025
   Pro Tyr  Gly Pro Gly Ala Ser  Gly Gln Asn Gly Pro  Gly Ser Gly
       2030                 2035                 2040
   Gln Tyr  Gly Pro Gly Gln Gln  Gly Pro Gly Gln Ser  Ala Ala Ala
       2045                 2050                 2055
   Ala Ala  Gly Pro Gly Gln Gln  Gly Pro Tyr Gly Pro  Gly Ala Ser
       2060                 2065                 2070
   Ala Ala  Ala Ala Ala Gly Gln  Tyr Gly Pro Gly Gln  Gln Gly Pro
       2075                 2080                 2085
   Gly Gln  Tyr Gly Pro Gly Ser  Ser Gly Pro Gly Gln  Gln Gly Pro
       2090                 2095                 2100
   Tyr Gly  Pro Gly Ser Ser Ala  Ala Ala Ala Ala Gly  Gln Tyr Gly
       2105                 2110                 2115
   Pro Gly  Gln Gln Gly Pro Tyr  Gly Pro Gly Gln Ser  Ala Ala Ala
       2120                 2125                 2130
   Ala Ala  Gly Gln Tyr Gln Gln  Gly Pro Gly Gln Gln  Gly Pro Tyr
       2135                 2140                 2145
   Gly Pro  Gly Ala Ser Gly Pro  Gly Gln Gln Gly Pro  Tyr Gly Pro
       2150                 2155                 2160
   Gly Ala  Ser Ala Ala Ala Ala  Ala Gly Pro Gly Gln  Tyr Gly Pro
       2165                 2170                 2175
   Gly Gln  Gln Gly Pro Ser Ala  Ser Ala Ala Ala Ala  Ala Gly Gln
       2180                 2185                 2190
   Tyr Gly Ser Gly Pro Gly Gln Tyr Gly Pro Tyr Gly Pro Gly Gln
   2195 2200 2205
   Ser Gly Pro Gly Ser Gly Gln Gln Gly Gln Gly Pro Tyr Gly Pro
   2210 2215 2220
   Gly Ala Ser Ala Ala Ala Ala Ala Gly Gln Tyr Gly Pro Gly Gln
   2225 2230 2235
   Gln Gly Pro Tyr Gly Pro Gly Gln Ser Ala Ala Ala Ala Ala Gly
   2240 2245 2250
   Pro Gly Ser Gly Gln Tyr Gly Pro Gly Ala Ser Gly Gln Asn Gly
   2255 2260 2265
   Pro Gly Ser Gly Gln Tyr Gly Pro Gly Gln Gln Gly Pro Gly Gln
   2270 2275 2280
   Ser Ala Ala Ala Ala Ala Gly Gln Tyr Gln Gln Gly Pro Gly Gln
   2285 2290 2295
   Gln Gly Pro Tyr Gly Pro Gly Ala Ser Ala Ala Ala Ala Ala Gly
   2300 2305 2310
   Gln Tyr Gly Ser Gly Pro Gly Gln Gln Gly Pro Tyr Gly Pro Gly
   2315 2320 2325
   Gln Ser Gly Ser Gly Gln Gln Gly Pro Gly Gln Gln Gly Pro Tyr
   2330 2335 2340
   Ala Ser Ala Ala Ala Ala Ala Gly Pro Gly Ser Gly Gln Gln Gly
   2345 2350 2355
   Ser Ser Val Asp Lys Leu Ala Ala Ala Leu Glu His His His His
   2360 2365 2370
   His His
   2375
<210> 18
   <211> 542
   <212> PRT
   <213> Artificial Sequence
<220>
   <223> ADF3Kai_noNR with His Tag
<400> 18
   Met His His His His His His His His His His Ser Ser Gly Ser Ser
   1               5                   10                  15
   Leu Glu Val Leu Phe Gln Gly Pro Ala Arg Ala Gly Ser Gly Gln Gln
               20                  25                  30
   Gly Pro Gly Gln Gln Gly Pro Gly Gln Gln Gly Pro Gly Gln Gln Gly
           35                  40                  45
   Pro Tyr Gly Pro Gly Ala Ser Ala Ala Ala Ala Ala Ala Gly Gly Tyr
       50                  55                  60
   Gly Pro Gly Ser Gly Gln Gln Gly Pro Ser Gln Gln Gly Pro Gly Gln
   65                  70                  75                  80
   Gln Gly Pro Gly Gly Gln Gly Pro Tyr Gly Pro Gly Ala Ser Ala Ala
                   85                  90                  95
   Ala Ala Ala Ala Gly Gly Tyr Gly Pro Gly Ser Gly Gln Gln Gly Pro
               100                 105                 110
   Gly Gly Gln Gly Pro Tyr Gly Pro Gly Ser Ser Ala Ala Ala Ala Ala
           115                 120                 125
   Ala Gly Gly Asn Gly Pro Gly Ser Gly Gln Gln Gly Ala Gly Gln Gln
       130                 135                 140
   Gly Pro Gly Gln Gln Gly Pro Gly Ala Ser Ala Ala Ala Ala Ala Ala
   145                 150                 155                 160
   Gly Gly Tyr Gly Pro Gly Ser Gly Gln Gln Gly Pro Gly Gln Gln Gly
                   165                 170                 175
   Pro Gly Gly Gln Gly Pro Tyr Gly Pro Gly Ala Ser Ala Ala Ala Ala
               180                 185                 190
   Ala Ala Gly Gly Tyr Gly Pro Gly Ser Gly Gln Gly Pro Gly Gln Gln
           195                 200                 205
   Gly Pro Gly Gly Gln Gly Pro Tyr Gly Pro Gly Ala Ser Ala Ala Ala
       210                 215                 220
   Ala Ala Ala Gly Gly Tyr Gly Pro Gly Ser Gly Gln Gln Gly Pro Gly
   225                 230                 235                 240
   Gln Gln Gly Pro Gly Gln Gln Gly Pro Gly Gly Gln Gly Pro Tyr Gly
                   245                 250                 255
   Pro Gly Ala Ser Ala Ala Ala Ala Ala Ala Gly Gly Tyr Gly Pro Gly
               260                 265                 270
   Tyr Gly Gln Gln Gly Pro Gly Gln Gln Gly Pro Gly Gly Gln Gly Pro
           275                 280                 285
   Tyr Gly Pro Gly Ala Ser Ala Ala Ser Ala Ala Ser Gly Gly Tyr Gly
       290                 295                 300
   Pro Gly Ser Gly Gln Gln Gly Pro Gly Gln Gln Gly Pro Gly Gly Gln
   305                 310                 315                 320
   Gly Pro Tyr Gly Pro Gly Ala Ser Ala Ala Ala Ala Ala Ala Gly Gly
                   325                 330                 335
   Tyr Gly Pro Gly Ser Gly Gln Gln Gly Pro Gly Gln Gln Gly Pro Gly
               340                 345                 350
   Gln Gln Gly Pro Gly Gln Gln Gly Pro Gly Gly Gln Gly Pro Tyr Gly
           355                 360                 365
   Pro Gly Ala Ser Ala Ala Ala Ala Ala Ala Gly Gly Tyr Gly Pro Gly
       370                 375                 380
   Ser Gly Gln Gln Gly Pro Gly Gln Gln Gly Pro Gly Gln Gln Gly Pro
   385                 390                 395                 400
   Gly Gln Gln Gly Pro Gly Gln Gln Gly Pro Gly Gln Gln Gly Pro Gly
                   405                 410                 415
   Gln Gln Gly Pro Gly Gln Gln Gly Pro Gly Gln Gln Gly Pro Gly Gly
               420                 425                 430
   Gln Gly Ala Tyr Gly Pro Gly Ala Ser Ala Ala Ala Gly Ala Ala Gly
           435                 440                 445
   Gly Tyr Gly Pro Gly Ser Gly Gln Gln Gly Pro Gly Gln Gln Gly Pro
       450                 455                 460
   Gly Gln Gln Gly Pro Gly Gln Gln Gly Pro Gly Gln Gln Gly Pro Gly
   465                 470                 475                 480
   Gln Gln Gly Pro Gly Gln Gln Gly Pro Gly Gln Gln Gly Pro Tyr Gly
                   485                 490                 495
   Pro Gly Ala Ser Ala Ala Ala Ala Ala Ala Gly Gly Tyr Gly Pro Gly
   500 505 510
   Ser Gly Gln Gln Gly Pro Gly Gln Gln Gly Pro Gly Gln Gln Gly Pro
   515 520 525
   Gly Gly Gln Gly Pro Tyr Gly Pro Gly Ala Ala Ser Ala Ala
   530 535 540
<210> 19
   <211> 519
   <212> PRT
   <213> Artificial Sequence
<220>
   <223> ADF3Kai_noNR without His Tag
<400> 19
   Met Ala Arg Ala Gly Ser Gly Gln Gln Gly Pro Gly Gln Gln Gly Pro
   1               5                   10                  15
   Gly Gln Gln Gly Pro Gly Gln Gln Gly Pro Tyr Gly Pro Gly Ala Ser
               20                  25                  30
   Ala Ala Ala Ala Ala Ala Gly Gly Tyr Gly Pro Gly Ser Gly Gln Gln
           35                  40                  45
   Gly Pro Ser Gln Gln Gly Pro Gly Gln Gln Gly Pro Gly Gly Gln Gly
       50                  55                  60
   Pro Tyr Gly Pro Gly Ala Ser Ala Ala Ala Ala Ala Ala Gly Gly Tyr
   65                  70                  75                  80
   Gly Pro Gly Ser Gly Gln Gln Gly Pro Gly Gly Gln Gly Pro Tyr Gly
                   85                  90                  95
   Pro Gly Ser Ser Ala Ala Ala Ala Ala Ala Gly Gly Asn Gly Pro Gly
               100                 105                 110
   Ser Gly Gln Gln Gly Ala Gly Gln Gln Gly Pro Gly Gln Gln Gly Pro
           115                 120                 125
   Gly Ala Ser Ala Ala Ala Ala Ala Ala Gly Gly Tyr Gly Pro Gly Ser
       130                 135                 140
   Gly Gln Gln Gly Pro Gly Gln Gln Gly Pro Gly Gly Gln Gly Pro Tyr
   145                 150                 155                 160
   Gly Pro Gly Ala Ser Ala Ala Ala Ala Ala Ala Gly Gly Tyr Gly Pro
                   165                 170                 175
   Gly Ser Gly Gln Gly Pro Gly Gln Gln Gly Pro Gly Gly Gln Gly Pro
               180                 185                 190
   Tyr Gly Pro Gly Ala Ser Ala Ala Ala Ala Ala Ala Gly Gly Tyr Gly
           195                 200                 205
   Pro Gly Ser Gly Gln Gln Gly Pro Gly Gln Gln Gly Pro Gly Gln Gln
       210                 215                 220
   Gly Pro Gly Gly Gln Gly Pro Tyr Gly Pro Gly Ala Ser Ala Ala Ala
   225                 230                 235                 240
   Ala Ala Ala Gly Gly Tyr Gly Pro Gly Tyr Gly Gln Gln Gly Pro Gly
                   245                 250                 255
   Gln Gln Gly Pro Gly Gly Gln Gly Pro Tyr Gly Pro Gly Ala Ser Ala
               260                 265                 270
   Ala Ser Ala Ala Ser Gly Gly Tyr Gly Pro Gly Ser Gly Gln Gln Gly
           275                 280                 285
   Pro Gly Gln Gln Gly Pro Gly Gly Gln Gly Pro Tyr Gly Pro Gly Ala
       290                 295                 300
   Ser Ala Ala Ala Ala Ala Ala Gly Gly Tyr Gly Pro Gly Ser Gly Gln
   305                 310                 315                 320
   Gln Gly Pro Gly Gln Gln Gly Pro Gly Gln Gln Gly Pro Gly Gln Gln
                   325                 330                 335
   Gly Pro Gly Gly Gln Gly Pro Tyr Gly Pro Gly Ala Ser Ala Ala Ala
               340                 345                 350
   Ala Ala Ala Gly Gly Tyr Gly Pro Gly Ser Gly Gln Gln Gly Pro Gly
           355                 360                 365
   Gln Gln Gly Pro Gly Gln Gln Gly Pro Gly Gln Gln Gly Pro Gly Gln
       370                 375                 380
   Gln Gly Pro Gly Gln Gln Gly Pro Gly Gln Gln Gly Pro Gly Gln Gln
   385                 390                 395                 400
   Gly Pro Gly Gln Gln Gly Pro Gly Gly Gln Gly Ala Tyr Gly Pro Gly
                   405                 410                 415
   Ala Ser Ala Ala Ala Gly Ala Ala Gly Gly Tyr Gly Pro Gly Ser Gly
               420                 425                 430
   Gln Gln Gly Pro Gly Gln Gln Gly Pro Gly Gln Gln Gly Pro Gly Gln
           435                 440                 445
   Gln Gly Pro Gly Gln Gln Gly Pro Gly Gln Gln Gly Pro Gly Gln Gln
       450                 455                 460
   Gly Pro Gly Gln Gln Gly Pro Tyr Gly Pro Gly Ala Ser Ala Ala Ala
   465                 470                 475                 480
   Ala Ala Ala Gly Gly Tyr Gly Pro Gly Ser Gly Gln Gln Gly Pro Gly
                   485                 490                 495
   Gln Gln Gly Pro Gly Gln Gln Gly Pro Gly Gly Gln Gly Pro Tyr Gly
               500                 505                 510
   Pro Gly Ala Ala Ser Ala Ala
           515
<210> 20
   <211> 24
   <212> PRT
   <213> Artificial Sequence
<220>
   <223> His tag and start codon
<400> 20
   Met His His His His His His His His His His Ser Ser Gly Ser Ser
   1               5                   10                  15
   Leu Glu Val Leu Phe Gln Gly Pro
               20
<210> 21
   <211> 12
   <212> PRT
   <213> Artificial Sequence
<220>
   <223> HisTag
<400> 21
   Met His His His His His His Ser Ser Gly Ser Ser
   1               5                   10